# EUROPEAN PATENT SPECIFICATION

(11) **EP 4 492 166 B1**
(45) Date of publication and mention of the grant of the patent: **30.09.2026**
(21) Application number: 23802665.2
(22) Date of filing: 26.04.2023
(51) Int. Cl.: H04L 12/28

(54) **SCENARIO SETTING METHOD AND ELECTRONIC DEVICE**
SZENARIOEINSTELLVERFAHREN UND ELEKTRONISCHE VORRICHTUNG
PROCÉDÉ D'ÉTABLISSEMENT DE SCÉNARIO ET DISPOSITIF ÉLECTRONIQUE

(30) Priority: 12.05.2022 CN 202210514774
(43) Date of publication of application: 15.01.2025
(73) Proprietor: Huawei Technologies Co., Ltd., Shenzhen, Guangdong 518129 (CN)
(72) Inventor: WANG, Zongwei, Shenzhen, Guangdong 518129 (CN); LI, Qiang, Shenzhen, Guangdong 518129 (CN); WANG, Sijia, Shenzhen, Guangdong 518129 (CN)
(74) Representative: Goddar, Heinz J.
(86) International application number: PCT/CN2023/090980
(87) International publication number: WO 2023/216892

(56) References cited:
- WO-A1-2020/155014
- CN-A- 111 475 076
- CN-A- 111 650 840
- CN-A- 113 341 754
- CN-A- 114 217 532
- US-A1- 2013 067 552
- US-A1- 2015 113 667
- US-A1- 2021 051 193
- US-A1- 2022 052 866

## Description

### TECHNICAL FIELD

Embodiments of this application relate to the field of terminal technologies, and in particular, to a scenario settings method and an electronic device.

### BACKGROUND

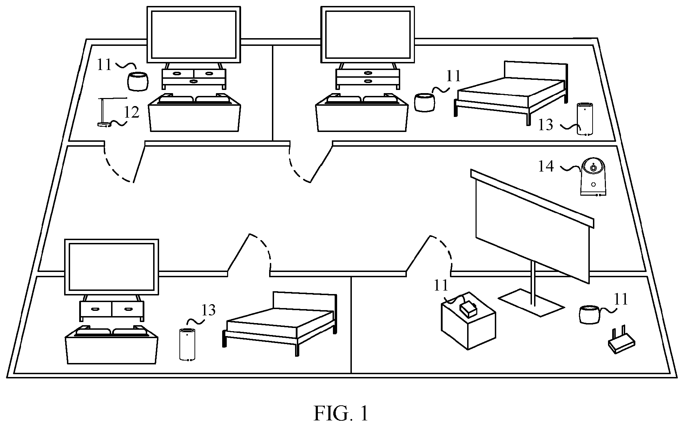

With development of terminal technologies, a user owns an increasing quantity of electronic devices. In a home scenario shown in FIG. 1, various devices (such as audio and video devices 11, a lighting system device 12, environment control devices 13, and a security system device 14) at home are connected together by using an Internet of Things technology to form a smart home system, to implement centralized control of the devices, and provide a user with a plurality of functions such as household appliance control, lighting control, and anti-theft alarm.

Usually, for ease of operation, the user creates a control scenario including a plurality of common devices, to implement scenario-based automatic control of the plurality of devices. For example, a home scenario is set, where the scenario includes turning on a plurality of devices such as a living room light, an air conditioner, and a sound box at a preset time point, and turn-on parameters of the devices. In this way, the user does not need to turn on the devices one by one when arriving at home.

However, in a scenario setting process, the user needs to manually add a plurality of devices and trigger conditions of the plurality of devices in a scenario based on device triggering logic. As a result, in the scenario setting process, user operations are complex, the user needs to have strong logical ability, difficulty is large, and user experience is affected.

US 2021/051193 A1 discloses a server for providing media files for download by a user with an operating system in which the user is created, a media table stored in a memory, in which at least a first media ID is assigned to a first media file and a second media ID is assigned to a second media file, an identification table stored in a memory, in which an identifier that can be assigned to an identification carrier is stored and assigned to the user, and an assignment table stored in a memory, wherein the first media ID and/or the second media ID can be assigned, in the allocation table, to the identifier and the first media ID is not assigned to the identifier, with a program routine provided on the server, with which the user changes the allocation table and assigns the first media ID to the identifier in the allocation table.

### SUMMARY

To resolve the foregoing technical problem, embodiments of this application provide a scenario setting method and an electronic device. According to the technical solutions provided in embodiments of this application, in an electronic device control process, a real-time scenario is automatically generated in response to an operation of a user, thereby reducing a scenario setting difficulty and improving user experience. The invention is defined by the independent claims. Further embodiments are disclosed in the dependent claims. In the following description, any embodiments which are not covered by the claims shall be considered as examples helpful for understanding the invention.

To achieve the foregoing technical objective, embodiments of this application provide the following technical solutions.

According to a first aspect, a scenario setting method is provided, and is applied to a control device. The method includes: displaying a first interface, where the first interface includes a trigger area, and a first identifier displayed within the trigger area and/or a second identifier displayed outside the trigger area, the first identifier indicates that a first device corresponding to the first identifier executes a first intention corresponding to the first device, and the second identifier indicates that a second device corresponding to the second identifier does not execute a second intention corresponding to the second device; receiving a first operation of a user; and generating a first scenario in response to the first operation, where the first scenario includes indicating the first device to execute the first intention, and indicating the second device to cancel execution of the second intention.

In some embodiments, an identifier in the trigger area indicates a device that has executed a user intention in current space, and an identifier outside the trigger area indicates a device that does not execute a user intention in the current space. Optionally, the current space may be a room or whole house space.

In this way, the user can set a smart home device scenario by using a simple operation. In a scenario setting process, the user can intuitively view or control an electronic device status on the control device and set a scenario based on the electronic device status. In this way, a requirement of scenario setting on a logic capability of the user is reduced, a scenario setting difficulty is effectively reduced, and user experience is improved.

According to the first aspect, the method further includes: in response to a second operation performed by the user on the second identifier, controlling the second identifier to move into the trigger area for display, and indicating the second device corresponding to the second identifier to execute the second intention corresponding to the second device.

In some embodiments, there is one or more first identifiers or second identifiers. In addition, there may also be one or more identifiers in the first identifier or the second identifier that is operated by the user.

In some embodiments, the second operation may be a dragging operation. After detecting an operation of dragging some or all of the identifiers in the second identifier into the trigger area by the user, the control device may indicate the second device corresponding to the dragged second identifier to execute the corresponding second intention.

For example, the first interface is a bedroom device control interface, and the control device displays a ceiling light icon outside the trigger area. The control device detects a second operation of controlling, by the user, the ceiling light icon to move into the trigger area, and may send a turn-on indication to a ceiling light corresponding to the ceiling light icon, or send the turn-on indication to the ceiling light by using a server, to indicate the ceiling light to turn on (that is, execute the second intention). Then, after determining that the ceiling light is turned on, the control device may display the ceiling light icon in the trigger area, to prompt the user that the ceiling light is turned on (that is, the second device corresponding to the dragged second identifier has executed the corresponding second intention).

According to the first aspect or any one of the foregoing implementations of the first aspect, the method further includes: in response to a third operation performed by the user on the first identifier, controlling the first identifier to move to the outside of the trigger area for display, and indicating the first device corresponding to the first identifier to cancel execution of the first intention corresponding to the first device.

In some embodiments, the third operation may be a dragging operation. After detecting an operation of dragging, by the user, some or all of the identifiers in the first identifier to the outside of the trigger area, the control device may indicate the first device corresponding to the first identifier that is dragged to the outside to cancel execution of the corresponding first intention.

For example, the first interface is a bedroom device control interface, and the control device displays a ceiling light icon (namely, the first identifier) in the trigger area. The control device detects a third operation of controlling, by the user, the ceiling light icon to move to the outside of the trigger area, and may send a turn-off indication to a ceiling light corresponding to the ceiling light icon, or send the turn-off indication to the ceiling light by using the server, to indicate the ceiling light to turn off (that is, cancel execution of the first intention). Then, after determining that the ceiling light is turned off, the control device may display the ceiling light icon outside the trigger area, to prompt the user that the ceiling light is turned off (that is, the first device corresponding to the dragged first identifier has canceled execution of the corresponding first intention).

In this way, the user can view an electronic device status in current space, and it is convenient for the user to control a corresponding electronic device, thereby reducing an operation difficulty of the user.

According to the first aspect or any one of the foregoing implementations of the first aspect, the generating a first scenario in response to the first operation includes: displaying a second interface in response to the first operation; receiving a scenario editing operation of the user in the second interface; and generating the first scenario in response to a fourth operation of the user.

According to the first aspect or any one of the foregoing implementations of the first aspect, the scenario editing operation includes one or more of the following: setting a scenario effective time, setting that the first device in the scenario cancels execution of the first intention, and setting that the second device in the scenario executes the second intention.

In this way, the control device edits a corresponding scenario based on a scenario editing operation of the user, so that a finally generated scenario meets a user requirement, and user experience is improved.

According to the first aspect or any one of the foregoing implementations of the first aspect, the first device and the second device are devices in a same room, and the method further includes: displaying a third interface in response to a fifth operation performed by the user on the first identifier; receiving a sixth operation of the user in the third interface, where the sixth operation is used to adjust a parameter of a device corresponding to the first identifier; and sending, based on an adjustment result of the parameter, a parameter adjustment indication to the device corresponding to the first identifier.

In some embodiments, the fifth operation is a touching and holding operation. The first interface displayed by the control device is a room device control interface, and the first device and the second device are devices in a same room. After detecting an operation of touching and holding, by the user, the first identifier displayed in the trigger area, the control device may determine that the user needs to adjust the parameter of the first device corresponding to the first identifier. In this case, the control device may display a parameter adjustment interface (namely, the third interface), to receive the parameter adjustment operation of the user, and in response to the parameter adjustment operation, indicate the corresponding first device to perform parameter adjustment.

In this way, in an electronic device control process, a parameter of an electronic device is adjusted in real time, to meet a use requirement of the user.

According to the first aspect or any one of the foregoing implementations of the first aspect, the first device and the second device are devices corresponding to a same subsystem and/or different subsystems in a whole house, and the method further includes: displaying a fourth interface in response to a seventh operation performed by the user on the first identifier, where the fourth interface includes identifiers of a plurality of devices corresponding to the first identifier, and the plurality of devices are devices corresponding to a same subsystem in a same room; and in response to an eighth operation performed by the user on the identifiers of the plurality of devices, sending an indication for canceling execution of the first intention to the plurality of devices.

In some embodiments, there are many types of devices, and subsystems such as a lighting subsystem, a sunshade subsystem, a cold and warm fresh air subsystem, and an audio and video entertainment subsystem are classified based on a device function according to an intention of the user. Each subsystem corresponds to one or more intentions. For example, an intention corresponding to the lighting subsystem includes an intention of turning on/off a light, a brightness control intention, a spotlight group control intention, a main light control intention, a color temperature control intention, and the like. An intention corresponding to the cold and warm fresh air subsystem includes a temperature control intention, a humidity control intention, an air quality control intention, a smell control intention, and the like.

In some embodiments, the seventh operation is a touching and holding operation, and the eighth operation is a dragging operation. The first interface displayed by the control device is a whole-house device control interface, and the first device and the second device are devices that are in the whole house and that correspond to a same subsystem and/or different subsystems. The control device detects an operation of touching and holding, by the user, the first identifier displayed in the trigger area, and may determine a case in which the user needs to determine one or more first devices corresponding to the first identifier. In this case, the control device may expand and display the identifier of the first device corresponding to the first identifier. Then, the control device detects a dragging operation performed by the user on the expanded identifier, and may determine that the user indicates the first device corresponding to the dragged identifier to cancel execution of the first intention, and send a corresponding indication to the first device.

In this way, the control device can implement separate control of electronic devices in a room in the whole-house device interface. Therefore, refined control of the electronic device is implemented, and user experience is improved.

According to the first aspect or any one of the foregoing implementations of the first aspect, the method further includes: switching to display a fifth interface in response to a ninth operation of the user, where space corresponding to the fifth interface is the same as or different from space in which the first device is located or space in which the second device is located; or the space corresponding to the fifth interface includes the space in which the first device is located and the space in which the second device is located; and the ninth operation is a slide operation in the trigger area, or the ninth operation is an operation on a preset control.

In some scenarios, the control device may control electronic devices in different rooms, and directly control electronic devices in the whole house. In this case, the first device and the second device displayed in the first interface may be electronic devices in a same room or different rooms.

In some embodiments, in response to an operation of the user, the control device may switch to display room device control interfaces of different rooms, and switch to display a room device control interface and a whole-house device control interface.

In some embodiments, the ninth operation may be an operation performed by the user on the preset control, or may be a slide operation of the user (for example, a slide operation in the trigger area).

For example, the control device detects a slide operation of the user, and may switch to display interfaces corresponding to electronic devices in different rooms. For example, the user performs a slide operation in the trigger area, and bedroom space may be switched to next space, for example, living room space; and the user may continue to slide, and next space may be switched to, for example, kitchen space.

Further, sliding continues, and the whole-house device control interface may be switched to. In this case, the fifth interface is the whole-house device control interface that is switched to, and the corresponding space is the whole house, including the space in which the first device is located and the space in which the second device is located. Then, in response to the slide operation of the user, the control device switches the whole-house device control interface to the room device control interface. In this case, the first device and the second device are devices corresponding to the whole-house control interface, and may be in the same space or different pieces of space, and after the room control interface (namely, the fifth interface) is switched to, the corresponding space may be the same as or different from the space in which the first device is located or the space in which the second device is located.

For another example, the control device displays a room switching menu in response to the operation performed by the user on the preset control. The fifth interface is switched to for display in response to an operation of selecting a first room by the user in the room switching menu, where the fifth interface corresponds to the first room, the first room is different from the room in which the first device and/or the second device is located, and a device corresponding to a device identifier displayed in the fifth interface is a device in the first room.

In this way, the control device may switch, in response to an operation of the user, device control interfaces corresponding to different pieces of space, to meet a control requirement of the user for devices in the different pieces of space, and help the user learn a status of an electronic device in each piece of space, thereby improving user experience.

According to the first aspect or any one of the foregoing implementations of the first aspect, the switching to display a fifth interface in response to a ninth operation of the user includes: displaying a room switching menu in response to the operation performed by the user on the preset control; and switching to display the fifth interface in response to an operation of selecting a first room by the user in the room switching menu, where the fifth interface corresponds to the first room, the first room is different from the room in which the first device and/or the second device is located, and a device corresponding to a device identifier displayed in the fifth interface is a device in the first room.

According to the first aspect or any one of the foregoing implementations of the first aspect, the switching to display a fifth interface in response to a ninth operation of the user includes: switching between a first device control scenario and a second device control scenario in response to the operation performed by the user on the preset control, where the first device control scenario is used to control the first device and the second device in the same room, and the second device control scenario is used to control devices in the whole house.

According to the first aspect or any one of the foregoing implementations of the first aspect, in the second identifier, identifiers corresponding to a same subsystem are displayed adjacent to each other.

For example, outside the trigger area, icons of electronic devices (or icons of electronic devices corresponding to a same subsystem) with a same device type label are displayed close to each other based on the device type label of the electronic devices according to a same display rule, to facilitate an operation of the user.

For example, a ceiling light, an auxiliary light, a decorative light, a main light, and an atmosphere light that are included in a bedroom are lighting devices, and all correspond to a lighting subsystem. In this case, in a process in which the control device displays a bedroom device control interface, icons of corresponding lighting devices are displayed close to each other.

According to the first aspect or any one of the foregoing implementations of the first aspect, the first interface further includes a subsystem index, and the method further includes: in response to a tenth operation performed by the user on a first subsystem in the subsystem index, displaying, in a first area outside the trigger area, an identifier corresponding to the first subsystem in the second identifier, where a start location of the first area is a preset start location, and a quantity of display locations included in the first area is adapted to a quantity of identifiers corresponding to the first subsystem.

In this way, the control device can display icons of a plurality of electronic devices in the current space, to control all electronic devices in the current space.

According to the first aspect or any one of the foregoing implementations of the first aspect, a quantity of display locations that are used to display an identifier and that are outside the trigger area in the first interface is less than or equal to a first quantity, and when a quantity of second devices is greater than the first quantity, the displaying a first interface includes: displaying the first quantity of second identifiers in a first page outside the trigger area in the first interface; and in response to an eleventh operation of the user, displaying a first remaining quantity of second identifiers in a second page outside the trigger area in the first interface, where the first remaining quantity is less than or equal to the first quantity, and the quantity of second devices is a sum of the first quantity and the first remaining quantity.

In this way, by presetting the second quantity of displayed icons in an inner circle, the control device can clearly display the electronic device icon in the trigger area, so that the user can conveniently search for the electronic device icon. In addition, page switching in the trigger area may be implemented. The user may determine, by switching pages of the trigger area, an electronic device that has been turned on in current space, to learn a status of the electronic device and improve user experience.

According to the first aspect or any one of the foregoing implementations of the first aspect, a quantity of display locations that are used to display an identifier and that are in the trigger area in the first interface is less than or equal to a second quantity, and when a quantity of first devices is greater than the second quantity, the displaying a first interface includes: displaying the second quantity of first identifiers in a third page in the trigger area in the first interface; and in response to a twelfth operation of the user, displaying a second remaining quantity of first identifiers in a fourth page in the trigger area in the first interface, where the second remaining quantity is less than or equal to the second quantity, and the quantity of first devices is a sum of the second quantity and the second remaining quantity.

According to a second aspect, an electronic device is provided. The electronic device includes a processor, a memory, and a display. The memory and the display are coupled to the processor, the memory is configured to store computer program code, the computer program code includes computer instructions, and when the processor reads the computer instructions from the memory, the electronic device is enabled to perform: displaying a first interface, where the first interface includes a trigger area, and a first identifier displayed within the trigger area and/or a second identifier displayed outside the trigger area, the first identifier indicates that a first device corresponding to the first identifier executes a first intention corresponding to the first device, and the second identifier indicates that a second device corresponding to the second identifier does not execute a second intention corresponding to the second device; receiving a first operation of a user; and generating a first scenario in response to the first operation, where the first scenario includes indicating the first device to execute the first intention, and/or indicating the second device to cancel execution of the second intention.

According to the second aspect, when the processor reads the computer-readable instructions from the memory, the electronic device is further enabled to perform the following operations: in response to a second operation performed by the user on the second identifier, controlling the second identifier to move into the trigger area for display, and indicating the second device corresponding to the second identifier to execute the second intention corresponding to the second device.

According to the second aspect or any one of the foregoing implementations of the second aspect, when the processor reads the computer-readable instructions from the memory, the electronic device is further enabled to perform the following operations: in response to a third operation performed by the user on the first identifier, controlling the first identifier to move to the outside of the trigger area for display, and indicating the first device corresponding to the first identifier to cancel execution of the first intention corresponding to the first device.

According to the second aspect or any one of the foregoing implementations of the second aspect, the generating a first scenario in response to the first operation includes: displaying a second interface in response to the first operation; receiving a scenario editing operation of the user in the second interface; and generating the first scenario in response to a fourth operation of the user.

According to the second aspect or any one of the foregoing implementations of the second aspect, the scenario editing operation includes one or more of the following: setting a scenario effective time, setting that the first device in the scenario cancels execution of the first intention, and setting that the second device in the scenario executes the second intention.

According to the second aspect or any one of the foregoing implementations of the second aspect, the first device and the second device are devices in a same room, and when the processor reads the computer-readable instructions from the memory, the electronic device further performs the following operations: displaying a third interface in response to a fifth operation performed by the user on the first identifier; receiving a sixth operation of the user in the third interface, where the sixth operation is used to adjust a parameter of a device corresponding to the first identifier; and sending, based on an adjustment result of the parameter, a parameter adjustment indication to the device corresponding to the first identifier.

According to the second aspect or any one of the foregoing implementations of the second aspect, the first device and the second device are devices corresponding to a same subsystem and/or different subsystems in a whole house, and when the processor reads the computer-readable instructions from the memory, the electronic device is further enabled to perform the following operations: displaying a fourth interface in response to a seventh operation performed by the user on the first identifier, where the fourth interface includes identifiers of a plurality of devices corresponding to the first identifier, and the plurality of devices are devices corresponding to a same subsystem in a same room; and in response to an eighth operation performed by the user on the identifiers of the plurality of devices, sending an indication for canceling execution of the first intention to the plurality of devices.

According to the second aspect or any one of the foregoing implementations of the second aspect, when the processor reads the computer-readable instructions from the memory, the electronic device is further enabled to perform the following operations: switching to display a fifth interface in response to a ninth operation of the user, where space corresponding to the fifth interface is the same as or different from space in which the first device is located or space in which the second device is located; or the space corresponding to the fifth interface includes the space in which the first device is located and the space in which the second device is located, where the ninth operation is a slide operation in the trigger area, or the ninth operation is an operation on a preset control.

According to the second aspect or any one of the foregoing implementations of the second aspect, the switching to display a fifth interface in response to a ninth operation of the user includes: displaying a room switching menu in response to the operation performed by the user on the preset control; and switching to display the fifth interface in response to an operation of selecting a first room by the user in the room switching menu, where the fifth interface corresponds to the first room, the first room is different from the room in which the first device and/or the second device is located, and a device corresponding to a device identifier displayed in the fifth interface is a device in the first room.

According to the second aspect or any one of the foregoing implementations of the second aspect, the switching to display a fifth interface in response to a ninth operation of the user includes: switching between a first device control scenario and a second device control scenario in response to the operation performed by the user on the preset control, where the first device control scenario is used to control the first device and the second device in the same room, and the second device control scenario is used to control devices in the whole house.

According to the second aspect or any one of the foregoing implementations of the second aspect, identifiers corresponding to a same subsystem in the second identifier are displayed adjacent to each other.

According to the second aspect or any one of the foregoing implementations of the second aspect, the first interface further includes a subsystem index, and when the processor reads the computer-readable instructions from the memory, the electronic device is further enabled to perform the following operations: in response to a tenth operation performed by the user on a first subsystem in the subsystem index, displaying, in a first area outside the trigger area, an identifier corresponding to the first subsystem in the second identifier, where a start location of the first area is a preset start location, and a quantity of display locations included in the first area is adapted to a quantity of identifiers corresponding to the first subsystem.

According to the second aspect or any one of the foregoing implementations of the second aspect, a quantity of display locations that are used to display an identifier and that are outside the trigger area in the first interface is less than or equal to a first quantity, and when a quantity of second devices is greater than the first quantity, the displaying a first interface includes: displaying the first quantity of second identifiers in a first page outside the trigger area in the first interface; and in response to an eleventh operation of the user, displaying a first remaining quantity of second identifiers in a second page outside the trigger area in the first interface, where the first remaining quantity is less than or equal to the first quantity, and the quantity of second devices is a sum of the first quantity and the first remaining quantity.

According to the second aspect or any one of the foregoing implementations of the second aspect, a quantity of display locations that are used to display an identifier and that are in the trigger area in the first interface is less than or equal to a second quantity, and when a quantity of first devices is greater than the second quantity, the displaying a first interface includes: displaying the second quantity of first identifiers in a third page in the trigger area in the first interface; and in response to a twelfth operation of the user, displaying a second remaining quantity of first identifiers in a fourth page in the trigger area in the first interface, where the second remaining quantity is less than or equal to the second quantity, and the quantity of first devices is a sum of the second quantity and the second remaining quantity.

For technical effects corresponding to the second aspect or any one of the implementations of the second aspect, refer to technical effects corresponding to the first aspect or any one of the implementations of the first aspect. Details are not described herein again.

According to a third aspect, an embodiment of this application provides an electronic device. The electronic device has a function of implementing the scenario setting method according to the first aspect and any one of the possible implementations of the first aspect. The function may be implemented by hardware, or may be implemented by hardware executing corresponding software. The hardware or the software includes one or more modules corresponding to the function.

For technical effects corresponding to the third aspect or any one of the implementations of the third aspect, refer to technical effects corresponding to the first aspect and any one of the implementations of the first aspect. Details are not described herein again.

According to a fourth aspect, a computer-readable storage medium is provided. The computer-readable storage medium stores a computer program (which may also be referred to as an instruction or code). When the computer program is executed by an electronic device, the electronic device is enabled to perform the method according to the first aspect or any one of the implementations of the first aspect.

For technical effects corresponding to the fourth aspect or any one of the implementations of the fourth aspect, refer to technical effects corresponding to the first aspect or any one of the implementations of the first aspect. Details are not described herein again.

According to a fifth aspect, an embodiment of this application provides a computer program product. When the computer program product runs on an electronic device, the electronic device is enabled to perform the method according to the first aspect or any one of the implementations of the first aspect.

For technical effects corresponding to the fifth aspect or any one of the implementations of the fifth aspect, refer to technical effects corresponding to the first aspect or any one of the implementations of the first aspect. Details are not described herein again.

According to a sixth aspect, an embodiment of this application provides a circuit system. The circuit system includes a processing circuit, and the processing circuit is configured to perform the method according to the first aspect or any one of the implementations of the first aspect.

For technical effects corresponding to the sixth aspect or any one of the implementations of the sixth aspect, refer to technical effects corresponding to the first aspect or any one of the implementations of the first aspect. Details are not described herein again.

According to a seventh aspect, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the method according to the first aspect or any one of the implementations of the first aspect.

For technical effects corresponding to the seventh aspect or any one of the implementations of the seventh aspect, refer to technical effects corresponding to the first aspect or any one of the implementations of the first aspect. Details are not described herein again.

### BRIEF DESCRIPTION OF DRAWINGS

FIG. 1 is a diagram of a home scenario according to an embodiment of this application;
FIG. 2(a) to FIG. 2(e) are a diagram 1 of an interface according to an embodiment of this application;
FIG. 3 is a diagram of a communication system to which a scenario setting method according to an embodiment of this application is applied;
FIG. 4A is a diagram of a hardware structure of a first electronic device according to an embodiment of this application;
FIG. 4B is a diagram of a hardware structure of a communication device according to an embodiment of this application;
FIG. 5 is a diagram 2 of an interface according to an embodiment of this application;
FIG. 6 is a diagram of a scenario according to an embodiment of this application;
FIG. 7 is a diagram 3 of an interface according to an embodiment of this application;
FIG. 8(a) and FIG. 8(b) are a diagram 4 of an interface according to an embodiment of this application;
FIG. 9(a) and FIG. 9(b) are a diagram 5 of an interface according to an embodiment of this application;
FIG. 10(a) and FIG. 10(b) are a diagram 6 of an interface according to an embodiment of this application;
FIG. 11(a) to FIG. 11(c) are a diagram 7 of an interface according to an embodiment of this application;
FIG. 12 is a diagram 8 of an interface according to an embodiment of this application;
FIG. 13(a) and FIG. 13(b) are a diagram 9 of an interface according to an embodiment of this application;
FIG. 14(a) and FIG. 14(b) are a diagram 10 of an interface according to an embodiment of this application;
FIG. 15(a) and FIG. 15(b) are a diagram 11 of an interface according to an embodiment of this application;
FIG. 16(a) to FIG. 16(c) are a diagram 12 of an interface according to an embodiment of this application;
FIG. 17(a) and FIG. 17(b) are a diagram 13 of an interface according to an embodiment of this application;
FIG. 18(a) and FIG. 18(b) are a diagram 14 of an interface according to an embodiment of this application;
FIG. 19(a) and FIG. 19(b) are a diagram 15 of an interface according to an embodiment of this application;
FIG. 20(a) and FIG. 20(b) are a diagram 16 of an interface according to an embodiment of this application;
FIG. 21(a) and FIG. 21(b) are a diagram 17 of an interface according to an embodiment of this application;
FIG. 22(a) to FIG. 22(c) are a diagram 18 of an interface according to an embodiment of this application;
FIG. 23(a) and FIG. 23(b) are a diagram 19 of an interface according to an embodiment of this application;
FIG. 24(a) and FIG. 24(b) are a diagram 20 of an interface according to an embodiment of this application;
FIG. 25(a) and FIG. 25(b) are a diagram 21 of an interface according to an embodiment of this application;
FIG. 26(a) and FIG. 26(b) are a diagram 22 of an interface according to an embodiment of this application;
FIG. 27(a) and FIG. 27(b) are a diagram 23 of an interface according to an embodiment of this application;
FIG. 28(a) and FIG. 28(b) are a diagram 24 of an interface according to an embodiment of this application;
FIG. 29(a) to FIG. 29(e) are a diagram 25 of an interface according to an embodiment of this application;
FIG. 30 is a schematic flowchart 1 of a scenario setting method according to an embodiment of this application;
FIG. 31 is a schematic flowchart 2 of a scenario setting method according to an embodiment of this application;
FIG. 32 is a schematic flowchart 3 of a scenario setting method according to an embodiment of this application; and
FIG. 33 is a diagram of a structure of a control device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a" and "this" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a relative concept in a specific manner.

In some scenarios, various electronic devices have entered people's life. A concept of a smart home system is proposed for a home use scenario of an electronic device. The smart home system implements organic combination of electronic devices and application subsystems related to home life by using a home as a platform and using technologies such as the Internet of Things and automatic control. The electronic device in the smart home system is, for example, a smart home device. The smart home device is a smart device, for example, an audio and video device (like a large screen device or a Bluetooth sound box), a lighting device (like a ceiling light, a table light, or a spotlight), an environment control device (like an air conditioner or an air purifier), and an anti-theft alarm device (like a human body sensor or a camera).

In a use process of the smart home device, a user can create a smart home device scenario to implement scenario control of the smart home device, thereby improving control efficiency of the smart home device. For example, based on an actual use scenario, the user may add a smart home device included in the actual use scenario to a corresponding scenario, and set a trigger condition and a task that needs to be executed by the smart home device, for example, set a scenario of turning off an air conditioner, where the scenario includes turning off all air conditioners at home when a scenario widget is tapped. In this way, when the user needs to turn off the air conditioners, the user does not need to operate the air conditioners one by one.

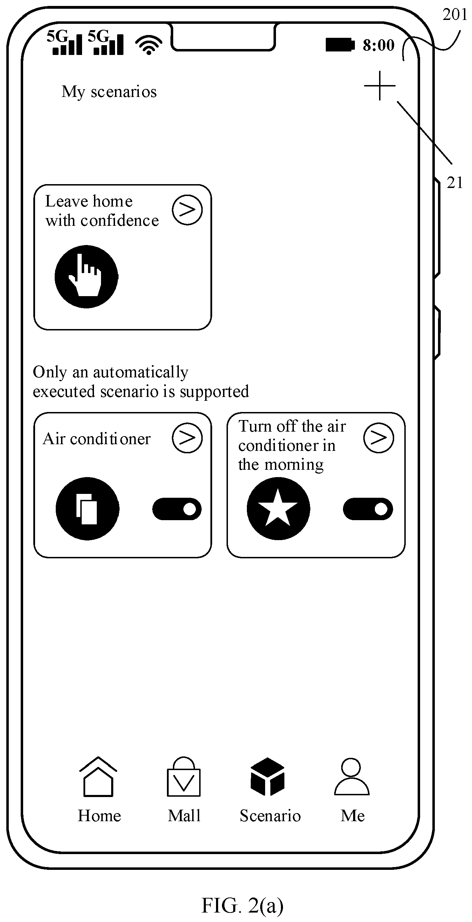

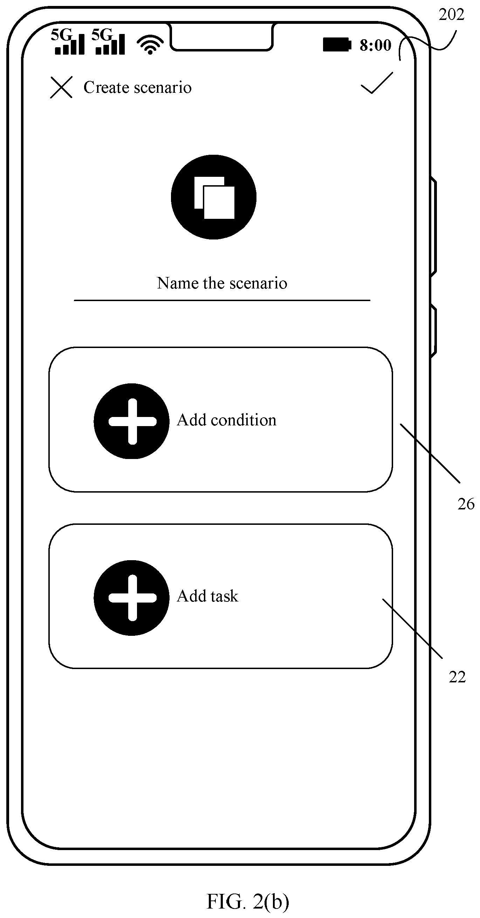

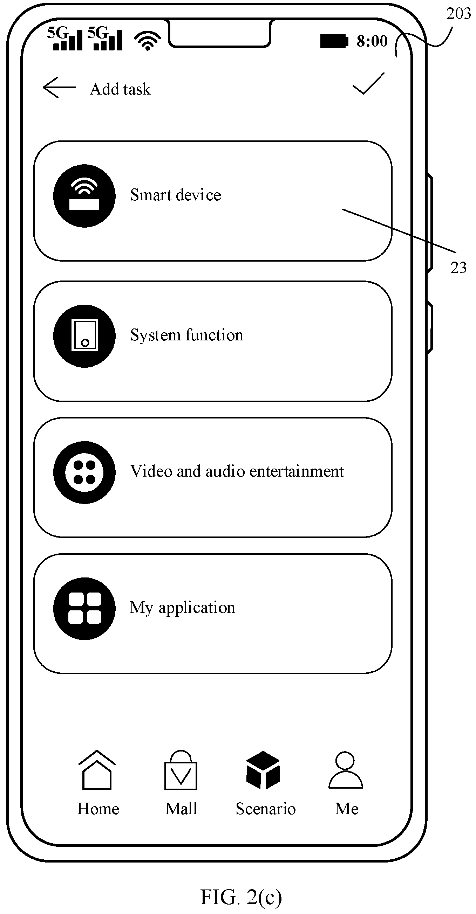

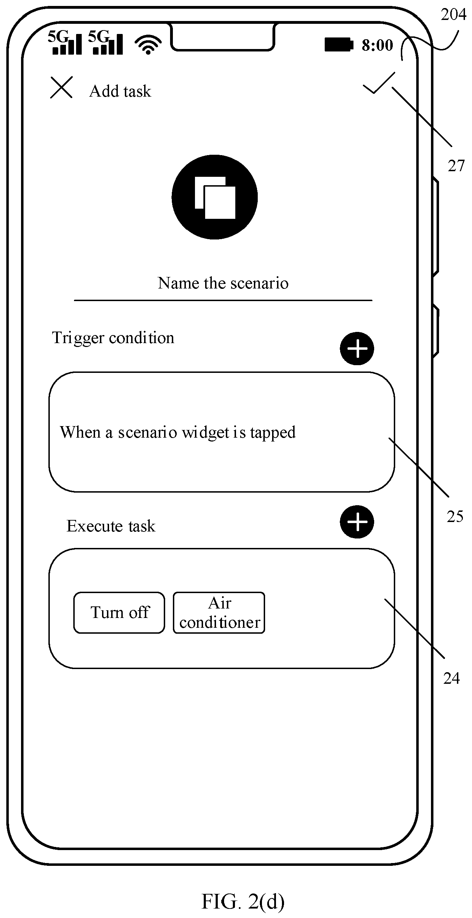

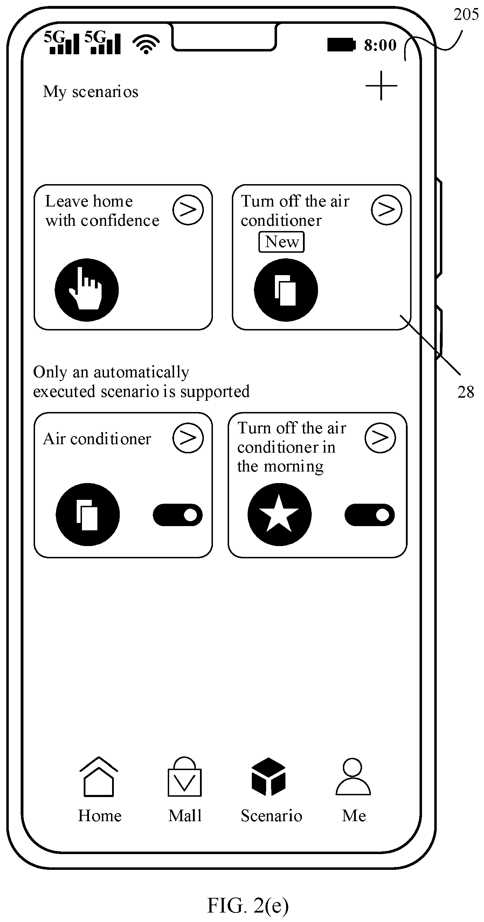

For example, an AI Life application is installed in a mobile phone. The mobile phone detects an operation of starting the AI Life application, and displays a scenario interface 201 shown in FIG. 2(a). After detecting an operation of tapping an add control 21 by the user, the mobile phone displays an interface 202 shown in FIG. 2(b), and receives an operation of creating a scenario by the user, for example, receives an operation of adding, by the user, a scenario trigger condition for controlling a smart home device and a task that needs to be executed by the smart home device. After detecting an operation of tapping a task add control 22 by the user, the mobile phone displays an interface 203 shown in FIG. 2(c). In the interface 203, after detecting an operation of tapping a smart home device control 23 by the user, the mobile phone determines that the user needs to add a task for controlling a smart home device, and may display a controllable smart home device for the user to select. For example, if a smart home device selected by the user is one or more air conditioners installed at home, as shown by a reference numeral 24 in an interface 204 shown in FIG. 2(d), the mobile phone may display an execution task corresponding to the air conditioner selected by the user. As shown by a reference numeral 25, currently a trigger condition for controlling the air conditioner is "When a scenario widget is tapped" by default. After detecting an operation of tapping a control shown by the reference numeral 25 by the user, the mobile phone may modify, based on the operation of the user, the trigger condition for controlling the air conditioner; or as shown in the interface 202 shown in FIG. 2(b), after detecting an operation of tapping a condition add control 26 by the user, the mobile phone may also receive a trigger condition entered by the user. Then, as shown in an interface 204 shown in FIG. 2(d), after detecting an operation of tapping a confirmation control 27 by the user, the mobile phone confirms that the user completes creation of a current scenario. Then, the mobile phone displays an interface 205 shown in FIG. 2(e), for example, prompts, by using a scenario widget 28, the user that the scenario is successfully created.

It can be learned that, in a scenario setting process, the user needs to consider in advance each smart home device required in a to-be-created scenario and a scenario setting effect. In a scenario creation process, the user cannot directly view a scenario effect in real time. As a result, the scenario setting process has high requirements on a logical thinking capability of the user, and an operation is complex, affecting use of a common user. If the user needs to add or delete some devices in a scenario, a complex editing process is also required, which affects user experience.

Therefore, an embodiment of this application provides a scenario setting method. In an electronic device control process, a real-time scenario is automatically generated in response to an operation of a user, thereby reducing a scenario setting difficulty and improving user experience. In addition, the user can view a scenario in a room and a whole-house real-time scenario, which improves user experience.

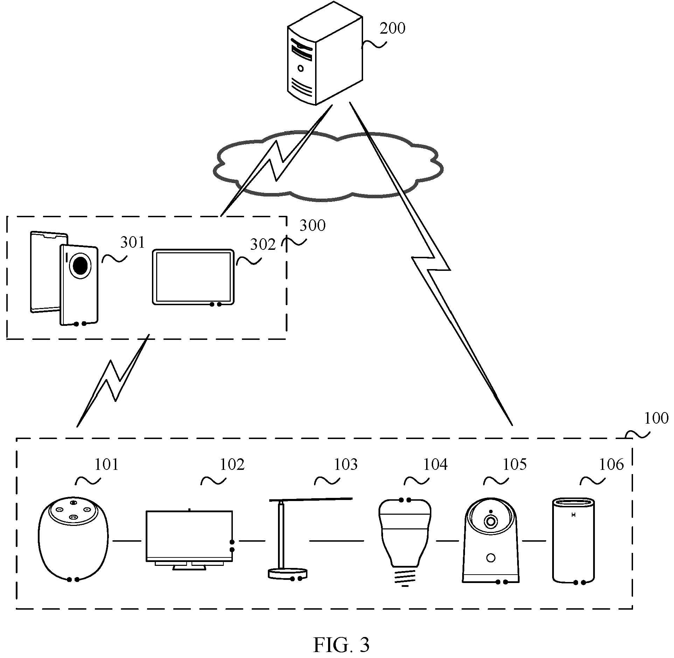

FIG. 3 is a diagram of a communication system to which a scenario setting method according to an embodiment of this application is applied. As shown in FIG. 3, the communication system includes first electronic devices 100, a server 200, and control devices 300.

Optionally, the first electronic device 100 may be, for example, a terminal device like a sound box 101, a large screen device 102, a desk light 103, an electric light 104, a camera 105, an air purifier 106, a mobile phone, a tablet computer, a personal computer (personal computer, PC), a personal digital assistant (personal digital assistant, PDA), a netbook, a wearable electronic device, or an artificial intelligence (artificial intelligence) terminal. A specific form of the electronic device is not specifically limited in this application. An operating system installed in the first electronic device 100 includes but is not limited to iOS^{®}, Android^{®}, Harmony^{®}, Windows^{®}, Linux^{®}, or another operating system. Alternatively, the first electronic device 100 may not be installed with an operating system. In some embodiments, the first electronic device 100 may be a fastened device, or may be a portable device. A specific type of the first electronic device 100, whether an operating system is installed, and an operating system installed when the operating system is installed are not limited in this application.

In some embodiments, the first electronic devices 100 may be smart home devices, and the first electronic devices 100 may be connected to each other to form a smart home system. The first electronic devices 100 can establish connections to the server 200, and the server 200 manages each first electronic device 100.

For example, the server 200 manages, in a unit of a home (home), one or more first electronic devices 100 included in one or more homes. In a network configuration process of requesting to join a smart home system by a first electronic device 100, the server 200 adds the first electronic device 100 to a corresponding home.

In some embodiments, in the network configuration process, an engineer may set location information of each first electronic device 100, for example, an electronic device in a room like a living room, a study, or a bedroom. Then, the first electronic devices 100 and/or the server 200 may store the location information of each first electronic device 100.

Optionally, the server 200 may be a device or a network device that has a computing function, for example, a cloud server or a network server. The server 200 may be a server, a server cluster including a plurality of servers, or a cloud computing service center. The server 200 may alternatively be described as a smart home cloud platform, and is configured to manage a smart home device, and the like included in a smart home system.

Optionally, as shown in FIG. 3, the communication system may further include the control device 300. The control device 300 may be connected to one or more first electronic devices 100, and is configured to manage and control the first electronic devices 100.

Optionally, the control device 300 may be a dedicated device for controlling a smart home device, or a device including a function of controlling a smart home device. For example, the control device 300 may be a smart home device control panel 302, or may be a terminal device like a mobile phone 301, a tablet, a smart speaker, or a smartwatch. The smart home device control panel 302 is a dedicated device configured to control the smart home device in the smart home system. In some embodiments, the control device 300 may be a fastened device, or may be a portable device. A specific form of the control device 300 is not specifically limited in this application.

In some embodiments, the control device 300 is connected to one or more first electronic devices 100 to obtain device information of the first electronic device 100. The control device 300 provides a human-computer interaction interface, displays the device information of the first electronic device 100 for a user by using the human-computer interaction interface, and receives a device control command of the user for the first electronic device 100.

In some embodiments, a first application is installed in the control device 300. The first application is a smart home application that can be connected to the smart home device, and edit and manage the smart home device. As shown in FIG. 3, the control device 300 is connected to one or more first electronic devices 100 by using the first application. Optionally, the first application is an AI Life application.

In some embodiments, in a process of starting the first application, the control device 300 detects an operation of adding a device by the user, searches nearby first electronic devices 100, and performs network configuration on a found first electronic device 100. In the network configuration process, the control device 300 sends network information (for example, a network name and a password) of a local area network to the first electronic device 100, and assists the first electronic device 100 in joining the same local area network as the control device 300. The first electronic device 100 may establish a wireless communication connection to the control device 300. In addition, the control device 300 sends device information of the first electronic device 100 to the server 200, so that the server 200 adds the first electronic device 100 to a corresponding home, and allocates a device identity document (identity document, ID) to the first electronic device 100. In this way, the server 200 can subsequently uniformly manage the first electronic device 100 included in the home.

For example, the control device 300 receives a scenario creation command entered by the user, and creates a corresponding scenario based on a real-time running scenario that is displayed in a current interface and that is of a first electronic device 100 that is selected by the user to start or set a parameter. The control device 300 can save the scenario, so that the user can trigger the electronic device in the scenario next time.

Optionally, the control device 300 may send information about the scenario to the server 200. Subsequently, after determining that a scenario trigger condition is met, the server 200 may directly control the first electronic device 100 included in the scenario to execute a task that is to be executed by the first electronic device 100 in the scenario.

It should be noted that, in the foregoing example, a process in which a first electronic device 100 is added to a corresponding home is described by using an example in which the control device 300 triggers, in a process of starting the first application, the first electronic device 100 to join the home. It may be understood that there may be another method for triggering the first electronic device 100 to join the home. For example, if the control device 300 does not start the first application temporarily after the control device 300 is started, the control device 300 may alternatively automatically search nearby first electronic devices 100 that are not connected to the local area network and/or that are not added to the home, and connect some or all of these first electronic devices 100 to the local area network and add them to corresponding homes based on an operation of the user. This is not specifically limited in this embodiment of this application.

In some embodiments, as shown in FIG. 3, the communication system may alternatively not include the control devices 300. The first electronic device 100 joins a home managed by the server 200, and the server 200 can directly obtain information about all of the first electronic devices 100 in the home. Subsequently, any electronic device that has a processing capability in the first electronic devices 100 may send a request to the server 200 as required, to obtain information about another first electronic device 100. Then, the electronic device serves as a primary device, and may be configured to control the another first electronic device 100 and create a scenario including one or more first electronic devices 100.

For example, the first electronic device 100 includes a large screen device 102, and the large screen device 102 may create, based on an operation of the user, a scenario including one or more first electronic devices 100, and send the scenario to the server 200. After determining that a scenario trigger condition is met, the server 200 may directly control the first electronic device 100 included in the scenario to execute a task that is to be executed by the first electronic device 100 in the scenario.

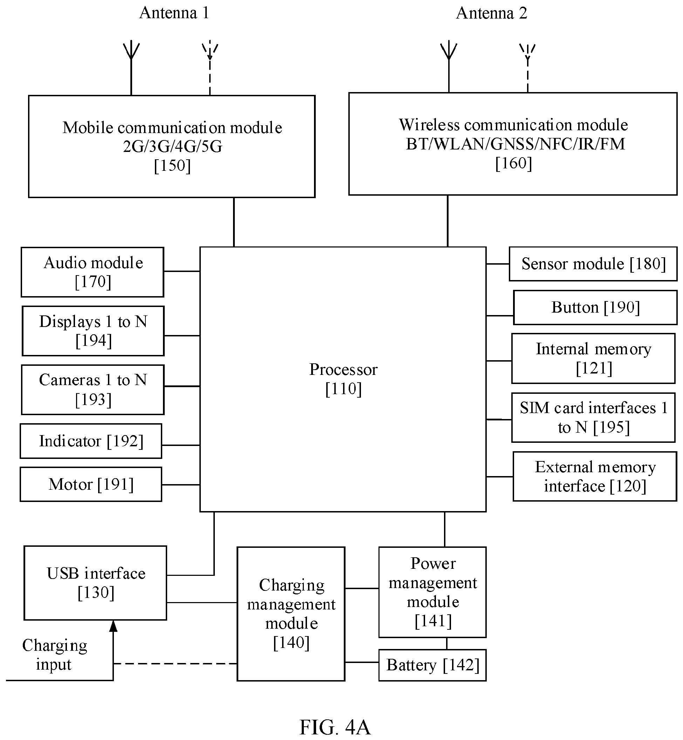

For example, FIG. 4A is a diagram of a structure of a first electronic device 100.

The first electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, and a subscriber identification module (subscriber identification module, SIM) card interface 195.

It may be understood that a structure shown in this embodiment of this application does not constitute a specific limitation on the first electronic device 100. In some other embodiments of this application, the first electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of I2C buses. The processor 110 may be separately coupled to a touch sensor, a charger, a flash, the camera 193, and the like by using different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the first electronic device 100. The processor 110 communicates with the display 194 through the DSI interface, to implement a display function of the first electronic device 100.

The USB interface 130 is an interface that conforms to a USB standard specification, and may be specifically a mini USB interface, a micro USB interface, a USB type-C interface, or the like. The USB interface 130 may be configured to connect to the charger to charge the first electronic device 100, or may be configured to exchange data between the first electronic device 100 and a peripheral device, or may be configured to connect to a headset for playing audio through the headset. The interface may be further configured to connect to another electronic device, for example, an AR device.

It may be understood that, an interface connection relationship between the modules shown in this embodiment of this application is merely an example for description, and does not constitute a limitation on a structure of the first electronic device 100. In some other embodiments of this application, the first electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of a wired charger through the USB interface 130. In some embodiments of wireless charging, the charging management module 140 may receive wireless charging input through a wireless charging coil of the first electronic device 100. The charging management module 140 supplies power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. After being processed by the baseband processor, the low-frequency baseband signal is transmitted to the application processor. The application processor outputs a sound signal by using an audio device, or displays an image or a video by using the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments, the first electronic device 100 communicates with the server 200, the control device 300, or another first electronic device 100 by using the mobile communication module 150 or the wireless communication module 160, to implement setting and creation of a real-time scenario.

The first electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be manufactured by using a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the first electronic device 100 may include one or N displays 194, where N is a positive integer greater than 1.

In some embodiments, the first electronic device 100 may obtain whole-house device information from the server 200, and display the device information on the display 194, so that the user can view a device status of a whole house and a device status in each room. In addition, the user can view and create a real-time scenario on the display 194 based on the device status.

The camera 193 is configured to capture a static image or a video. An optical image of an object is generated through a lens, and is projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format like RGB or YUV. In some embodiments, the first electronic device 100 may include one or N cameras 193, where N is a positive integer greater than 1.

The external memory interface 120 may be configured to connect to an external memory card, for example, a micro SD card, to expand a storage capability of the first electronic device 100. The external memory card communicates with the processor 110 through the external memory interface 120, to implement a data storage function. For example, a music file or a video file is stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The audio module 170 is configured to convert digital audio information into an analog audio signal for output, and is further configured to convert analog audio input into a digital audio signal. The audio module 170 may be further configured to code and decode an audio signal. In some embodiments, the audio module 170 may be disposed in the processor 110, or some function modules in the audio module 170 are disposed in the processor 110. The first electronic device 100 may use the audio module 170, for example, for music playing or recording. The audio module 170 may include a loudspeaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The pressure sensor is configured to sense a pressure signal, and can convert the pressure signal into an electrical signal. In some embodiments, the pressure sensor may be disposed on the display 194. There are many types of pressure sensors such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The first electronic device 100 determines intensity of pressure based on the change in the capacitance. When a touch operation is performed on the display, the first electronic device 100 detects intensity of the touch operation based on the pressure sensor. The first electronic device 100 may alternatively calculate a touch location based on a detection signal of the pressure sensor. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The touch sensor is also referred to as a "touch component". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. Visual output related to the touch operation may be provided through the display 194. In some other embodiments, the touch sensor may alternatively be disposed on a surface of the first electronic device 100 at a location different from that of the display 194.

The button 190 includes a power button, a volume button, and the like. The button 190 may be a mechanical button, or may be a touch button. The first electronic device 100 may receive button input, and generate a button signal input related to a user setting and function control of the first electronic device 100.

The motor 191 may generate a vibration prompt. The motor 191 may be configured to provide an incoming call vibration prompt and touch vibration feedback. For example, touch operations performed on different applications (for example, photographing and audio playing) may correspond to different vibration feedback effects. The motor 191 may alternatively correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the first electronic device 100. The first electronic device 100 may support one or N SIM card interfaces, where N is a positive integer greater than 1.

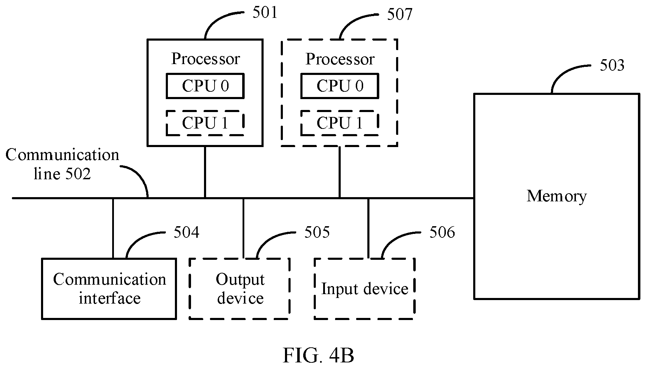

Optionally, the server 200 and the control device 300 in this embodiment of this application may be implemented by using different devices. For example, the server 200 and the control device 300 in this embodiment of this application may be implemented by using a communication device in FIG. 4B. FIG. 4B is a diagram of a hardware structure of a communication device according to an embodiment of this application. The communication device includes at least one processor 501, a communication line 502, a memory 503, and at least one communication interface 504. The memory 503 may alternatively be included in the processor 501.

It may be understood that a structure shown in this embodiment of this application does not constitute a specific limitation on the communication device. In some other embodiments of this application, the communication device may include more or fewer components than those shown in the figure, or some components may be combined, or some components may be split, or there may be a different component layout. The components shown in the figure may be implemented by hardware, software, or a combination of software and hardware. For example, if the communication device is the control device 300, and the control device 300 is a mobile phone, the control device 300 may be further configured with modules such as a SIM card interface, a camera, and an audio module.

The processor 501 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 502 may include a path on which information is transmitted between the foregoing components.

The communication interface 504 is configured to communicate with another device. In embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in embodiments of this application.

The memory 503 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer, but is not limited thereto. The memory may exist independently and is connected to the processor through the communication line 502. The memory may alternatively be integrated with the processor.

The memory 503 is configured to store computer-executable instructions used to implement the solutions in this application, and execution is controlled by the processor 501. The processor 501 is configured to execute the computer-executable instructions stored in the memory 503, to implement the scenario setting method provided in the following embodiments of this application.

Optionally, the computer-executable instruction in this embodiment of this application may also be referred to as application program code, an instruction, a computer program, or another name. This is not specifically limited in this embodiment of this application.

In practice, in an embodiment, the processor 501 may include one or more CPUs such as a CPU 0 and a CPU 1 in FIG. 4B.

During specific implementation, in an embodiment, the communication device may include a plurality of processors, for example, the processor 501 and a processor 507 in FIG. 4B. Each of the processors may be a single-core (single-CPU) processor, or may be a multi-core (multi-CPU) processor. The processor herein may be one or more devices, circuits, and/or processing cores configured to process data (for example, computer program instructions).

In practice, in an embodiment, the communication device may further include an output device 505 and an input device 506. The output device 505 communicates with the processor 501, and may display information in a plurality of manners. For example, the output device 505 may be a liquid crystal display (liquid crystal display, LCD), a light-emitting diode (light-emitting diode, LED) display device, a cathode ray tube (cathode ray tube, CRT) display device, or a projector (projector). The input device 506 communicates with the processor 501, and may receive user input in a plurality of manners. For example, the input device 506 may be a mouse, a keyboard, a touchscreen device, or a sensing device.

The communication device may be a general-purpose device or a dedicated device. A type of the communication device is not limited in embodiments of this application. For example, the communication device is a smart home device control panel, and is a dedicated device used to control a smart home device. For another example, the communication device is a mobile phone, and is a general-purpose device that can control a smart home device.

The following describes a scenario setting method provided in this embodiment of this application by using an example in which the control device 300 is a smart home device control panel or a mobile phone, and an application for managing a smart home device is an AI Life application.

In some embodiments, before a smart home device in a smart home system is delivered to a user for use, an engineer needs to configure and commission the smart home device. This process is a pre-installation process of the smart home device. In the pre-installation process, the engineer sets location information of the smart home device based on an installation location of the smart home device. The location information includes, for example, home information and room information. For example, in a home 1, location information of a light 1 to a light 5 is a living room, location information of a gauze curtain is a bedroom, location information of a curtain is a living room, and the like. Then, the smart home device control panel and a corresponding server may obtain the location information of the smart home device that has been set. Optionally, the location information of the smart home device is spatial location information, for example, room information of the smart home device.

In some embodiments, after accessing a local area network, an electronic device can discover other electronic devices that access the same local area network and/or log in to a same account, and these electronic devices may be classified as smart home devices in a same home. Subsequently, scenario setting may be performed on the electronic devices located in the same home. An account is used to represent an account of a smart home device management system that is logged in to by the electronic device in a server registration process (for example, the pre-installation process).

For example, the user registers with the AI Life application to obtain a user name and a password of the account. Subsequently, in a network configuration process of a new electronic device, the user logs in to the account by using another electronic device (for example, a mobile phone) on which network configuration is completed, to assist the new electronic device in network configuration. In this case, the server classifies electronic devices under a same account into a same home, to implement electronic device management by home. Optionally, the server manages one or more homes, and one home includes all electronic devices in one home added by the user.

Specifically, the mobile phone is used as an example. After logging in to the AI Life application, and detecting an operation of adding an electronic device by the user, the mobile phone sends device information of the newly added electronic device to the server. The server determines an ID of the electronic device, and classifies the electronic device into a home corresponding to a current account to which the mobile phone is logged in, to complete network configuration of the electronic device. Alternatively, the smart home device control panel sends device information of the newly added electronic device to the server in response to an operation of the user, and the server determines an ID of the electronic device, and classifies the electronic device into a home corresponding to the smart home device control panel. Optionally, the smart home device control panel may alternatively log in to a plurality of accounts. In this case, a same server classifies a home based on an account.

In some embodiments, electronic devices included in a home may be classified into one or more groups based on location information of the electronic devices, for example, electronic devices in a room are classified into one group.

In the following embodiments, an example in which electronic devices are classified into groups in a unit of a room is used to describe a scenario setting process in detail.

It should be noted that the user may alternatively perform group classification based on a requirement to complete scenario setting. For example, electronic devices in a room 1 and a room 2 are classified into a same group, and in the scenario setting process, a scenario including the electronic devices in the two rooms can be set. For another example, frequently used electronic devices are classified into a same group, so that a scenario including the frequently used electronic devices can be set.

In some embodiments, in response to an operation of the user, the smart home device control panel may switch to display electronic devices in different rooms and device statuses of the electronic devices. Then, in response to an operation of tapping a preset control by the user, the smart home device control panel may enter a room device interface of a corresponding room, to implement control on an electronic device in the room and real-time scenario setting.

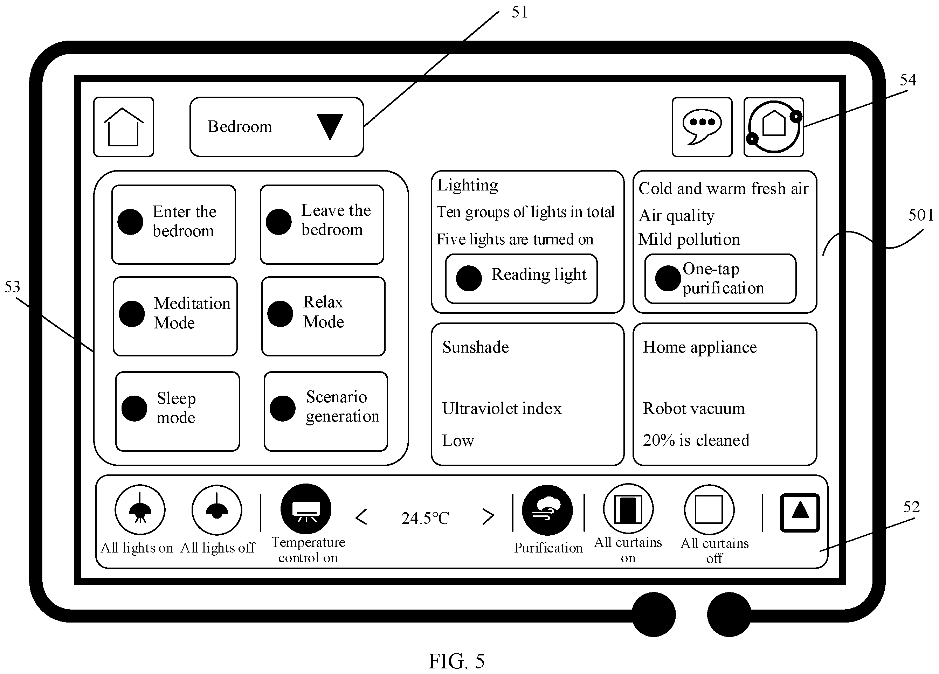

An interface 501 shown in FIG. 5 is used as an example. In response to an operation of tapping a room switching control 51 by the user, the smart home device control panel may switch to display interfaces corresponding to electronic devices in different rooms. For example, the interface 501 is an interface corresponding to an electronic device in a bedroom. In the interface 501, the user may quickly learn a device status of the electronic device in the bedroom, and control the electronic device in the bedroom by using a plurality of electronic device control controls displayed in an area indicated by a reference numeral 52. An area shown by a reference numeral 53 is used to display a scenario that has been created in the bedroom. After detecting an operation of tapping a control 54 by the user, the smart home device control panel may enter a bedroom device interface, to control the electronic device in the bedroom in real time and create a real-time scenario corresponding to the electronic device in the bedroom.

In some embodiments, there are many types of smart home devices, and subsystems such as a lighting subsystem, a sunshade subsystem, a cold and warm fresh air subsystem, and an audio and video entertainment subsystem are classified based on a function of the smart home device according to an intention of the user. Each subsystem corresponds to one or more intentions. For example, an intention corresponding to the lighting subsystem includes an intention of turning on/off a light, a brightness control intention, a spotlight group control intention, a main light control intention, a color temperature control intention, and the like. An intention corresponding to the cold and warm fresh air subsystem includes a temperature control intention, a humidity control intention, an air quality control intention, a smell control intention, and the like.

In this case, electronic devices included in each subsystem are specified by using a subsystem configuration file and a device type label (for example, a lighting device label, a sunshade device label, and a cold and warm fresh air device label). Subsequently, the user may control an electronic device in a corresponding subsystem by using the subsystem, thereby simplifying an operation of the user.

The subsystem configuration file is used to configure a subsystem. As shown in Table 1, the subsystem configuration file includes a subsystem name, a device type, a device ID, and an intention identifier. The lighting subsystem is used as an example. A subsystem configuration file of the lighting subsystem includes a device ID of an electronic device that can implement lighting and a corresponding intention identifier. The intention identifier indicates a corresponding control command used when the electronic device executes an intention. The server can determine, based on the control command, a corresponding operation that needs to be performed by the electronic device, and then deliver a corresponding instruction to the electronic device.

**Table 1**

| Subsystem configuration file | | |
|---|---|---|
| Subsystem name | Lighting subsystem | |
| Device type | Lighting device | |
| Device ID | fa56da8b-ad6f-56da-8996-45458796de34ab | ... |
| Intention identifier | light_intent_open | ... |

In some embodiments, each piece of space (for example, each room) in a home includes one or more subsystems, and a whole house (that is, the entire home) also includes one or more corresponding systems, for example, a lighting subsystem in a bedroom, a sunshade subsystem in a living room, and a whole-house security system.

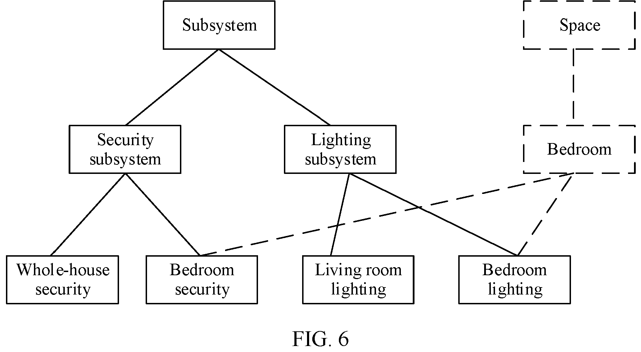

For example, as shown in FIG. 6, in a home, concepts of space and a subsystem exist in parallel. Optionally, the smart home device control panel stores the subsystem configuration file. After determining a subsystem selected by the user, the smart home device control panel can determine, based on the subsystem configuration file, a device ID of an electronic device included in the subsystem in current space and a corresponding user intention, to implement control by the user on the electronic device and setting of a real-time scenario. In addition, the smart home device control panel can save and display a device status of the electronic device in the current space, so that the user can view a device status in a room.

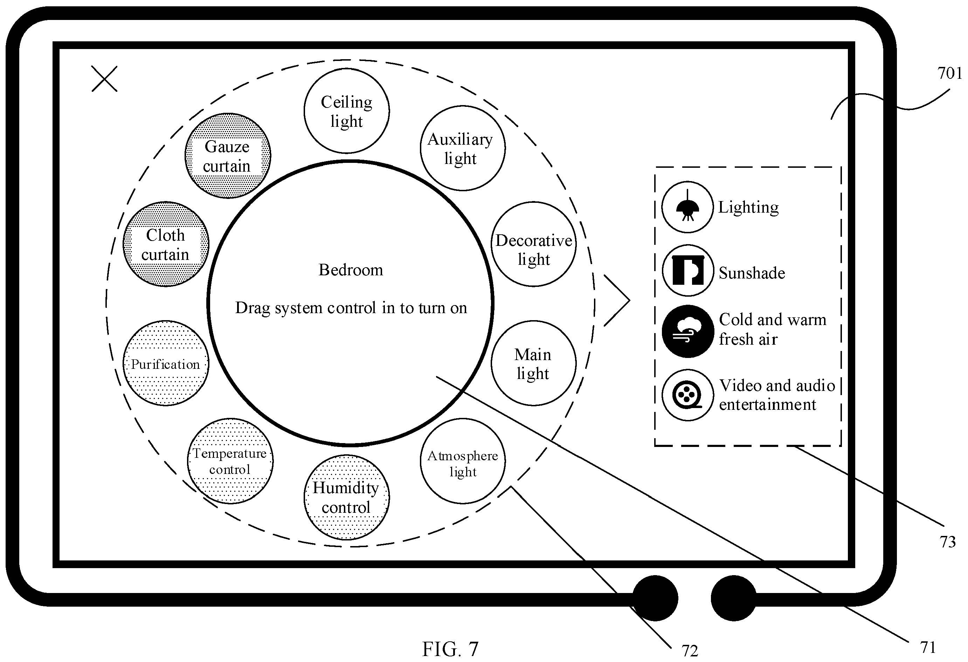

For example, in response to an operation of tapping the control 54 in the interface 501 shown in FIG. 5, the smart home device control panel displays an interface 701 shown in FIG. 7, and one or more electronic devices included in the bedroom may be displayed in the interface 701. A reference numeral 71 shows a trigger area of the current space. Outside the trigger area, as shown by a reference numeral 72, icons of one or more electronic devices included in the current space are displayed. For example, the smart home device control panel may obtain location information of each electronic device in the home, and in response to an operation of selecting to enter space (for example, the bedroom) by the user, each electronic device included in the bedroom may be determined based on the location information, and a corresponding icon is displayed, so that the user can view a device status of the electronic device in the current space.

Optionally, as shown in the interface 701, outside the trigger area, icons of electronic devices (or icons of electronic devices corresponding to a same subsystem) with a same device type label are displayed close to each other based on the device type label of the electronic devices according to a same display rule, to facilitate an operation of the user. The display rule includes, for example, different colors, patterns, fonts, font sizes, shapes, and the like, so that the user can distinguish between icons of different types of electronic devices.

For example, as shown in the interface 701, a ceiling light, an auxiliary light, a decorative light, a main light, and an atmosphere light that are included in the bedroom are lighting devices, and all correspond to the lighting subsystem. Corresponding icons are blank circular icons that are not filled and are displayed close to each other.

Optionally, as shown by a reference numeral 73, indexes of one or more subsystems corresponding to the current space may be further displayed in the interface 701, so that the user can determine a user intention that can be implemented in the current space. In response to an operation of selecting a subsystem by the user (for example, an operation of tapping a subsystem control), an icon of a corresponding electronic device may be prominently displayed outside the trigger area, so that the user can quickly determine the corresponding electronic device. A manner of prominently displaying the icon includes, for example, highlighting, zooming in a font, and displaying in a preset area.

In some embodiments, the smart home device control panel displays a preset quantity of electronic device icons outside the trigger area. When a quantity of electronic devices included in the space is greater than the preset quantity, the smart home device control panel may switch a page in response to an operation of the user, to implement displaying of icons of all electronic devices.

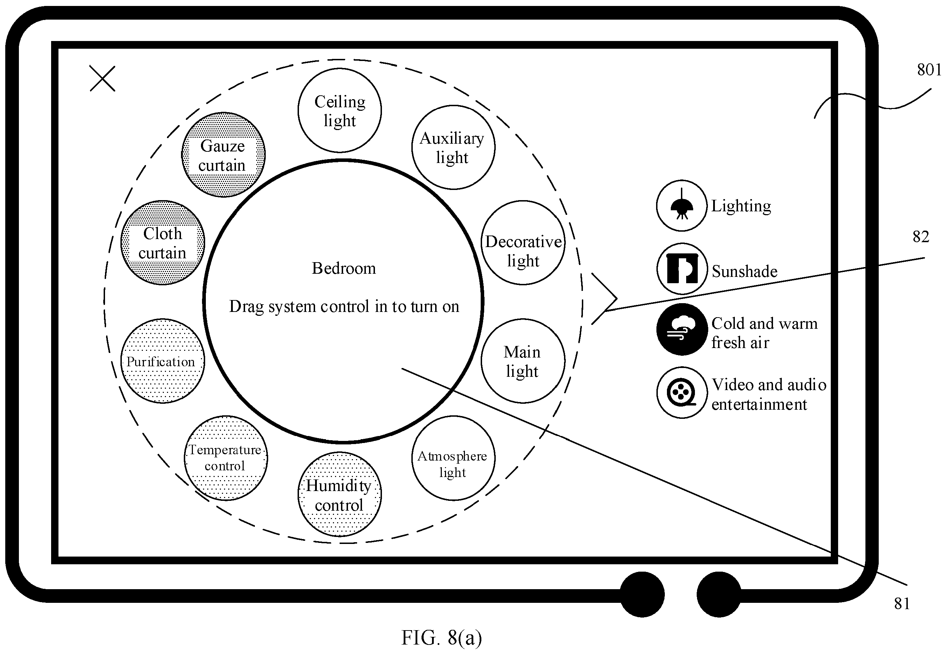

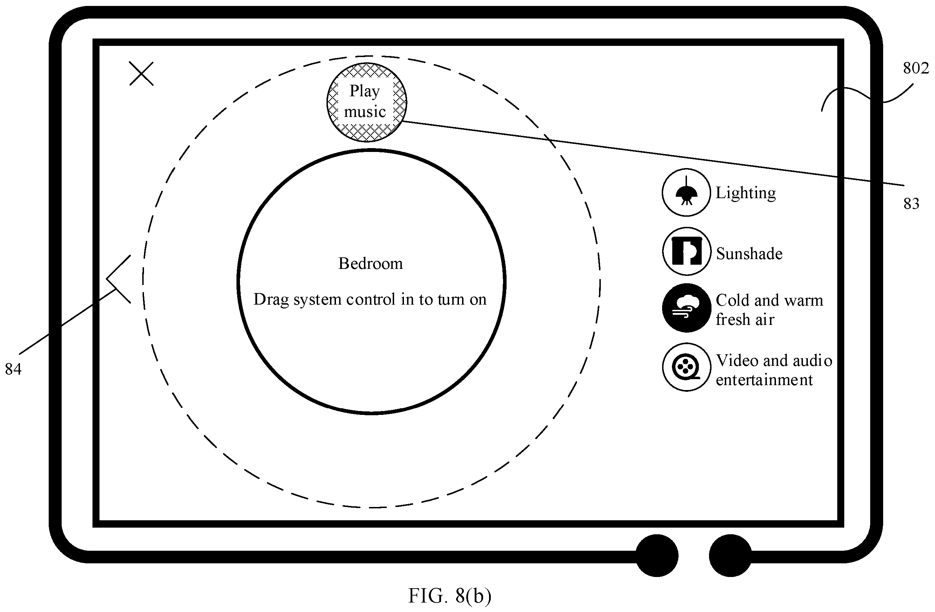

For example, as shown in an interface 801 in FIG. 8(a), a bedroom includes 11 electronic devices, and the preset quantity is 10. The smart home device control panel displays icons of 10 electronic devices outside a trigger area 81 according to a preset rule. Then, in response to an operation of tapping a page down control 82 by the user, the smart home device control panel may switch to display an icon of a remaining electronic device. As shown in an interface 802 in FIG. 8(b), after the smart home device control panel switches a page, an icon 83 of a remaining music playing device is displayed outside the trigger area. In response to an operation of tapping a page up control 84 by the user, the smart home device control panel may further switch to display a previous page, as shown in the interface 801. In some other examples, the user may alternatively implement a page turning effect by using a slide operation. For example, in response to a left slide operation of the user in a specific range in the interface 801 shown in FIG. 8(a), the smart home device control panel switches to an interface 802 shown in FIG. 8(b).

In this way, the smart home device control panel can display icons of a plurality of electronic devices in the current space, to control all electronic devices in the current space.

Optionally, when the quantity of electronic devices in the current space is less than or equal to the preset quantity, the smart home device control panel may not display the page down control or the page up control. Further, when the smart home device control panel displays a home page, the page up control may not be displayed or an inoperable page up control may be displayed; and when a last page is turned to, the page down control may not be displayed or an inoperable page down control may be displayed.

In some embodiments, after detecting an operation of dragging an electronic device icon outside the trigger area into the trigger area by the user, the smart home device control panel may indicate an electronic device corresponding to the electronic device icon to execute a corresponding user intention, for example, execute a turn-on operation.

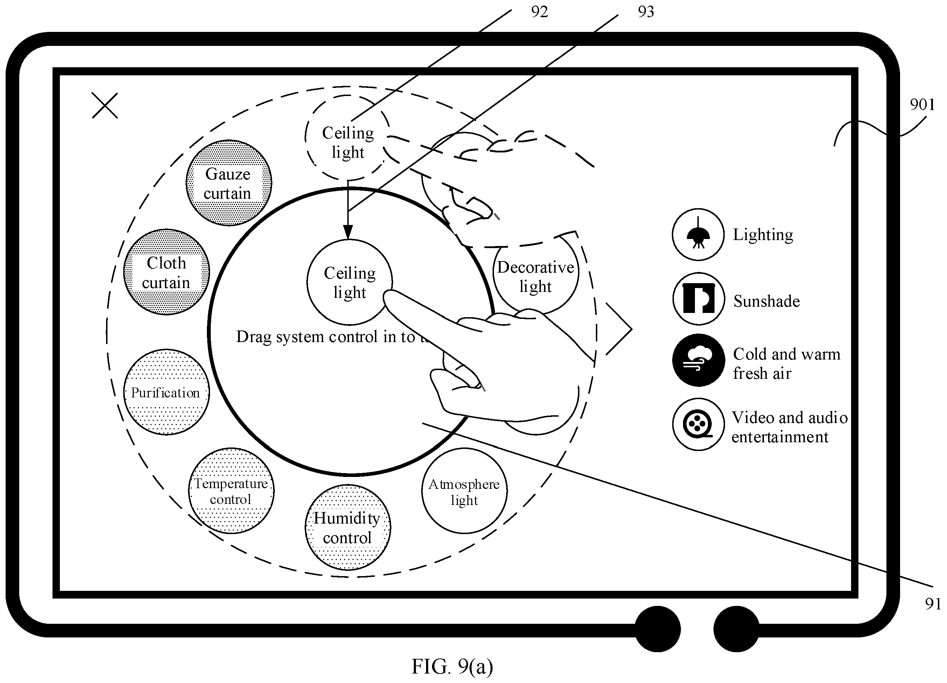

For example, as shown in a bedroom interface 901 shown in FIG. 9(a), an icon of an electronic device included in a bedroom is displayed around a trigger area 91, for example, a ceiling light icon 92. The smart home device control panel detects an operation of dragging the ceiling light icon 92 into the trigger area 91 in a direction shown by an arrow 93 by the user, and may determine that the user indicates to turn on a ceiling light corresponding to the ceiling light icon 92. In this case, the smart home device control panel may send a turn-on indication to the ceiling light, or send the turn-on indication to the ceiling light by using the server. Correspondingly, after the ceiling light is turned on according to the turn-on indication, the ceiling light may feed back a turn-on response to the smart home device control panel, or feed back the turn-on response to the smart home device control panel by using the server.

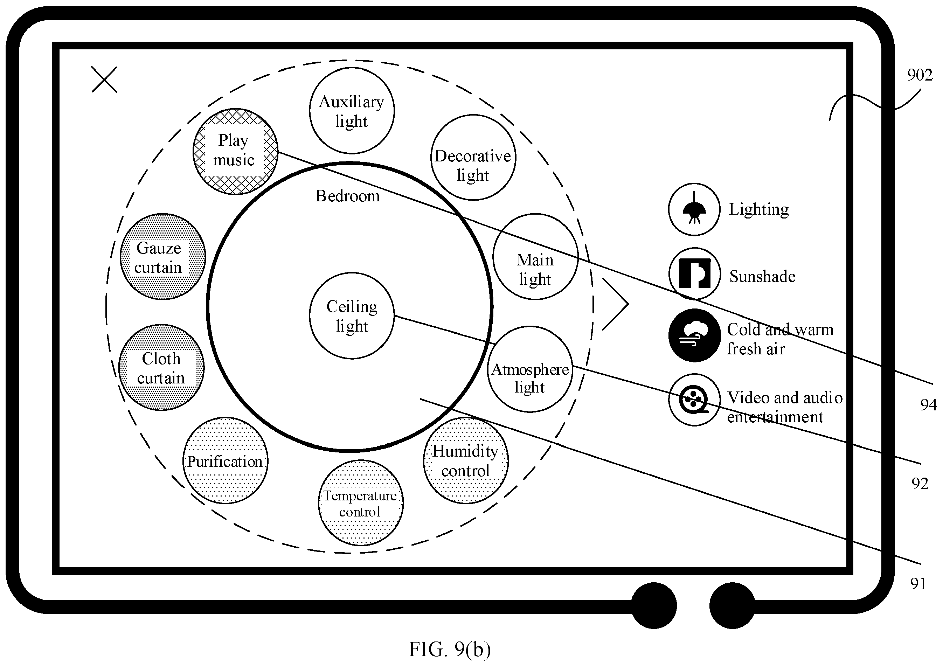

Then, the smart home device control panel determines, based on the turn-on response, that the ceiling light is turned on, and may display an interface 902 shown in FIG. 9(b). In the interface 902, the smart home device control panel may display the ceiling light icon 92 in the trigger area 91. An electronic device icon displayed in the trigger area 91 is used to prompt the user that an electronic device corresponding to the electronic device icon is turned on. Optionally, a style of the ceiling light icon 92 displayed in the trigger area 91 shown in FIG. 9(b) may be different from a style of the ceiling light icon 92 displayed outside the trigger area 91 shown in FIG. 9(a). The style includes but is not limited to a color, a shape, brightness, a font style, or the like.

Further, based on the scenario shown in FIG. 8(a) and FIG. 8(b), for example, the bedroom includes 11 devices, and the preset quantity is 10. After the smart home device control panel displays the ceiling light icon in the trigger area 91, a location used to display an electronic device icon is vacant in a current page. In this case, as shown in the interface 902 shown in FIG. 9(b), the smart home device control panel may display, in the current page, a music playing device icon 94 displayed in a next page.

In some other embodiments, after detecting an operation of dragging, by the user, an electronic device icon displayed in the trigger area to the outside of the trigger area for display, the smart home device control panel may indicate an electronic device corresponding to the electronic device icon to cancel execution of a corresponding user intention, for example, execute a turn-off operation.

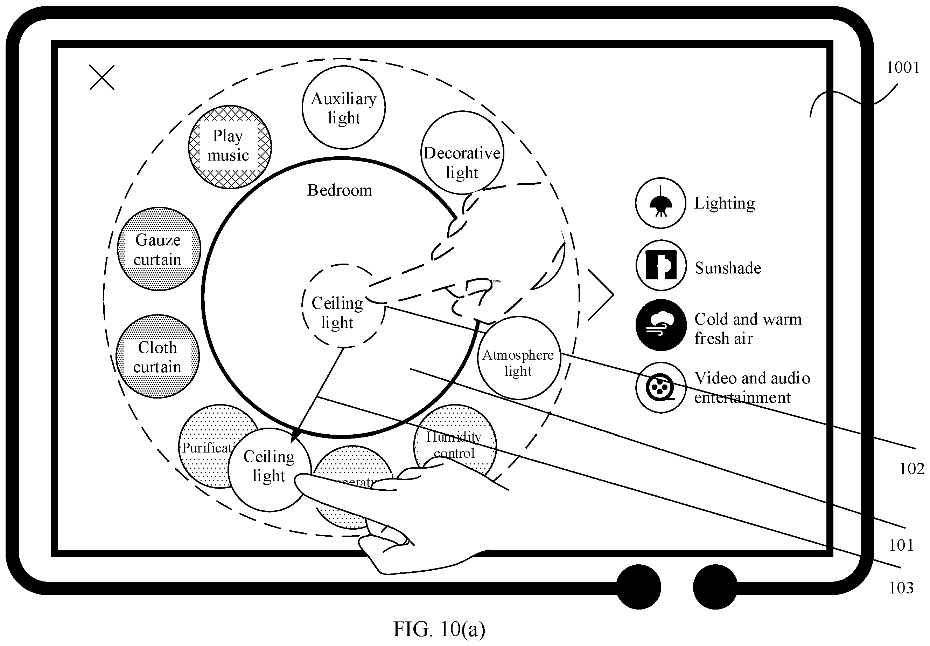

For example, in a bedroom interface 1001 shown in FIG. 10(a), a ceiling light icon 102 is displayed in a trigger area 101. After detecting an operation of dragging, by the user, the ceiling light icon 102 out of the trigger area 101 in a direction shown by an arrow 103, the smart home device control panel determines that the user indicates to turn off a ceiling light corresponding to the ceiling light icon 102. In this case, the smart home device control panel may send a turn-off indication to the ceiling light, or send the turn-off indication to the ceiling light by using the server. Correspondingly, after the ceiling light is turned off according to the turn-off indication, the ceiling light may feed back a turn-off response to the smart home device control panel, or feed back the turn-off response to the smart home device control panel by using the server.

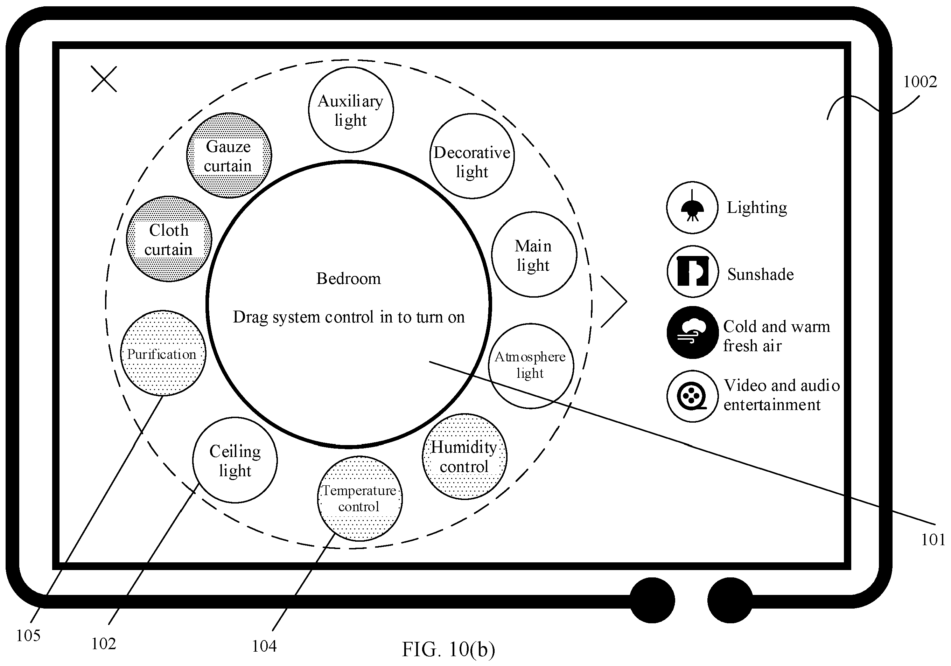

Then, the smart home device control panel determines, based on the turn-off response, that the ceiling light is turned off, and may display an interface 1002 shown in FIG. 10(b). In the interface 1002, the smart home device control panel may display the ceiling light icon 102 at location corresponding to the dragging operation of the user outside the trigger area 101. For example, if the direction corresponding to the operation of dragging the ceiling light icon 102 out of the trigger area 101 by the user is between a temperature control device icon 104 and a purification device icon 105, as shown in the interface 1002, the ceiling light icon 102 dragged by the user may be displayed between the temperature control device icon 104 and the purification device icon 105. An electronic device icon displayed outside the trigger area 101 is used to prompt the user that an electronic device corresponding to the electronic device icon is turned off.

In this way, the user may determine a status of the electronic device based on the electronic device icons displayed inside and outside the trigger area. In this way, an overview of statuses of electronic devices in the current space is implemented. In addition, it can be convenient for the user to control a corresponding electronic device, thereby reducing an operation difficulty of the user.

In the foregoing embodiment, a control process of the electronic device is described by using an example in which the trigger area is a circular range displayed in an area. It may be understood that the trigger area may alternatively be displayed in another shape or size. This is not limited in this embodiment of this application. In some embodiments, the trigger area may be further displayed as an identifier, for example, a trigger identifier. The smart home device control panel may display an electronic device icon around the trigger identifier. After detecting an operation of dragging, by the user, the electronic device icon to collide with the trigger identifier, the smart home device control panel may indicate a corresponding electronic device to turn on; and after detecting an operation of dragging, by the user, the electronic device icon to be separated from the trigger identifier, the smart home device control panel may indicate the corresponding electronic device to turn off. It may be understood that a shape and a size of the displayed trigger identifier are also not limited in this embodiment of this application. This is not described in the following.

In some embodiments, the smart home device control panel may control, in response to an operation of the user, an electronic device to perform a corresponding operation in real time, and may display a status of the electronic device in real time in an interface. Then, in response to an operation by the user of generating a scenario, the smart home device control panel may generate a corresponding real-time scenario based on a current electronic device status set by the user.

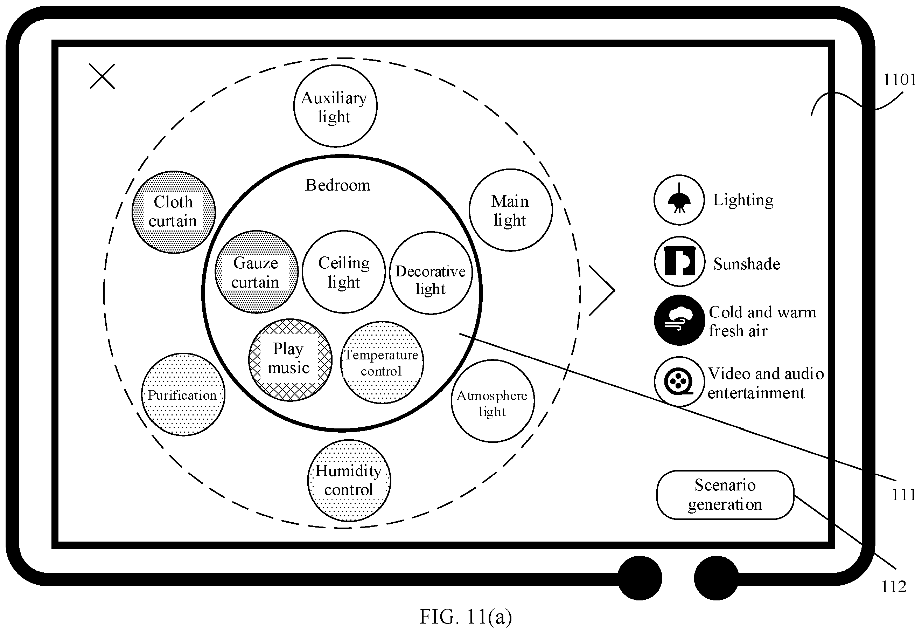

For example, in a bedroom device interface 1101 shown in FIG. 11(a), a bedroom includes 11 electronic devices. In response to an operation of the user, the smart home device control panel displays a gauze curtain icon, a ceiling light icon, a decorative light icon, a music playing device icon, and a temperature control device icon in a trigger area 111, where electronic devices corresponding to the electronic device icons displayed in the trigger area 111 are turned on. In addition, an auxiliary light icon, a main light icon, an atmosphere light icon, a humidity control device icon, a purification device icon, and a cloth curtain icon are displayed outside the trigger area 111, and electronic devices corresponding to the electronic device icons displayed outside the trigger area 111 are turned off. The user may directly determine, based on display content of the interface 1101, whether a current status of the electronic device meets a requirement. If the requirement is met, the smart home device control panel may be indicated to generate a corresponding real-time scenario; or if the requirement is not met, the device status may continue to be adjusted in the interface 1101.

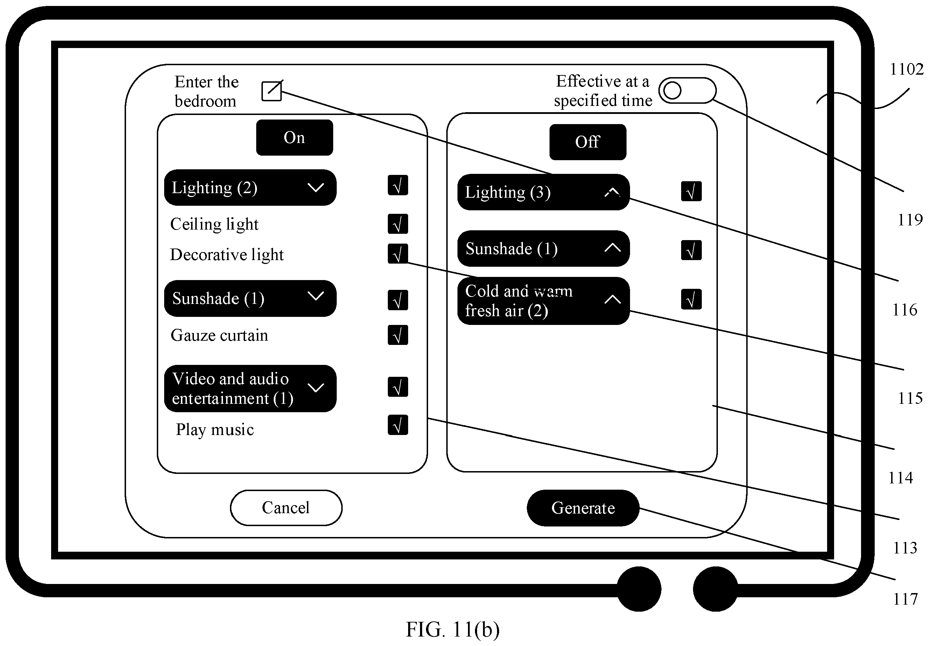

Correspondingly, after detecting, in a process of displaying the interface 1101, an operation of tapping, by the user, a scenario generation control 112, the smart home device control panel determines that the user indicates to generate a real-time scene in current space (namely, the bedroom), and the smart home device control panel may display a real-time scenario editing interface 1102 shown in FIG. 11(b).

For example, in the real-time scenario editing interface 1102, the smart home device control panel may display an electronic device (for example, corresponding to the electronic device icon displayed in the trigger area 111) shown by a reference numeral 113 that is in a turn-on state in the current space, and display an electronic device (for example, corresponding to the electronic device icon displayed outside the trigger area 111) shown by a reference numeral 114 that is in a turn-off state in the current space. The user may select or deselect an electronic device in the real-time scenario editing interface 1102 based on a requirement. The smart home device control panel can correspondingly modify the scenario based on the selection or deselection operation of the user. For example, after detecting an operation of deselecting the decorative light 115 by the user, the smart home device control panel may determine that the currently set scenario includes not turning on the decorative light.

Optionally, in the interface 1102, the smart home device control panel may further modify a name of the currently created scenario in response to an operation of tapping a scenario name editing control 116 by the user. For example, a scenario name is "Enter the bedroom".

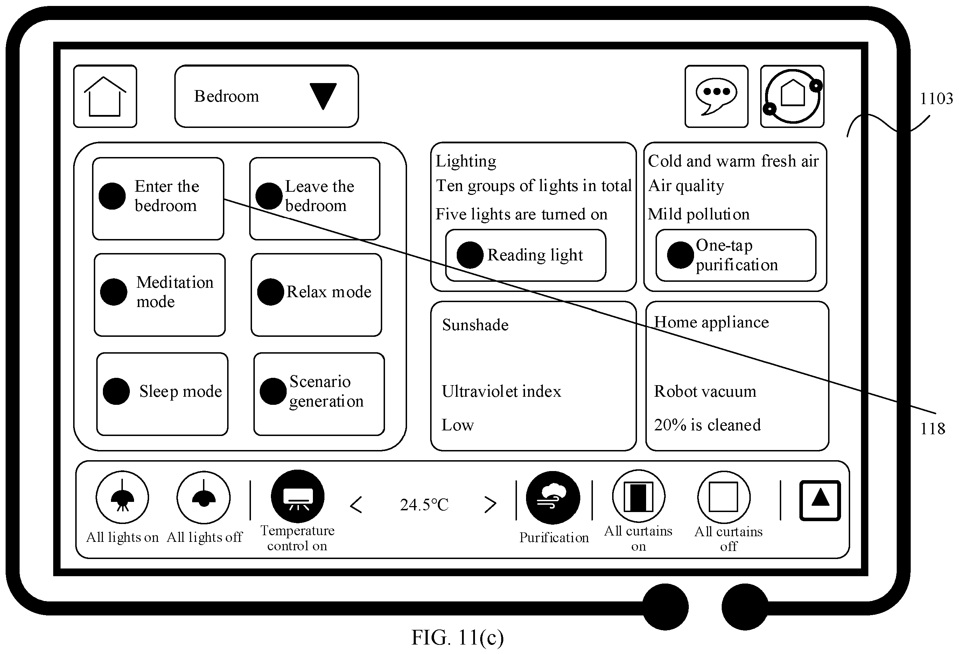

Then, after detecting an operation of tapping a generation control 117 by the user, the smart home device control panel may generate a corresponding real-time scenario. Subsequently, as shown in an interface 1103 shown in FIG. 11(c), a scenario included in the bedroom displayed by the smart home device control panel includes a corresponding "Enter the bedroom" scenario 118 edited in the interface 1102.

In this way, the user can create and edit a smart home device scenario by using a simple operation. In a scenario editing process, the user can intuitively view the electronic device status on the smart home device control panel and set the scenario based on the electronic device status. In this way, a requirement of scenario setting on a logic capability of the user is reduced, a scenario setting difficulty is effectively reduced, and user experience is improved.

In some embodiments, as described above in FIG. 6, concepts of space and subsystem exist in parallel in the home. Therefore, after detecting an operation of indicating, by the user, to generate a scenario, the smart home device control panel may save, in at least two manners based on a subsystem status or a device status in the space, the scenario set by the user.

For example, the smart home device control panel generates a corresponding scenario based on a status of each subsystem in the current space. As shown in FIG. 6, the scenario includes whole-house security and bedroom security in a started security subsystem, and living room lighting and bedroom lighting included in a lighting subsystem.

For example, in the scenario shown in FIG. 11(a) to FIG. 11(c), the smart home device control panel generates, in response to an operation of the user, a scenario corresponding to the interface 1101 shown in FIG. 11(a). Optionally, the smart home device control panel generates and saves the scenario based on a current status of each subsystem. The saved scenario includes turning on bedroom ceiling light lighting and bedroom decorative light lighting in the lighting subsystem, turning on a bedroom gauze curtain in the sunshade subsystem, turning on bedroom temperature control in the cold and warm fresh air subsystem, and turning on bedroom music playing in the audio and video entertainment subsystem; and turning off bedroom auxiliary light lighting, bedroom main light lighting, and bedroom atmosphere light lighting in the lighting subsystem, turning off a bedroom cloth curtain in the sunshade subsystem, and turning off bedroom purification and bedroom humidity control in the cold and warm fresh air subsystem.

For another example, the smart home device control panel generates a corresponding scenario based on a status of each electronic device in current space. As shown in FIG. 6, the scenario includes bedroom security and bedroom lighting that are turned on in the bedroom.

For example, in the scenario shown in FIG. 11(a) to FIG. 11(c), the smart home device control panel generates, in response to an operation of the user, a scenario corresponding to the interface 1101 shown in FIG. 11(a). Optionally, the smart home device control panel generates and saves the scenario based on a status of each electronic device in the current bedroom. The saved scenario includes turning on a ceiling light, a decorative light, a gauze curtain, a temperature control device, and a music playing device in the bedroom, and turning off an auxiliary light, a main light, an atmosphere light, a cloth curtain, a purification device, and a humidity control device in the bedroom.

In this way, the smart home device control panel may save the scenario set by the user in a preconfigured scenario saving manner. Subsequently, the smart home device control panel may indicate, based on scenario content, a corresponding electronic device to execute a scenario task.

Optionally, after scenario creation is completed, the smart home device control panel may send the created scenario to the server. Subsequently, the server may control, based on setting content of the scenario, a corresponding electronic device to execute a corresponding scenario task.

Optionally, after logging in to an account, an electronic device (for example, a smart home device control panel or a mobile phone) in a smart home system may also obtain corresponding scenario content from the server. Then, the electronic device may indicate, based on setting content of the scenario, a corresponding electronic device to execute a corresponding scenario task, or receive editing of the scenario by the user.

In some embodiments, the smart home device control panel may set an effective time of the scenario based on an operation of the user. For example, the scenario takes effect only once, or the scenario takes effect at a scheduled time according to a preset period.

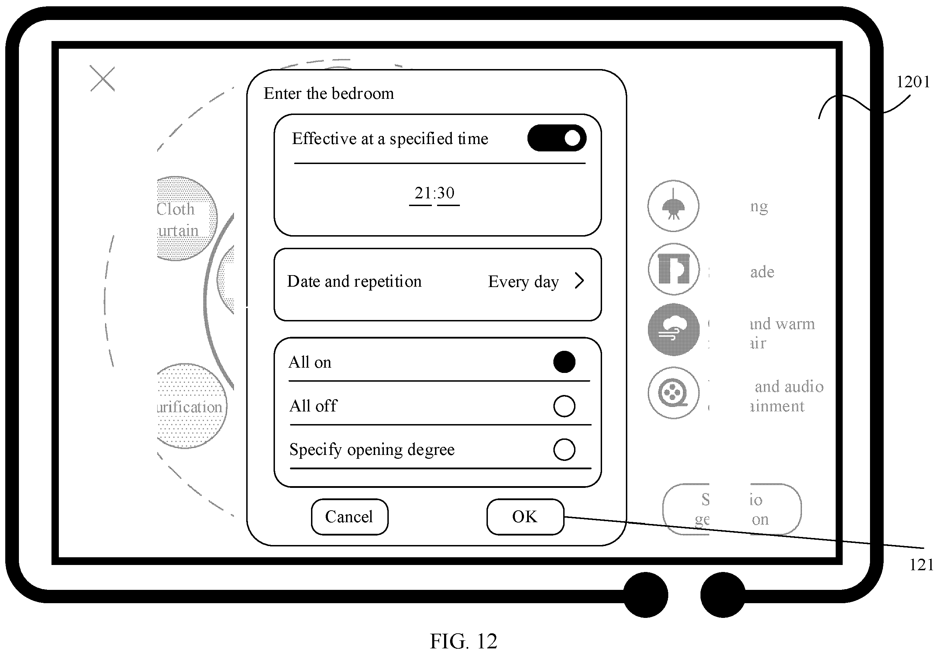

For example, as shown in FIG. 11(b), after detecting, in the scenario setting process, an operation of tapping a scheduled effective control 119 by the user, the smart home device control panel may display an interface 1201 shown in FIG. 12. In the interface 1201, the smart home device control panel may set, based on a setting operation of the user, information such as an effective time of a current scenario and whether the current scenario is repeated. As shown in the interface 1201, after detecting an operation of tapping a confirmation control 121 by the user, the smart home device control panel may determine that setting of the effective time of the scenario is completed.

The following describes in detail a control process of the electronic device in a scenario setting process before the scenario is generated. It may be understood that, after the electronic device completes control, the smart home device control panel may create a corresponding scenario according to the methods shown in FIG. 11(a) to FIG. 11(c) and FIG. 12.

In some embodiments, in response to an operation performed by the user on the electronic device icon displayed in the trigger area, the smart home device control panel may display an electronic device parameter adjustment interface corresponding to the electronic device icon, to quickly adjust a parameter of the electronic device.

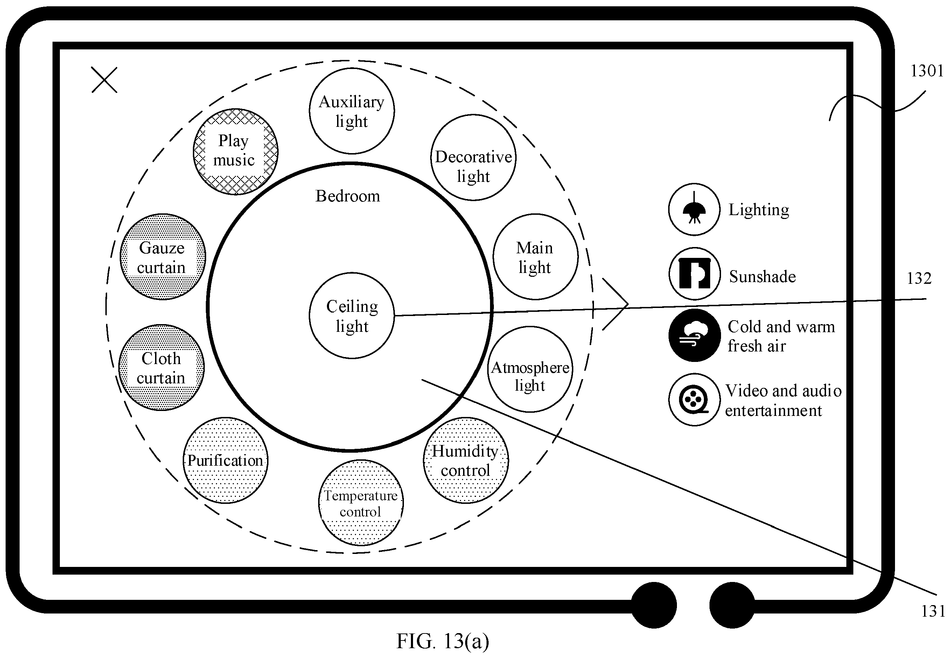

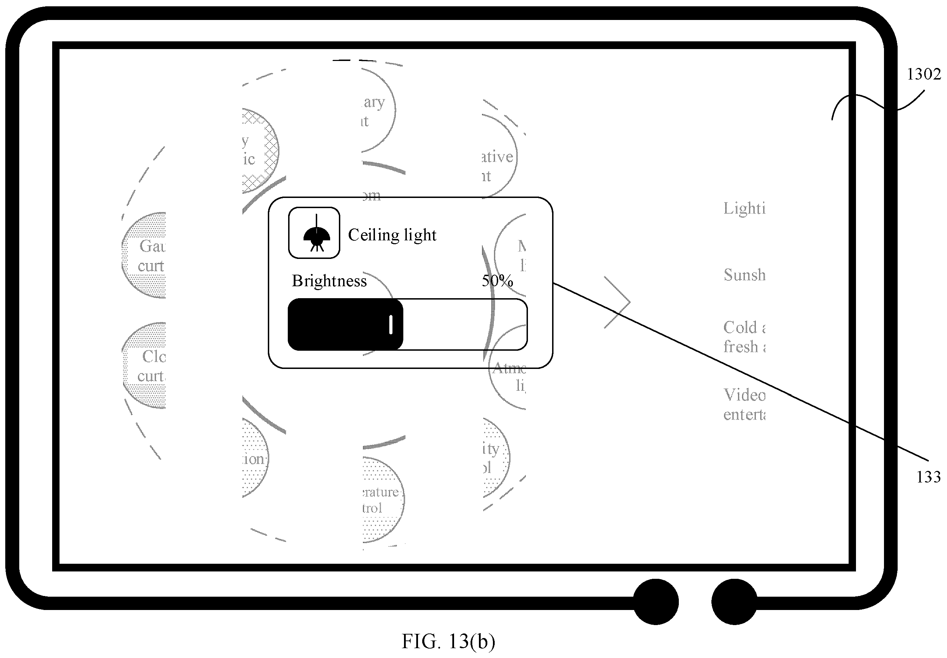

For example, as shown in an interface 1301 shown in FIG. 13(a), a ceiling light icon 132 is displayed in a trigger area 131. After detecting an operation of touching and holding the ceiling light icon 132 by the user, the smart home device control panel determines that the user needs to adjust a parameter of a ceiling light corresponding to the ceiling light icon, and may display an interface 1302 shown in FIG. 13(b). In the interface 1302, the smart home device control panel displays a ceiling light brightness adjustment control 133, and in response to an operation performed by the user on the ceiling light brightness adjustment control 133, the smart home device control panel may send a corresponding parameter setting indication to the ceiling light, for example, indicate the ceiling light to adjust brightness to 50% brightness.

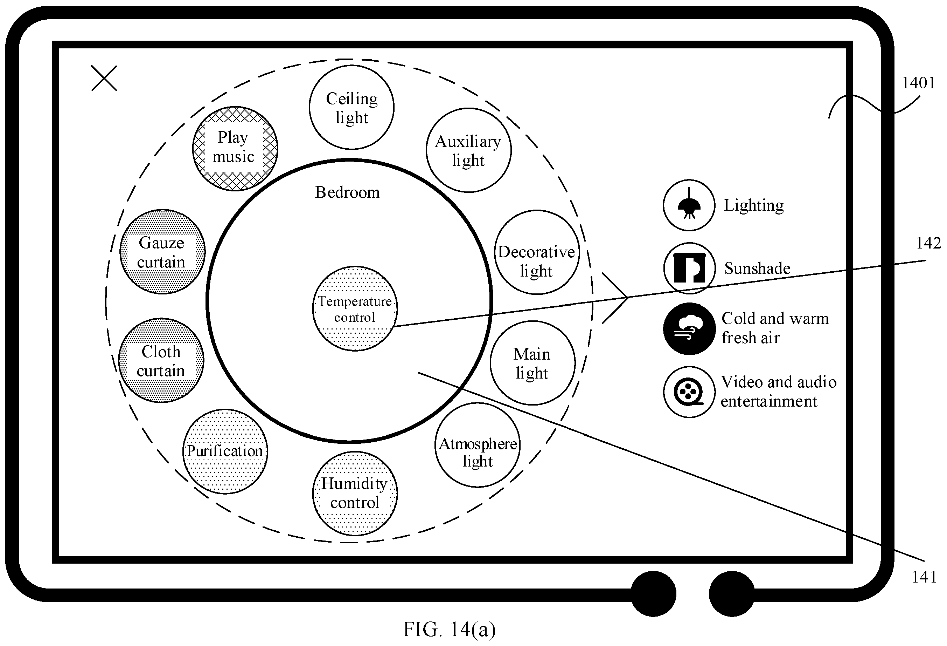

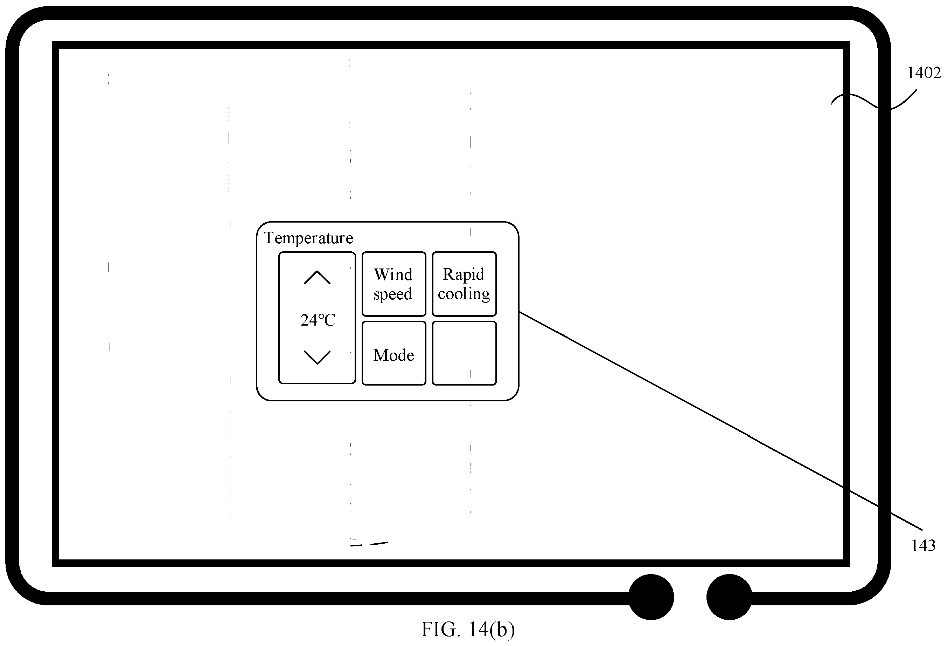

For another example, as shown in an interface 1401 shown in FIG. 14(a), a temperature control device icon 142 is displayed in a trigger area 141. After detecting an operation of touching and holding a temperature control device icon 142 by the user, the smart home device control panel determines that the user needs to adjust a parameter of a temperature control device corresponding to the temperature control device icon 142, and may display an interface 1402 shown in FIG. 14(b). In the interface 1402, the smart home device control panel displays a temperature control device parameter adjustment control 143, and in response to an operation performed by the user on the temperature control device parameter adjustment control 143, the smart home device control panel may send a corresponding parameter setting indication to the temperature control device, for example, indicate the temperature control device to adjust bedroom temperature to 24 degrees Celsius (°C).

In some embodiments, the smart home device control panel sets, in the scenario setting process, a configuration file of an electronic device in a corresponding scenario based on a device parameter of each currently turned-on electronic device. Therefore, after the scenario is triggered, the smart home device control panel may indicate, based on the configuration file, a corresponding electronic device to perform an operation based on a corresponding device parameter.

For example, in the scenario shown in FIG. 13(a) and FIG. 13(b), the smart home device control panel generates a scenario including turning on the ceiling light, and sets brightness obtained after the ceiling light is turned on in the scenario to 50% brightness. Subsequently, in a scenario implementation process, the smart home device control panel indicates the ceiling light to turn on, and a device parameter is 50% brightness.

For another example, in the scenario shown in FIG. 14(a) and FIG. 14(b), the smart home device control panel generates a scenario including turning on the temperature control device, and sets bedroom control temperature obtained after the temperature control device is turned on in the scenario to 24°C. Subsequently, in the scenario implementation process, the smart home device control panel indicates the temperature control device to turn on, and a device parameter is 24°C.

In this way, the smart home device control panel may generate a corresponding real-time scenario based on a real-time electronic device status (for example, including whether the electronic device is turned on or not, or a device parameter). Therefore, the user can intuitively perceive whether the electronic device status obtained after scenario setting is a required device status, thereby improving user experience.

In some embodiments, the smart home device control panel displays an icon of the electronic device in the current space outside the trigger area according to a preset rule. The preset rule includes, for example, sequentially displaying electronic device icons outside the trigger area in a preset direction and by using a preset start location as a start point according to a priority sequence of subsystems and a priority sequence of electronic devices in the subsystem. Optionally, the priority sequence may be a priority sequence preconfigured by a vendor, or may be a priority sequence determined based on a quantity of use times of the user. This is not specifically limited in this embodiment of this application.

Optionally, the preset direction is, for example, a clockwise direction, and the preset start location is, for example, a display location right above the trigger area. The smart home device control panel may set the preset direction and the preset start location based on an operation of the user, so that the electronic device icon displayed outside the trigger area can better meet a user requirement.

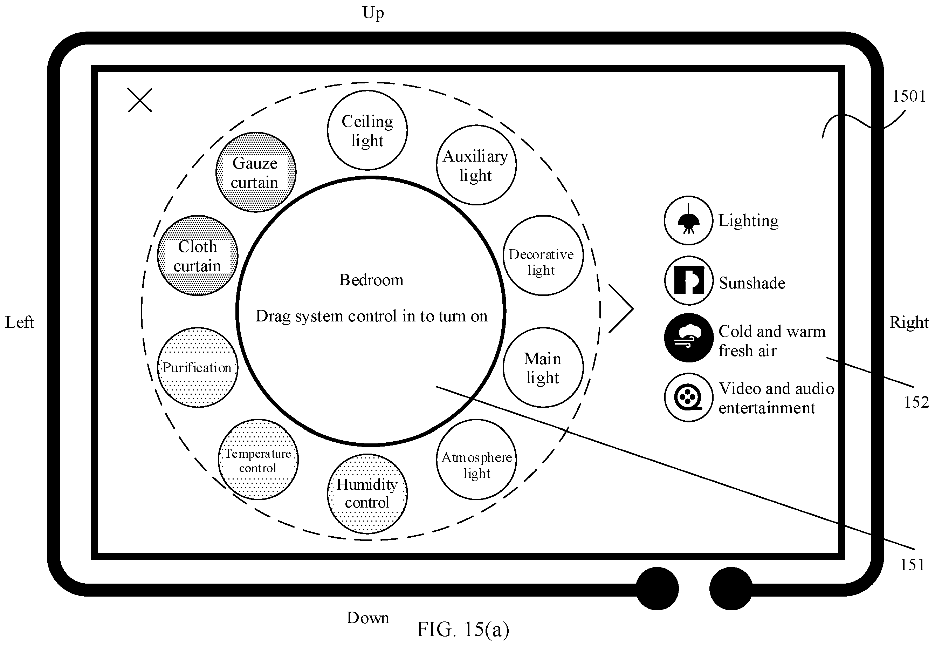

For example, as shown in an interface 1501 shown in FIG. 15(a), the smart home device control panel displays a preset quantity of electronic device icons (for example, 10) outside the trigger area. The priority sequence of the corresponding subsystems in the bedroom is as follows in descending order: the lighting subsystem, the cold and warm fresh air subsystem, the sunshade subsystem, and the audio and video entertainment subsystem. In this case, as shown in the interface 1501, an icon of an electronic device with a highest priority in the lighting subsystem, for example, the ceiling light icon, is displayed right above the trigger area 151. Then, icons of electronic devices in the bedroom are sequentially displayed clockwise according to the priority sequence of the subsystems and the priority sequence of the electronic devices in the subsystems.

In this way, the smart home device control panel sequentially displays electronic device icons, so that the user can conveniently search for a required electronic device icon, and an operation difficulty of the user is reduced.

It should be noted that, for "up", "down", "left", and "right" described in subsequent embodiments, refer to the orientation shown in FIG. 15(a). Details are not described subsequently again.

In addition, the priority sequence of the subsystems may be a random sequence, and the priority sequence of the electronic devices in the subsystems may also be a random sequence.

In some embodiments, after detecting an operation performed by the user on a subsystem index, the smart home device control panel may first display, starting from the preset start location, icons of electronic devices in a subsystem selected by the user. This avoids a case in which a quantity of electronic devices in space is excessively large, and the user needs to search for a required electronic device page by page, thereby simplifying an operation of the user.

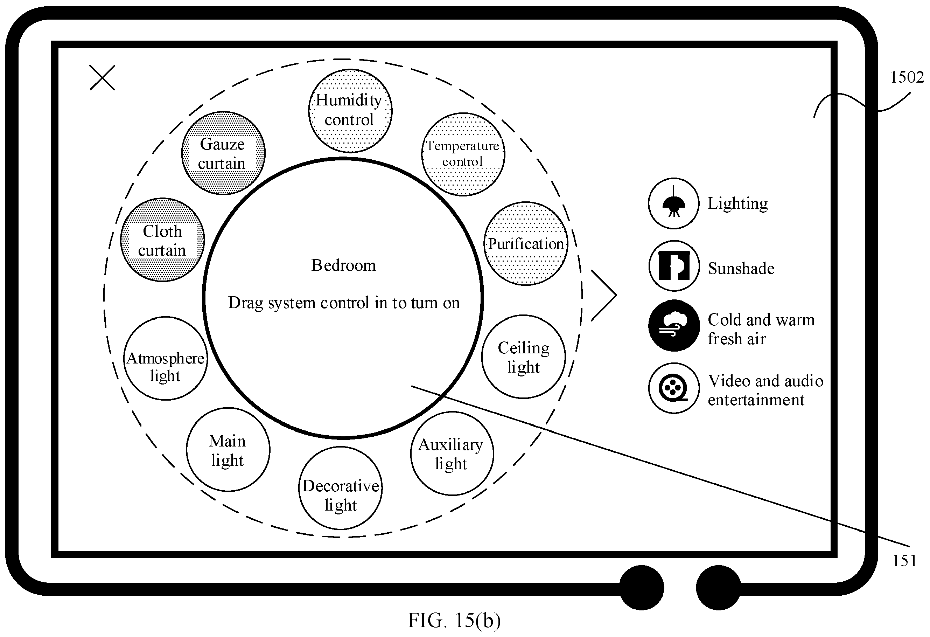

For example, as shown in the interface 1501 shown in FIG. 15(a), after detecting an operation of tapping a cold and warm fresh air subsystem control 152 in the subsystem index by the user, the smart home device control panel may display an interface 1502 shown in FIG. 15(b). In the interface 1502, the smart home device control panel displays, clockwise from the preset start location above the trigger area 151, an icon of an electronic device corresponding to the cold and warm fresh air subsystem, for example, a humidity control device icon, a temperature control device icon, and a purification device icon. Then, as shown in the interface 1502, according to a priority sequence of remaining subsystems and a priority sequence of electronic devices in the subsystems, corresponding electronic device icons are displayed clockwise outside the trigger area 151 after the purification device icon.

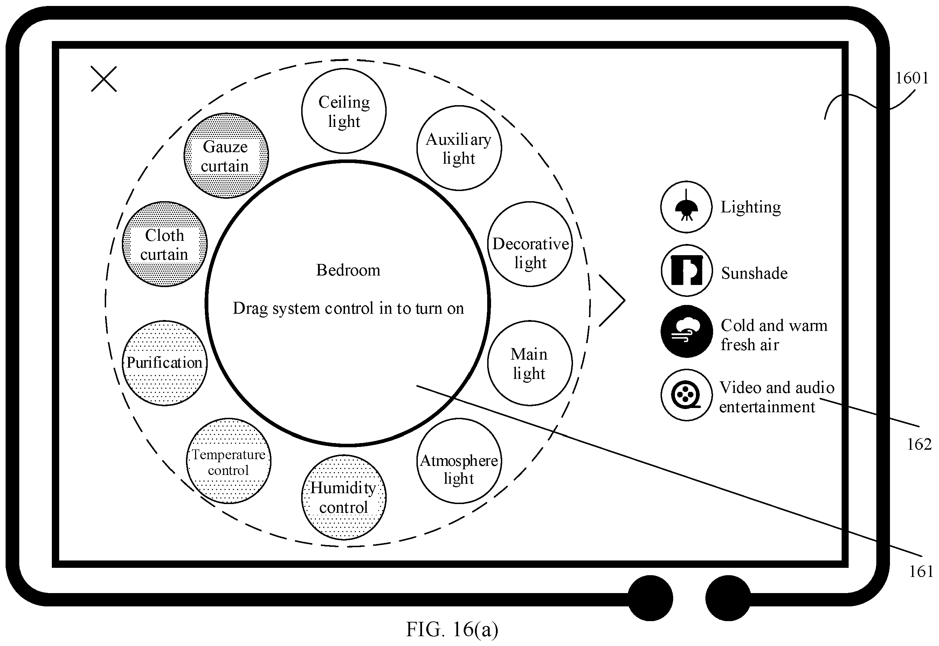

For another example, as shown in an interface 1601 shown in FIG. 16(a), the user cannot find an icon of a required electronic device in a page shown by the smart home device control panel, and may indicate, by using a page turning control, the smart home device control panel to turn pages to display another electronic device icon that is not displayed; or may directly select, by using the subsystem index, a subsystem corresponding to the required electronic device, and indicate the smart home device control panel to preferentially display icons of electronic devices in the selected subsystem in a current page, thereby reducing a difficulty of searching for the electronic device.

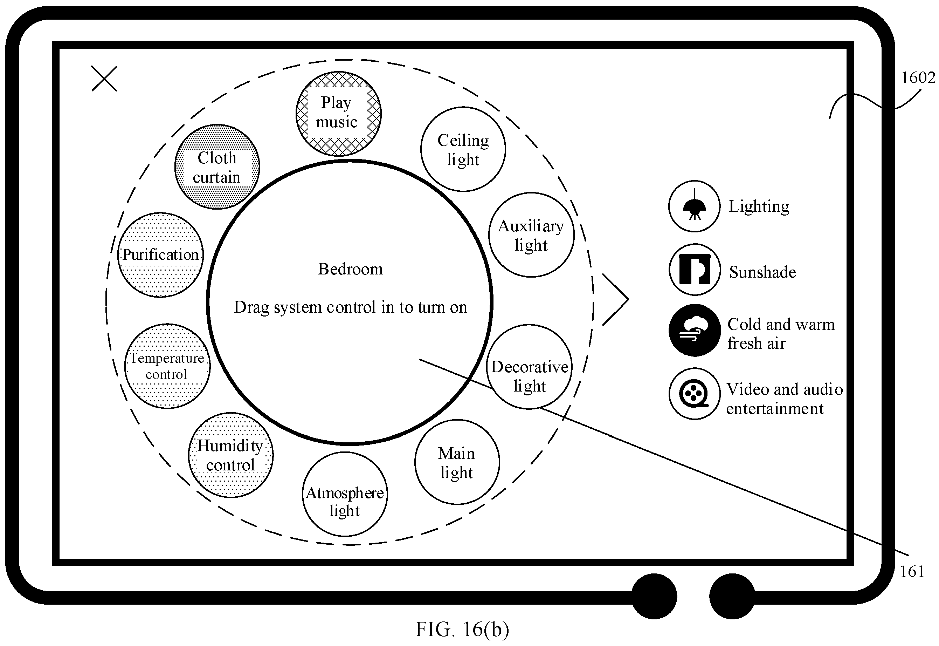

As shown in the interface 1601, an electronic device icon displayed outside the trigger area 161 by the smart home device control panel does not include an icon of an electronic device (for example, a music playing device) that the user needs to control. When detecting an operation of tapping, by the user, an audio and video entertainment subsystem control 162 corresponding to the electronic device that needs to be controlled, the smart home device control panel may display an interface 1602 shown in FIG. 16(b). In the interface 1602, the smart home device control panel displays, from above the trigger area 161, electronic device icons corresponding to the audio and video entertainment subsystem, for example, including a music playing device icon.

In some embodiments, the smart home device control panel displays, in a current page, an electronic device icon displayed in another page, and may display, in a next page, icons of a corresponding quantity of electronic devices with a lower priority in the current page, so that a quantity of electronic device icons displayed in the current page does not exceed a preset quantity.

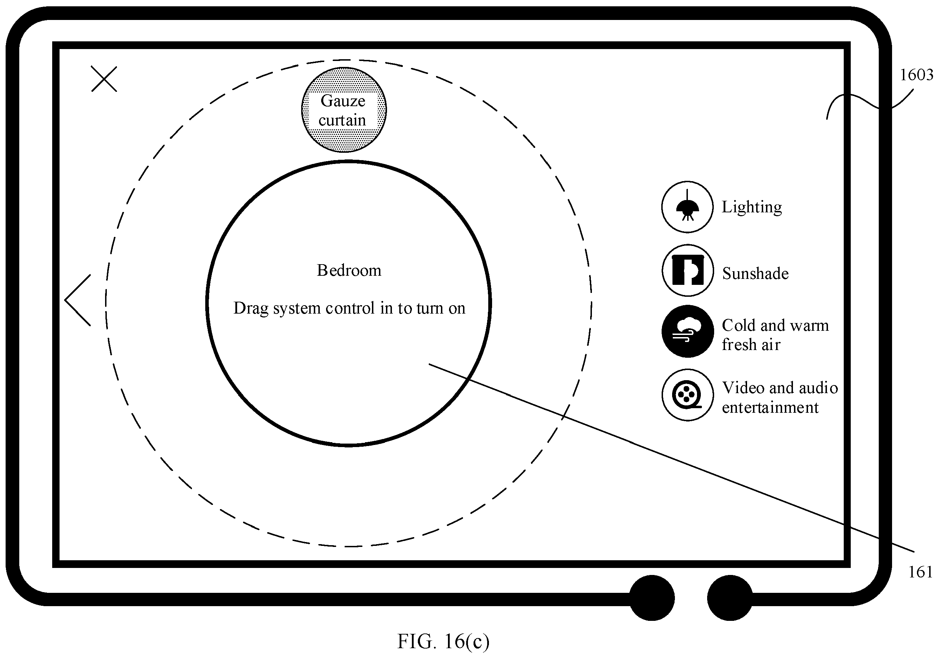

For example, as shown in FIG. 16(a), the smart home device control panel determines that the preset quantity is 10, and in the current interface 1601, an electronic device with a lowest priority is a gauze curtain. In this case, in response to an operation of tapping the audio and video entertainment subsystem control 162 by the user, for example, in the interface 1602 shown in FIG. 16(b), the smart home device control panel displays, above the trigger area 161, the music playing device icon corresponding to the audio and video entertainment subsystem displayed in another page. In addition, as shown in FIG. 16(c), the smart home device control panel displays, in an interface after the interface 1602, for example, in the interface 1603, an icon of the gauze curtain that is determined in the interface 1601 to have the lowest priority.

In some embodiments, the smart home device control panel may alternatively display, outside the trigger area, only an icon of an electronic device corresponding to a subsystem selected by the user or a default subsystem.

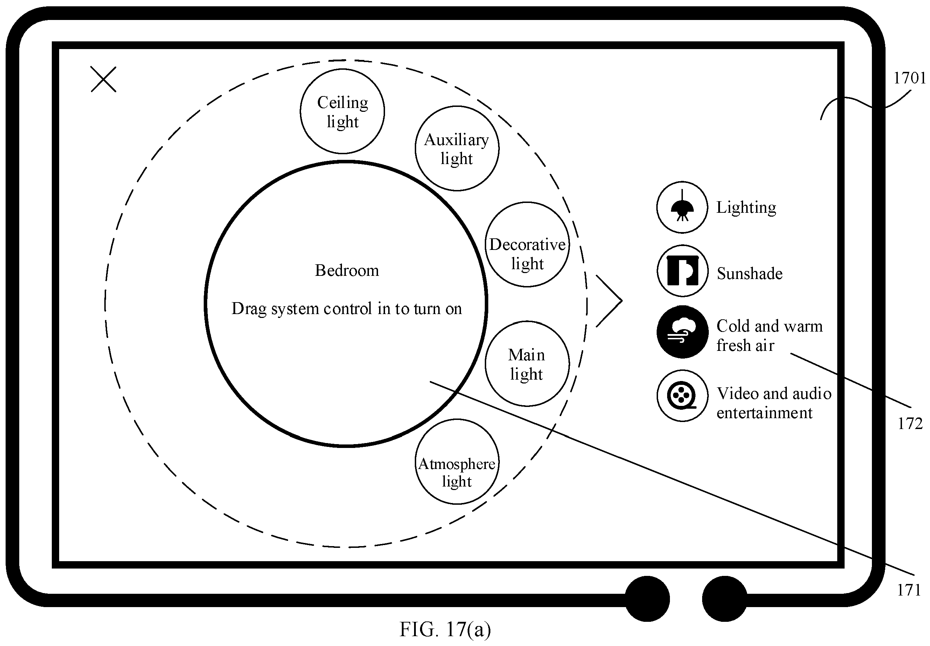

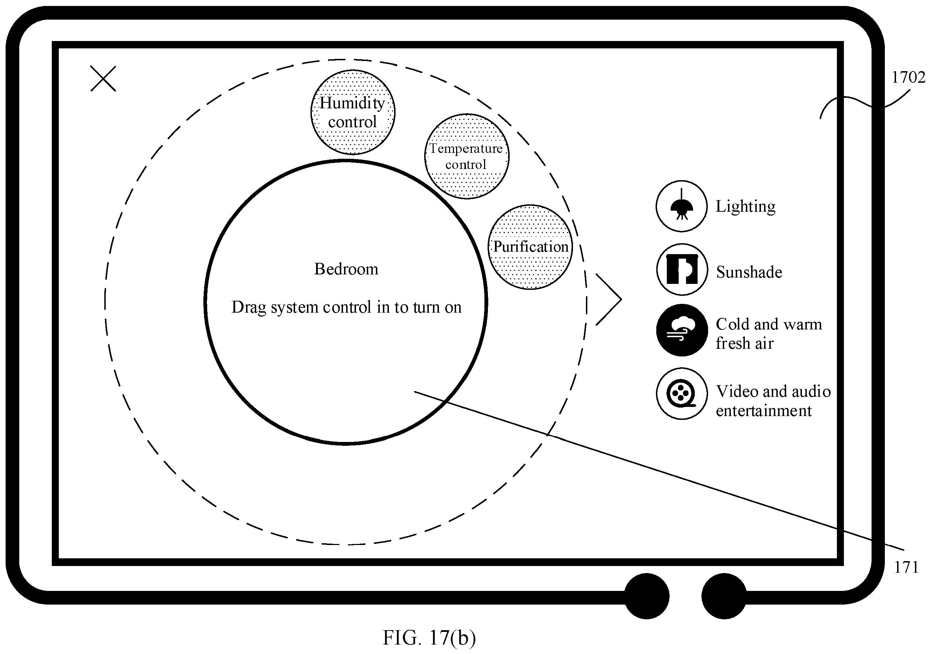

For example, as shown in an interface 1701 shown in FIG. 17(a), after displaying a bedroom device interface in response to an operation of the user, the smart home device control panel displays, by default outside the trigger area 171, icons of a plurality of electronic devices corresponding to a lighting subsystem with a highest priority. Then, the smart home device control panel detects an operation of tapping a cold and warm fresh air subsystem control 172 by the user, and may switch to display an interface 1702 shown in FIG. 17(b). In the interface 1702, an icon of an electronic device included in the cold and warm fresh air subsystem that is indicated by the user is displayed outside a trigger area 171. In some other examples, after displaying a bedroom device interface in response to an operation of the user, the smart home device control panel may not display any electronic device icon by default, or display an electronic device icon used when the user exits last time, or the like. After the user selects a corresponding subsystem, the smart home device control panel displays an icon of an electronic device corresponding to the subsystem.

In this way, it is convenient for the user to search for an electronic device included in a corresponding subsystem, and a control process of the electronic device is simplified.

In some embodiments, in response to an operation of dragging an icon of an electronic device out of a trigger area by the user, the smart home device control panel may indicate a corresponding electronic device to turn off, and display the icon of the electronic device in a corresponding location outside the trigger area. The display location of the electronic device icon dragged out of the trigger area may not be a display location of an icon of another electronic device in a subsystem to which the electronic device corresponding to the electronic device icon belongs. In this case, in response to an operation of selecting a subsystem by the user, an icon of an electronic device that corresponds to the subsystem selected by the user and that is displayed outside the trigger area may be automatically rearranged, so that the user can conveniently search for a required electronic device.

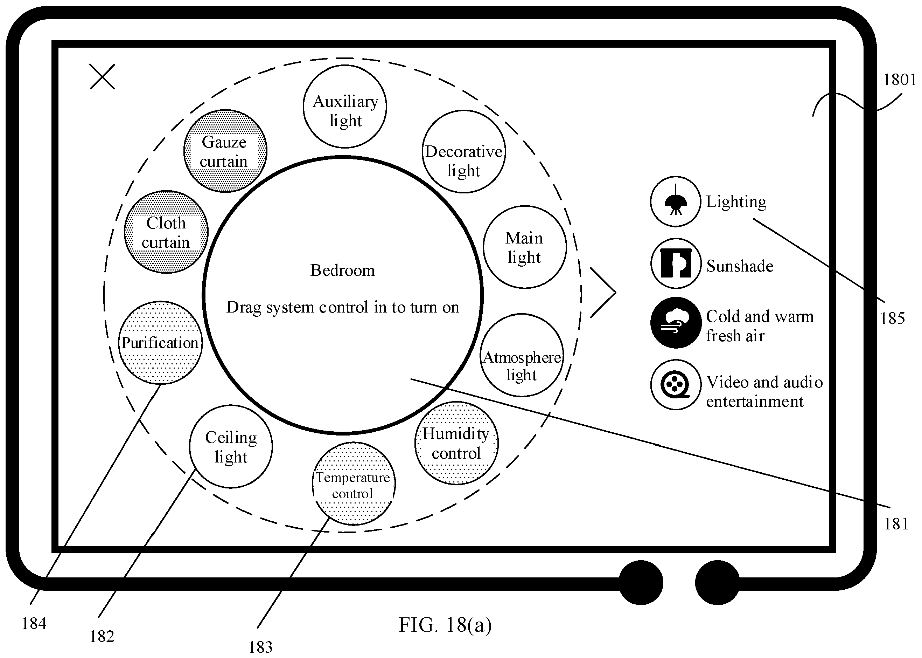

For example, as shown in an interface 1801 shown in FIG. 18(a), in response to an operation of dragging a ceiling light icon 182 out of a trigger area 181 by the user, the smart home device control panel indicates to turn off a ceiling light. The ceiling light icon 182 that is dragged to the outside is displayed at a display location, for example, between a temperature control device icon 183 and a purification device icon 184, corresponding to the operation of indicating to turn off the ceiling light. In this case, the ceiling light icon 182 is not displayed in a display area corresponding to a lighting subsystem to which the ceiling light icon 182 belongs (that is, the ceiling light icon 182 is not displayed together with other lighting device icons), but is displayed in a display area corresponding to a cold and warm fresh air subsystem (that is, the ceiling light icon 182 is displayed together with cold and warm fresh air device icons), which is inconvenient for the user to search for the ceiling light icon 182 again.

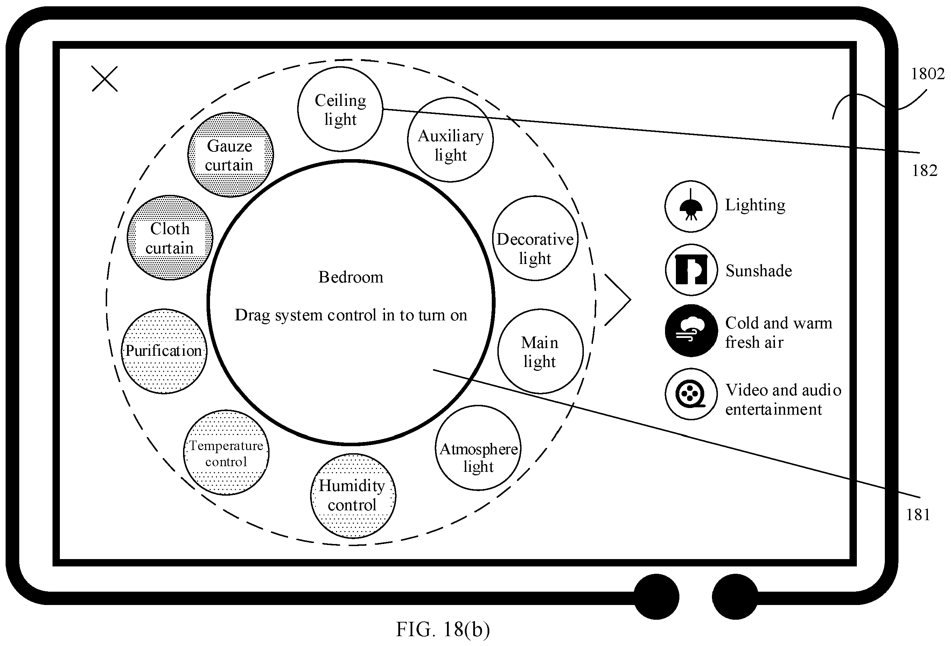

In this case, the user may directly indicate, by using the subsystem index, the smart home device control panel to display, from a preset start location, icons of electronic devices in a required subsystem. As shown in the interface 1801 shown in FIG. 18(a), the smart home device control panel detects an operation of tapping a lighting subsystem control 185 by the user, and may rearrange icons of lighting devices according to a priority sequence of electronic devices in the lighting subsystem, to display an interface 1802 shown in FIG. 18(b). In the interface 1802, the electronic device icons are displayed clockwise according to the priority sequence by using a preset start location above the trigger area 181 as a start point.

In this way, the smart home device control panel may rearrange and display lighting device icons that correspond to the lighting subsystem and that are out of order, so that the ceiling light icon is rearranged into the lighting device icons, and the user can conveniently search for a required lighting device.

In some embodiments, the smart home device control panel displays, in the trigger area, electronic device icons of a quantity less than or equal to a preset quantity of icons displayed in an inner circle. When a quantity of electronic devices that are turned on is greater than the preset quantity of icons displayed in the inner circle, the smart home device control panel may switch between different trigger area pages in response to a page turning operation of the user, and display an icon of a corresponding electronic device that is turned on.

Optionally, when the quantity of electronic device icons displayed in the trigger area is less than or equal to the preset quantity of icons displayed in the inner circle, the smart home device control panel may not display a page turning control or display an inoperable page turning control. When a first page of the trigger area is displayed, the smart home device control panel may not display a page up control or display an inoperable page up control. When the page is turned to a last page of the trigger area, the smart home device control panel may not display a page down control or display an inoperable page down control.

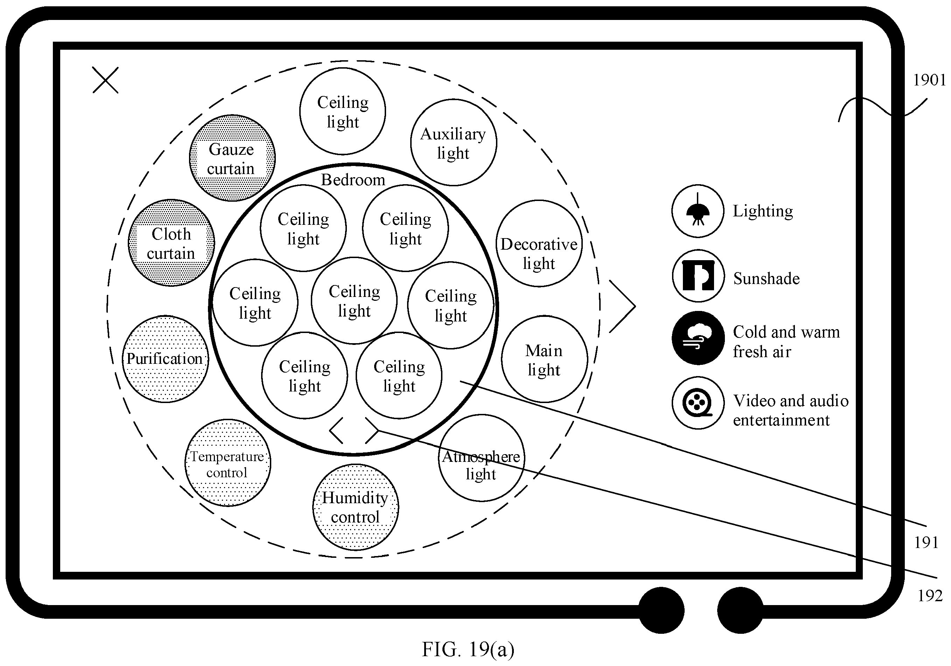

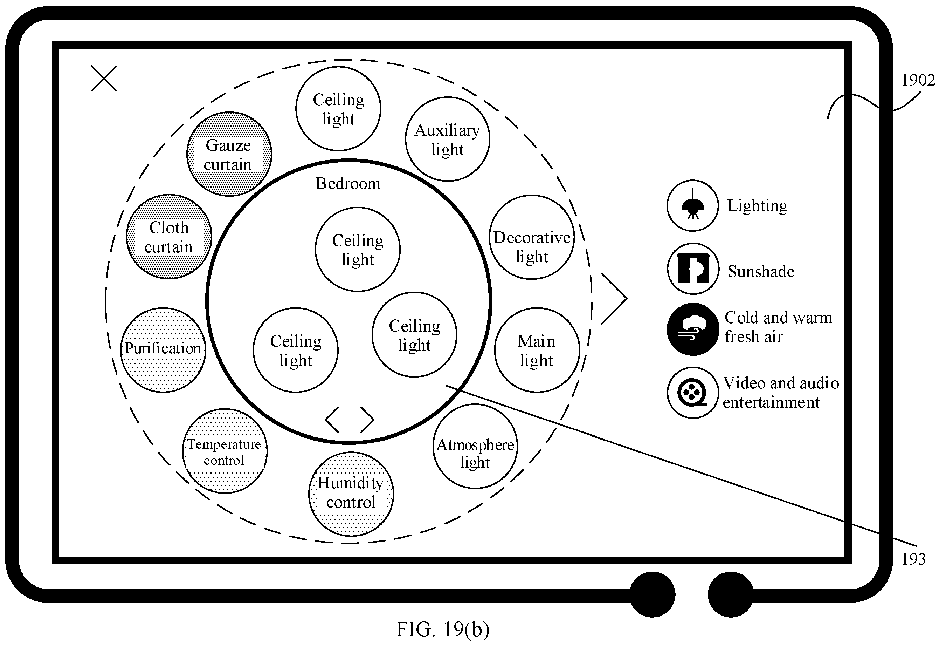

For example, as shown in an interface 1901 shown in FIG. 19(a), a preset quantity of icons displayed in an inner circle is 7, and the smart home device control panel may display seven or less electronic device icons in a trigger area 191. As shown in the interface 1901, seven ceiling light icons are displayed in the trigger area 191. After detecting an operation of tapping a page down control 192 by the user, the smart home device control panel may display an interface 1902 shown in FIG. 19(b). For example, if a quantity of electronic devices that are currently turned on in a bedroom is 10, the smart home device control panel may display, in a trigger area 193 in the interface 1902, icons of remaining three electronic devices that are turned on and that are not displayed in the trigger area 191 in the interface 1901.

For example, an effect similar to page turning may alternatively be implemented in another operation manner. For example, the user may slide the trigger area 191 (for example, slide up, slide down, slide left, or slide right), to trigger the trigger area 191 to display an icon of another electronic device. The user feels similar to that other electronic device icons are hidden below a non-trigger area, and these hidden electronic device icons may be displayed by sliding the trigger area 191, which is similar to an existing operation like sliding up a web page.

It should be noted that the trigger area 191 and the trigger area 193 are different pages of a same trigger area. For ease of description, different reference numerals are set.

In this way, by presetting the quantity of displayed icons in the inner circle, the smart home device control panel can clearly display the electronic device icon in the trigger area, so that the user can conveniently search for the electronic device icon. In addition, page switching in the trigger area may be implemented. The user may determine, by switching pages of the trigger area, an electronic device that has been turned on in current space, to learn a status of the electronic device and improve user experience.

In some other embodiments, when a quantity of electronic device icons displayed in the trigger area is greater than or equal to a specific quantity, the smart home device control panel displays more electronic device icons in a manner like shrinking an icon, superimposing icons, or using 3-dimensional space. For example, as shown in FIG. 19(a), if the user continues to drag an icon "decorative light", the icon in the trigger area 191 may be smaller, and the decorative light icon may remain unchanged or may be smaller; or the decorative light icon may be superimposed on a "ceiling light" icon for display; or the trigger area displays an icon of an electronic device in a 3-dimensional space manner, and the trigger area 191 may be rotated in a manner similar to rotating a "sphere". In this way, more icons are displayed.

In some embodiments, the smart home device control panel detects an operation of dragging an electronic device icon by the user into the trigger area, determines that a quantity of electronic device icons displayed in the current trigger area is less than a preset quantity of icons displayed in the inner circle, and may display, in a current page of the trigger area, the electronic device icon operated by the user.

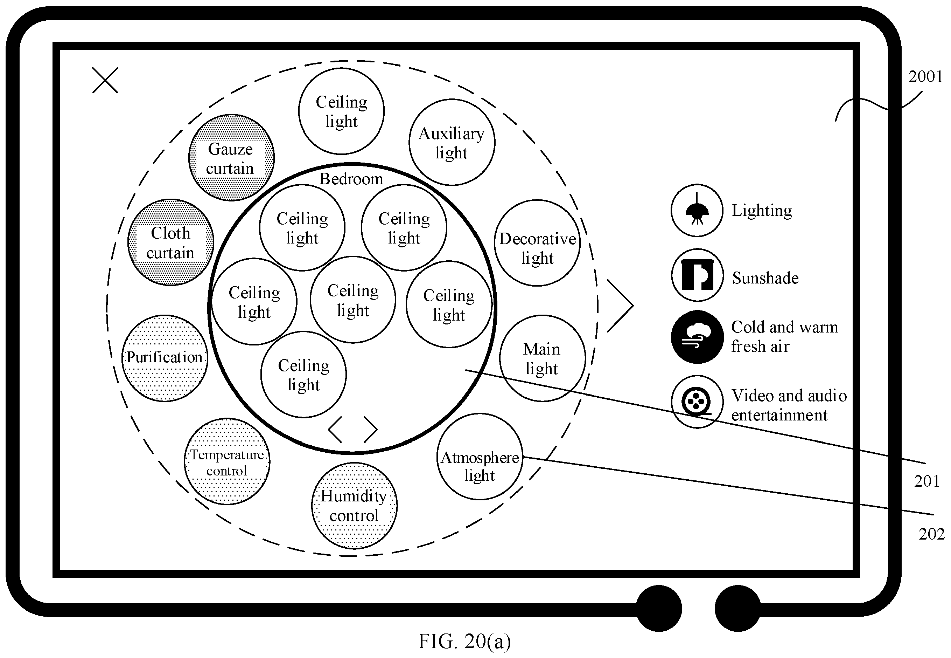

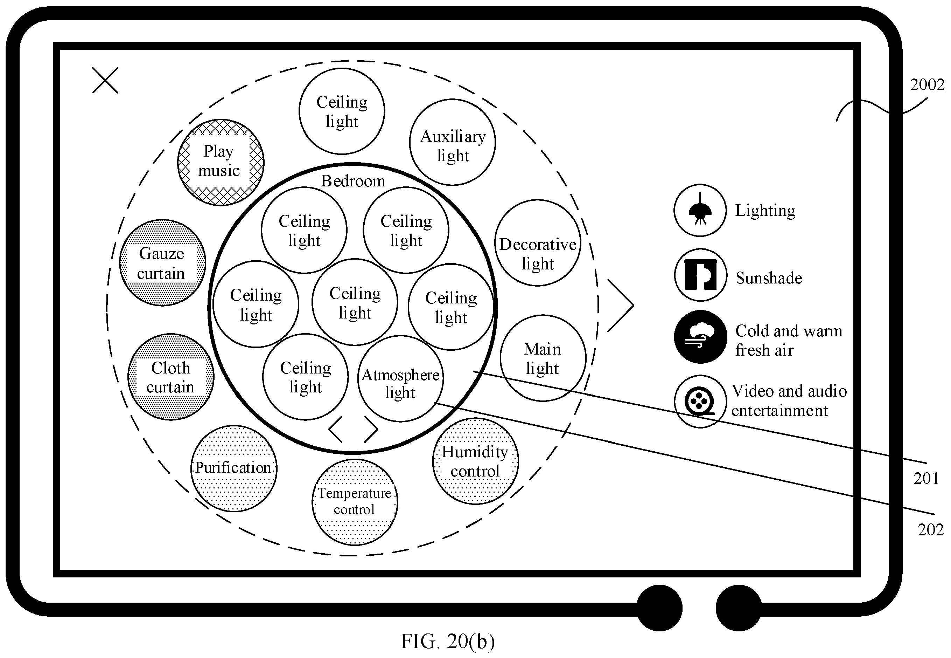

For example, the preset quantity of icons displayed in the inner circle is 7. As shown in an interface 2001 shown in FIG. 20(a), the smart home device control panel displays six electronic device icons in a trigger area 201, where the quantity is less than the preset quantity of icons displayed in the inner circle. The smart home device control panel detects an operation of dragging an atmosphere light icon 202 by the user into the trigger area 201, and determines that a location at which an electronic device icon can be displayed exists in a current page of the trigger area 201. As shown in an interface 2002 shown in FIG. 20(b), the smart home device control panel displays the atmosphere light icon 202 in the current page of the trigger area 201.

In some other embodiments, the smart home device control panel detects an operation of dragging an electronic device icon by the user into the trigger area, determines that a quantity of electronic device icons displayed in the current trigger area is equal to a preset quantity of icons displayed in the inner circle, and may display, in another page that has a vacant location in the trigger area, the electronic device icon operated by the user, and switches to display the page in the trigger area.

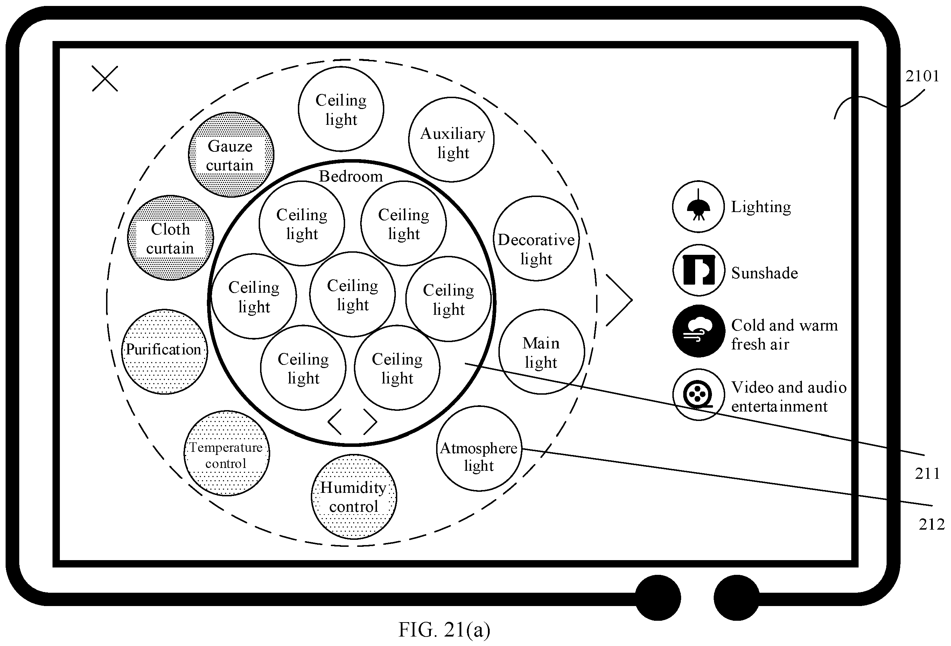

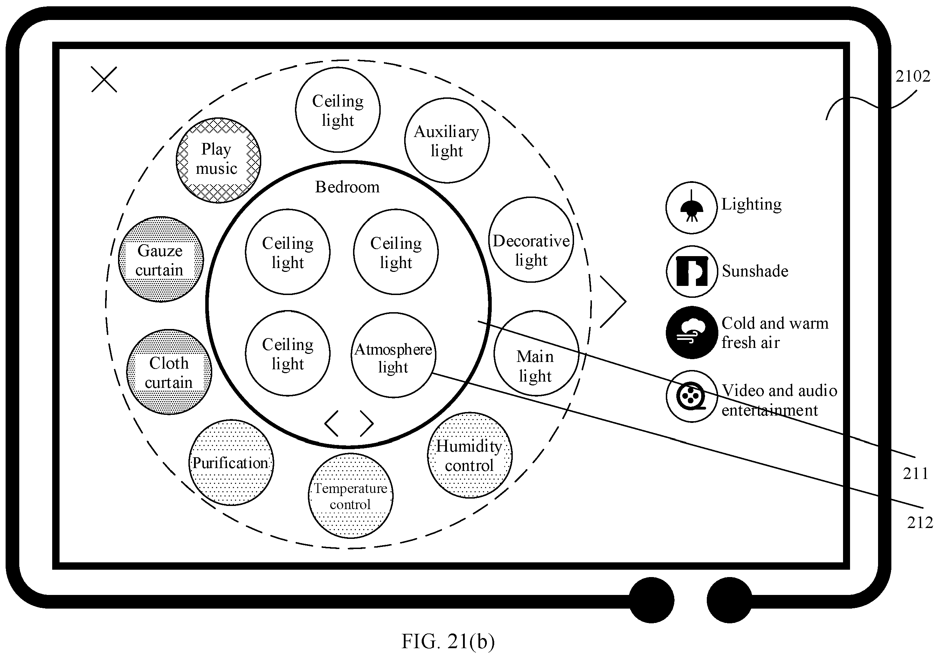

For example, the preset quantity of icons displayed in the inner circle is still 7. As shown in an interface 2101 shown in FIG. 21(a), the smart home device control panel displays seven electronic device icons in a trigger area 211, where the quantity is equal to the preset quantity of icons displayed in the inner circle. The smart home device control panel detects an operation of dragging an atmosphere light icon 212 by the user into the trigger area 211, and determines that a location at which an electronic device icon can be displayed does not exist in a current page of the trigger area 211. In this case, in an interface 2102 shown in FIG. 21(b), the smart home device control panel switches to display a page in which a vacant location exists in the trigger area 211, and displays an atmosphere light icon 212 in the page.

In some embodiments, a smart home device switches to display electronic devices in different pieces of space in response to an operation performed by the user on a home screen or a device control interface.

For example, as shown in FIG. 5, the smart home device control panel detects an operation of tapping the room switching control 51 by the user, and may switch to display interfaces corresponding to electronic devices in different rooms.

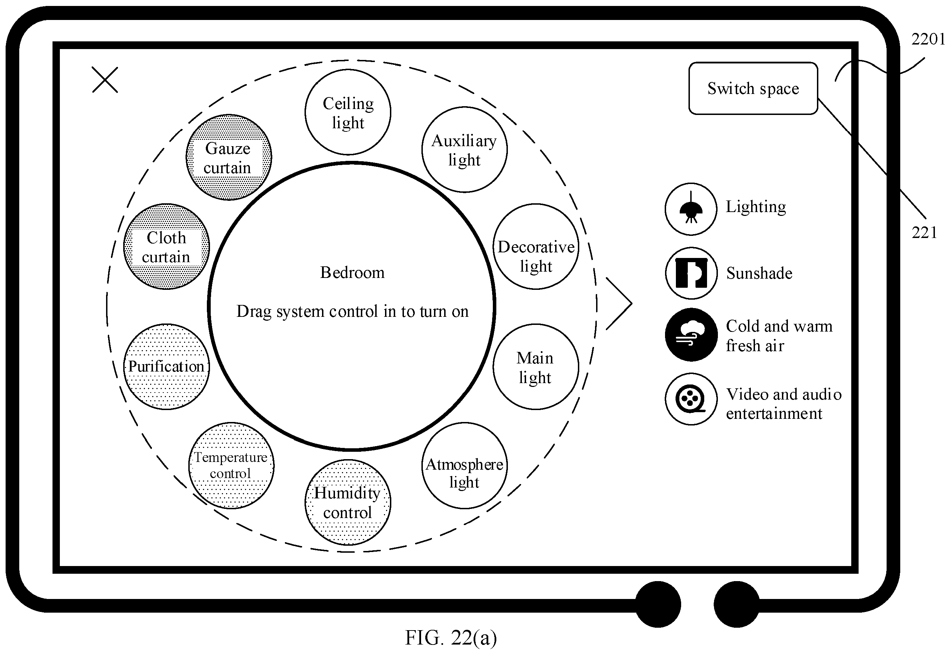

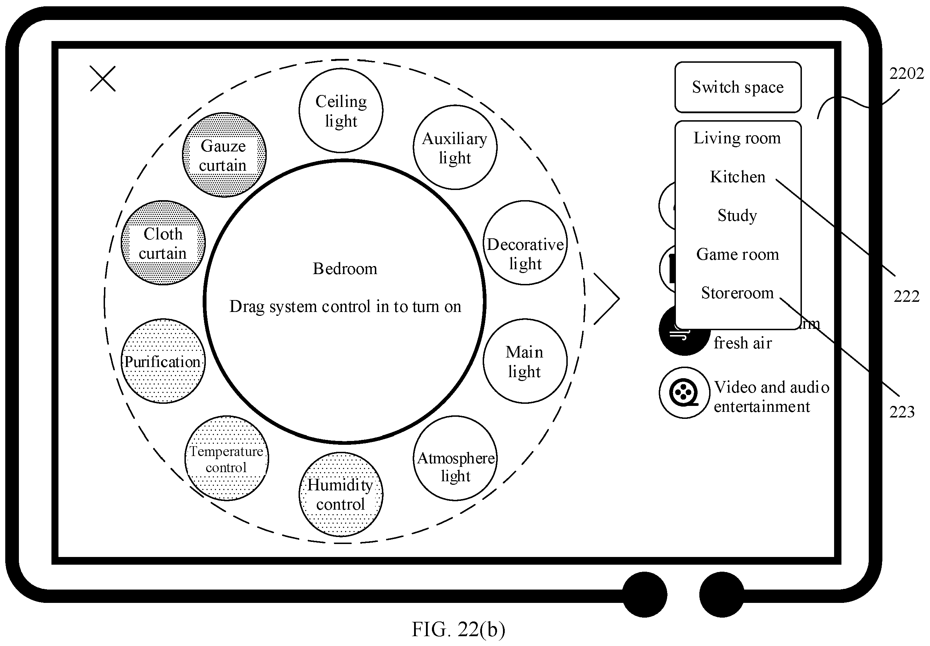

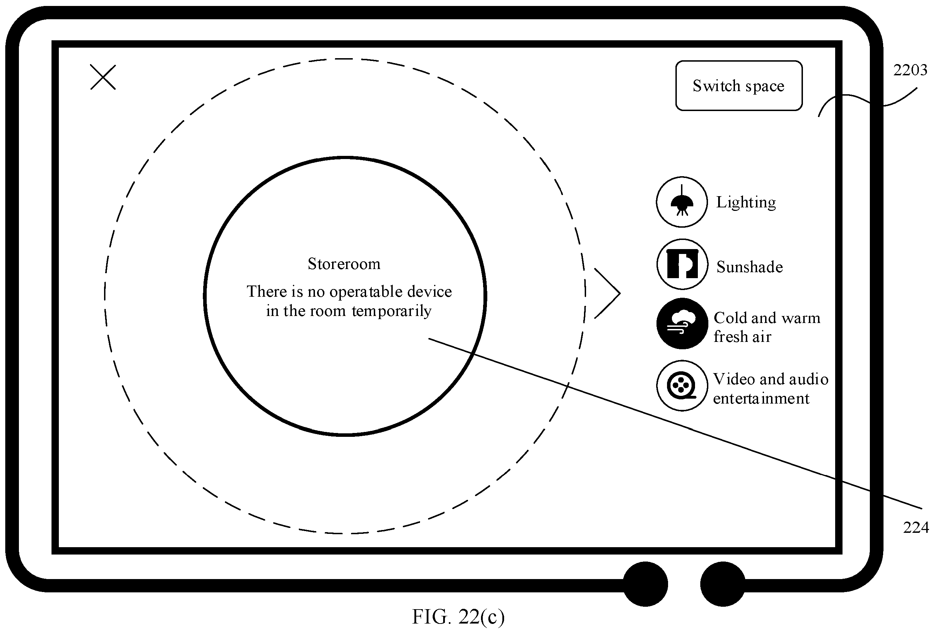

For another example, as shown in an interface 2201 shown in FIG. 22(a), after detecting an operation of tapping a space switching control 221 by the user, the smart home device control panel displays an interface 2202 shown in FIG. 22(b). In the interface 2202, a menu bar 222 including one or more pieces of space included in a current home is displayed. After detecting an operation of tapping a storeroom control 223 in the menu bar 222 by the user, the smart home device control panel determines that the user indicates to switch bedroom space to storeroom space. As shown in FIG. 22(c), after the smart home device control panel switches the space, an interface 2203 is displayed, and a trigger area 224 corresponding to the storeroom is displayed in the interface 2203. Optionally, if no corresponding electronic device is added to the storeroom, as shown in the interface 2203, no electronic device icon is displayed in a trigger area 224 and outside the trigger area 224, and the user is prompted that there is no device to be operated in the room temporarily.

For another example, the smart home device detects a slide operation of the user, and may switch to display interfaces corresponding to electronic devices in different rooms. For example, the user performs a slide operation in the trigger area, and bedroom space may be switched to next space, for example, living room space; and the user may continue to slide, and next space may be switched to, for example, kitchen space.

In this way, in the scenarios shown in FIG. 13(a) to FIG. 22(c), the smart home device control panel may control a corresponding electronic device in real time in response to an operation of the user. In addition, a corresponding real-time scenario may be generated in response to an operation (for example, an operation of tapping the scenario generation control in the scenario shown in FIG. 11(a) to FIG. 11(c)) of the user, thereby reducing a scenario setting difficulty and improving user experience.

In some embodiments, the smart home device control panel may alternatively implement electronic device control and scenario generation in the home screen.

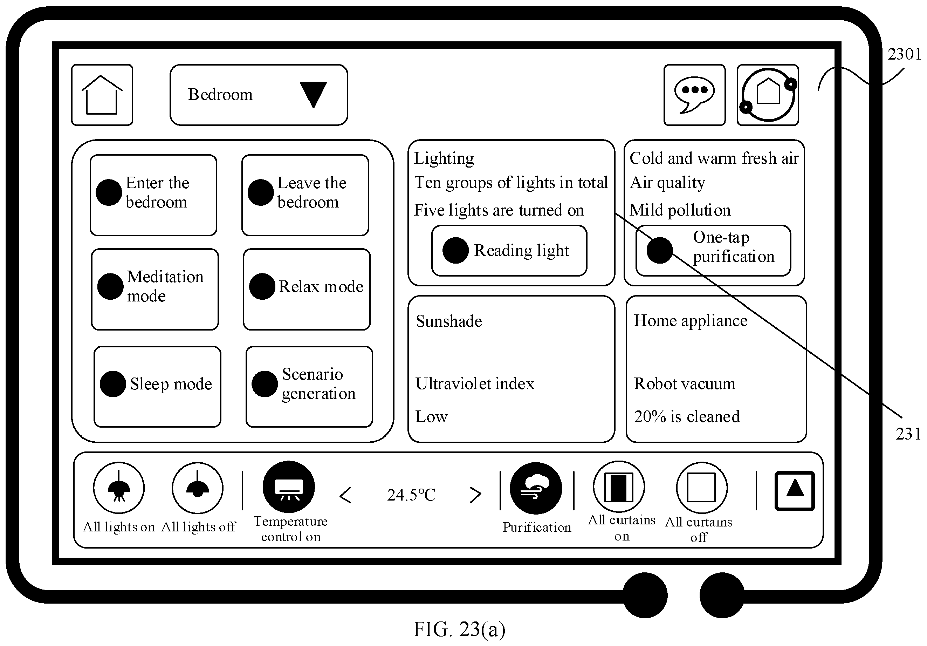

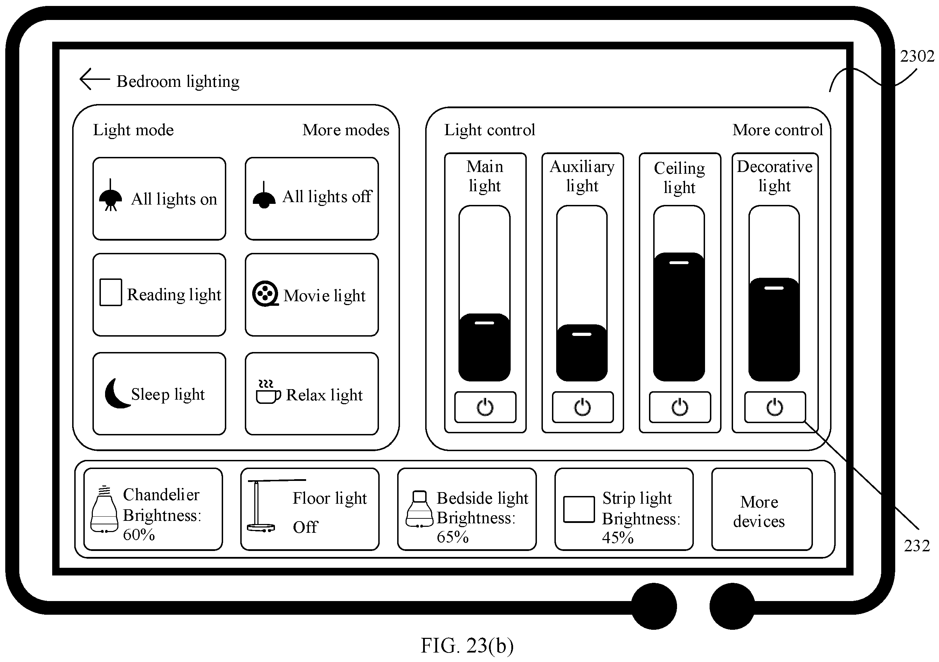

For example, as shown in an interface 2301 shown in FIG. 23(a), after detecting an operation of tapping a lighting submenu 231 by the user, the smart home device control panel displays an interface 2302 shown in FIG. 23(b). In the interface 2302, the smart home device control panel may indicate, in response to an operation of the user, a lighting device in a bedroom to perform a corresponding operation. For example, after detecting an operation of tapping a decorative light on/off control 232 by the user, the smart home device control panel may send a turn-off indication to a decorative light, to turn off the decorative light.

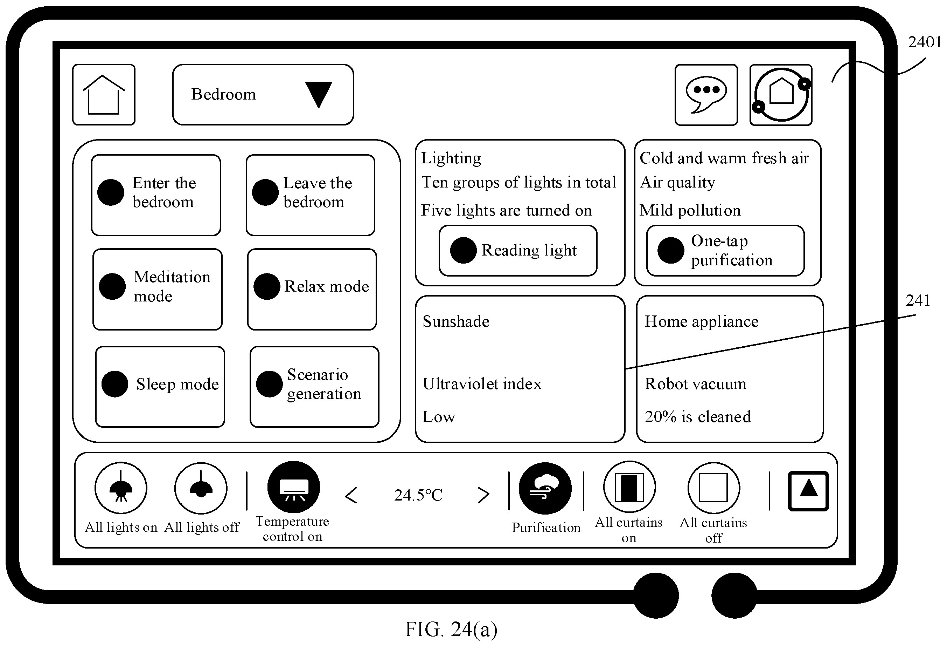

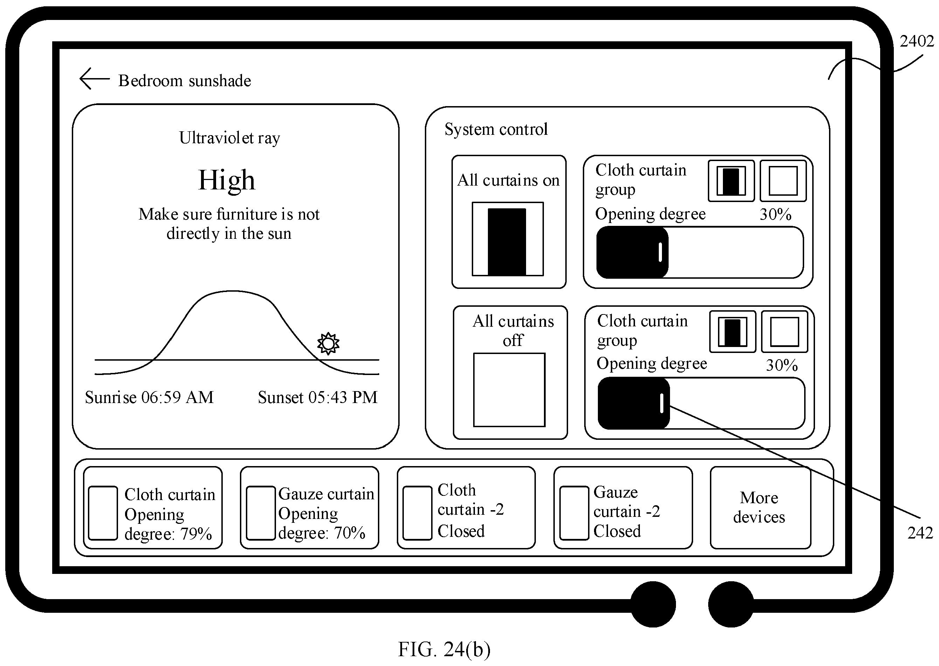

For another example, as shown in an interface 2401 shown in FIG. 24(a), after detecting an operation of tapping a sunshade submenu 241 by the user, the smart home device control panel displays an interface 2402 shown in FIG. 24(b). In the interface 2402, the smart home device control panel may indicate, in response to an operation of the user, a sunshade device in the bedroom to perform a corresponding operation. For example, after detecting an operation of operating a curtain opening degree control 242 by the user, the smart home device control panel may send a turn-on indication of a corresponding opening degree to a cloth curtain device in a cloth curtain group. As shown in the interface 2402, the turn-on indication is used to indicate the cloth curtain device to turn on, and a turn-on parameter includes an opening degree of 30%.

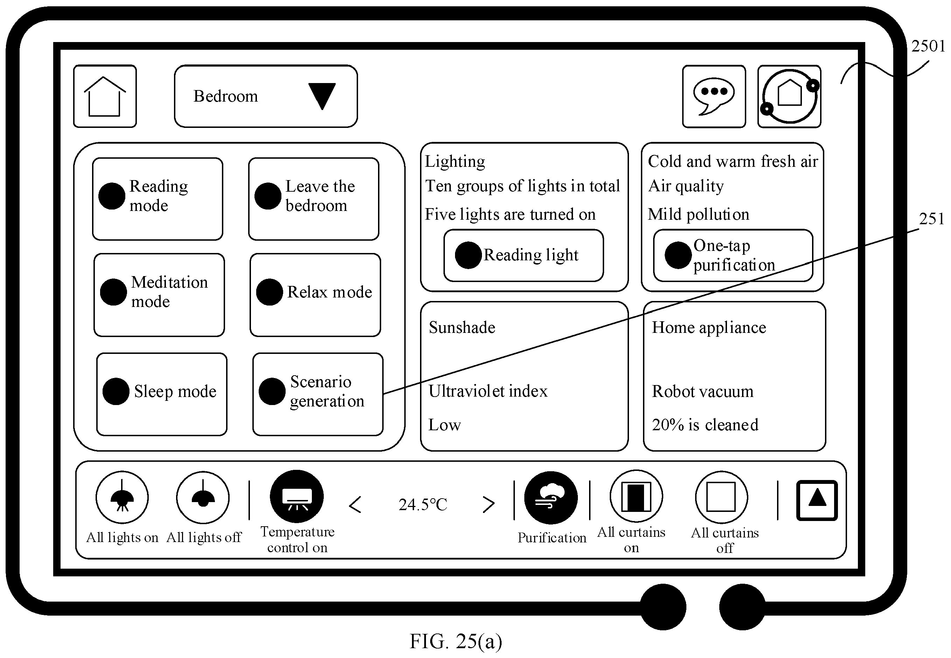

For another example, as shown in FIG. 25(a), the user may first indicate, in an interface 2501, an electronic device to turn on, to turn off, adjust a parameter, and the like (for example, adjust the lighting device and the sunshade device in the methods shown in FIG. 23(a) and FIG. 23(b) and

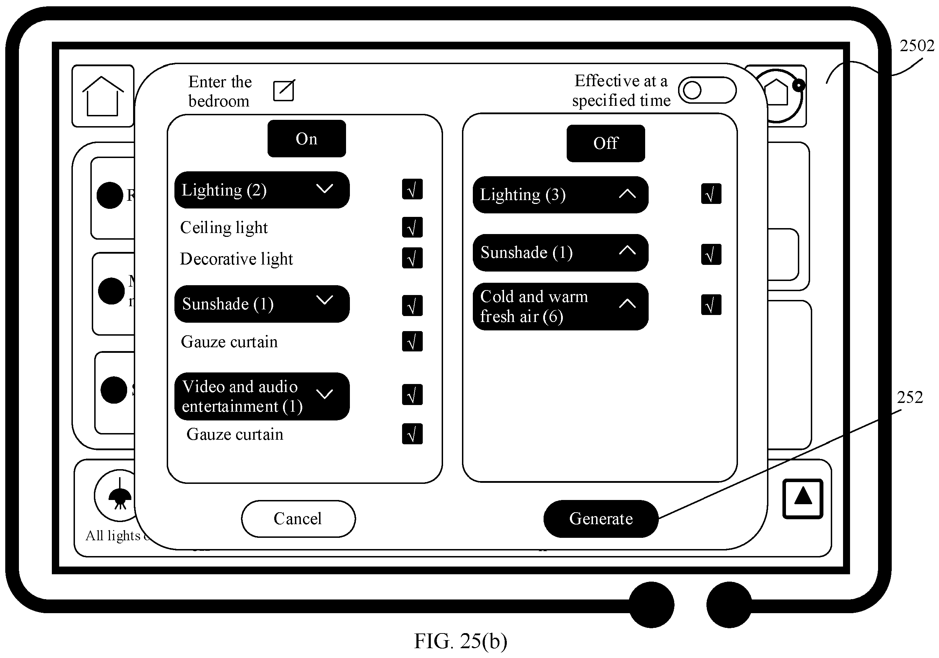

FIG. 24(a) and FIG. 24(b)), and then indicate, based on a real-time status of the electronic device, the smart home device control panel to generate a corresponding scenario. Alternatively, the user may directly indicate, in the interface 2501, the smart home device control panel to generate a real-time scenario corresponding to the real-time status of the electronic device. For example, after detecting an operation of tapping a scenario generation control 251 by the user, the smart home device control panel displays a scenario editing interface 2502 shown in FIG. 25(b). In the interface 2502, the smart home device control panel may perform scenario editing in response to an operation of the user. Then, after detecting an operation of tapping a generation control 252 by the user, the smart home device control panel may generate a corresponding real-time scenario.

In this way, the smart home device control panel generates, in response to an operation of the user, a real-time scenario including a real-time status of an electronic device in current space, thereby simplifying a scenario setting difficulty and improving user experience.

The foregoing describes in detail the scenario setting process by using a room as a granularity. The following describes in detail a whole-house scenario setting process.

In some embodiments, the smart home device control panel may switch between displaying a room device interface and displaying a whole-house device interface, so that the user can learn a device status in a room and a whole-house device status.

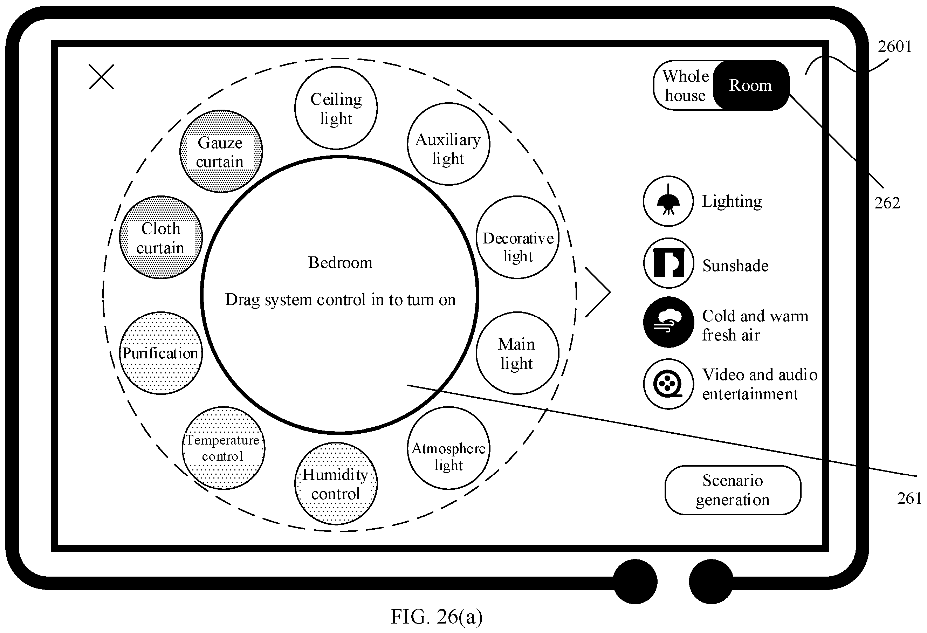

For example, as shown in FIG. 26(a), the smart home device control panel displays a bedroom device interface 2601. A bedroom device trigger area 261 is displayed in the bedroom device interface 2601, and an icon of an electronic device included in a bedroom is displayed outside the bedroom device trigger area 261. By using the methods shown in FIG. 8(a) to FIG. 25(b), control and scenario generation of the electronic device in the bedroom can be implemented.

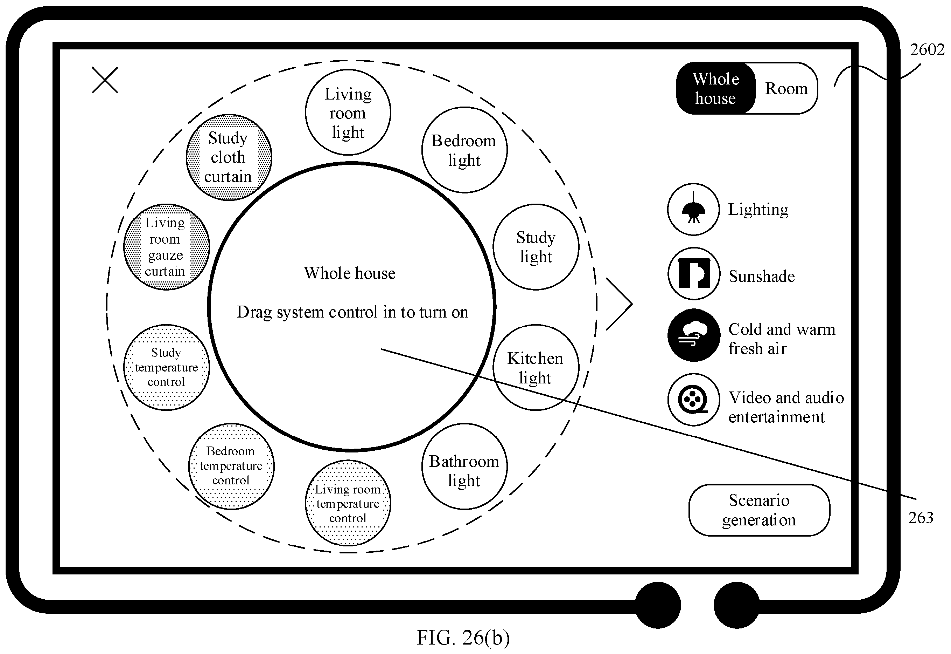

Then, the smart home device control panel detects, in the bedroom device interface 2601, an operation of tapping a whole-house/room switching control 262 by the user, and switches to display a whole-house device interface 2602 shown in FIG. 26(b). A whole-house device trigger area 263 is displayed in the whole-house device interface 2602, and controls corresponding to subsystems in different pieces of space in a whole house are displayed outside the whole-house device trigger area 263. As shown in FIG. 6, the smart home device control panel may classify user intentions that can be implemented in different pieces of space based on space and a subsystem. As shown in the interface 2602, electronic devices corresponding to a lighting subsystem in the whole house include a living room light, a bedroom light, a study light, a kitchen light, and a bathroom light.

Optionally, after detecting a slide operation of the user, the smart home device may switch to display the room device control interface (for example, a bedroom device control interface or a living room device control interface) and the whole house device control interface.

For example, the user performs a slide operation in the trigger area, and device control interface corresponding to each piece of space (including the whole house) existing in the whole house. The whole-house device control interface may be set as a first device control interface. In a process of displaying the whole-house device control interface, the smart home device control panel detects an operation of sliding left by the user in a control area, and may display a second device control interface. The device control interface is a room device control interface, for example, a bedroom device control interface. Alternatively, the whole-house device control interface may be set as a last device control interface. The smart home device control panel may display the whole-house device control interface after switching room device control interfaces corresponding to a plurality of rooms in response to a left slide operation of the user in the control area, and determining that all room device control interfaces are displayed. In this way, the user can quickly learn an execution status of each subsystem in the whole house through the device interface, thereby learning device statuses in the whole house.

In some embodiments, in response to an operation of the user, the smart home device control panel may implement whole-house electronic device control and generate a whole-house scenario, thereby reducing a user operation difficulty.

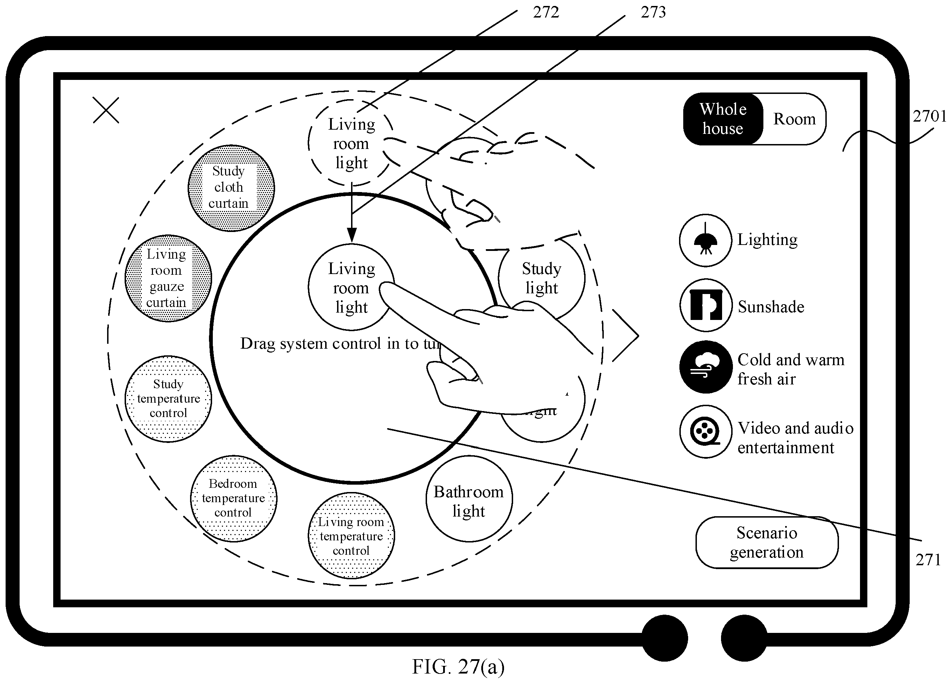

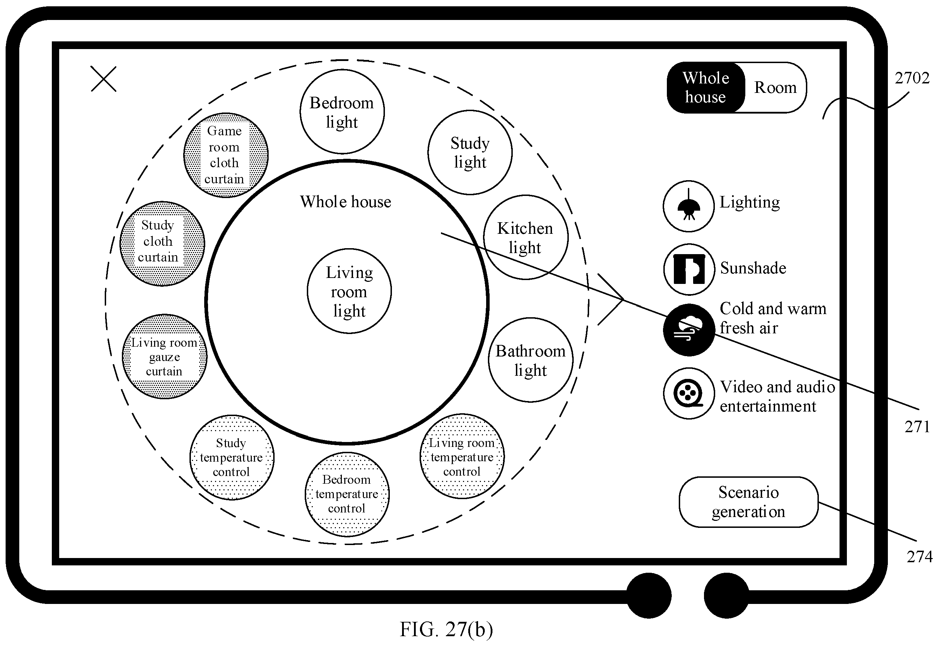

For example, as shown in an interface 2701 shown in FIG. 27(a), the smart home device control panel displays a whole-house device trigger area 271, and operable space in the whole house and a control, for example, a living room light control 272, corresponding to a subsystem are displayed outside the whole-house device trigger area 271. When detecting an operation of dragging, by the user, the living room light control 272 into the whole-house device trigger area 271 in a direction shown by an arrow 273, the smart home device control panel may display an interface 2702 shown in FIG. 27(b). In addition, the smart home device control panel sends, based on a configuration file, a turn-on indication to all lights included in a living room corresponding to the living room light control 272, or sends, by using the server, the turn-on indication to all the lights in the living room corresponding to the living room light control 272, to indicate to turn on the living room lights.

For another example, as shown in an interface 2702 shown in FIG. 27(b), after detecting an operation of tapping a scenario generation control 274 by the user, the smart home device control panel may generate a scenario including indicating the living room light to turn on.

In this way, in the whole-house scenario setting process, the user may intuitively learn current device statuses in the whole house, and a scenario setting difficulty is effectively reduced.

In some embodiments, in response to an operation of the user, the smart home device control panel may implement separate control of electronic devices in a room in the whole-house device interface. Therefore, refined control of the electronic device is implemented, and user experience is improved.

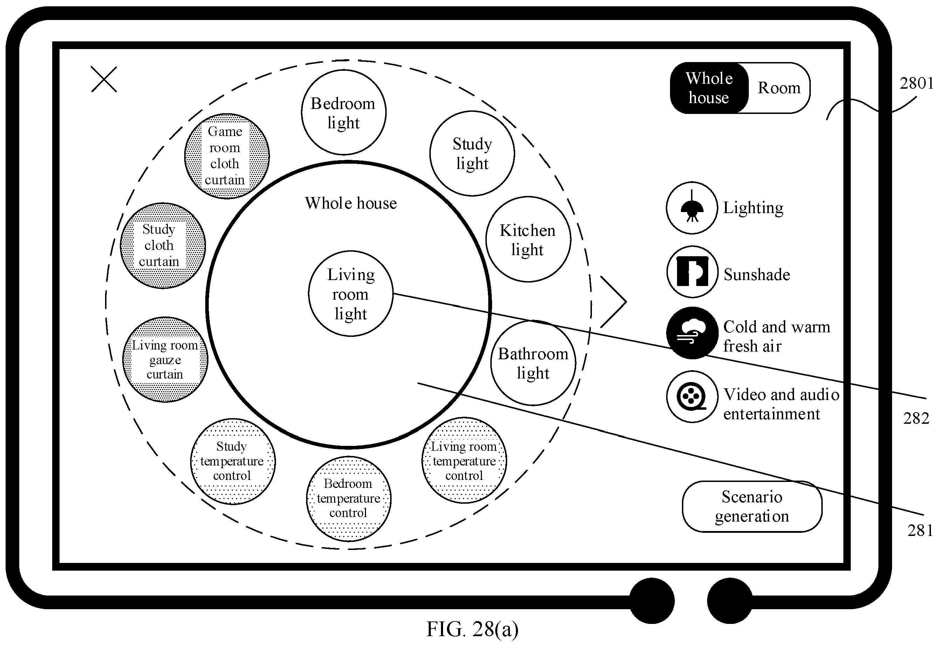

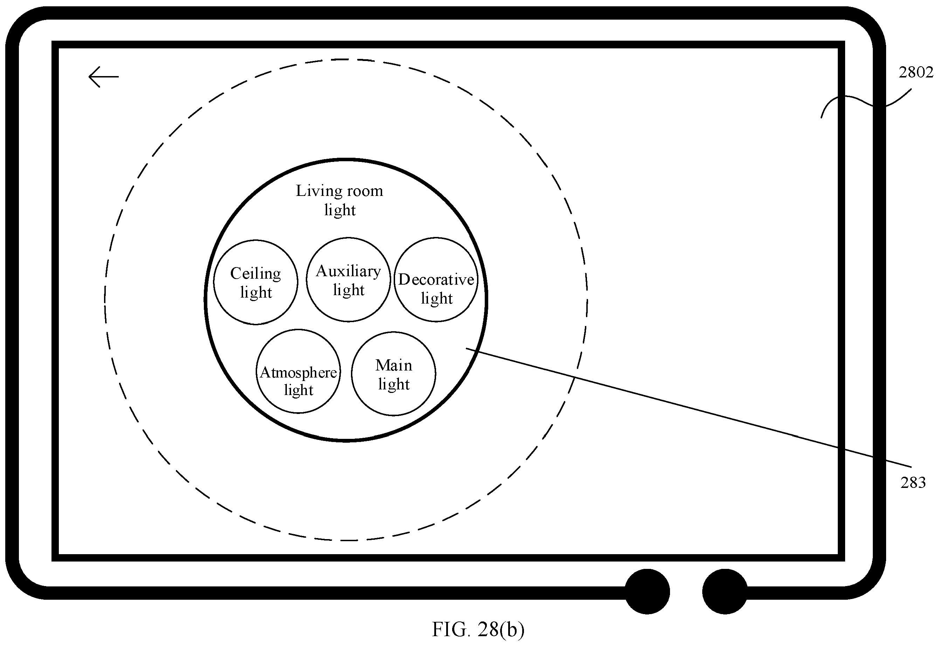

For example, as shown in a whole-house device interface 2801 shown in FIG. 28(a), after detecting an operation of touching and holding, by the user, a living room light control 282 displayed in a whole-house device trigger area 281, the smart home device control panel displays an interface 2802 shown in FIG. 28(b). In the interface 2802, as shown by a reference numeral 283, the smart home device control panel expands and displays an icon of a lighting device included in a living room corresponding to the living room light control 282. By dragging an icon of a lighting device out of an area shown by the reference numeral 283, the user may turn off the corresponding lighting device, to implement separate control on the lighting device in the bedroom.

In this way, by using the foregoing embodiment, the smart home device control panel can generate a whole-house scenario and set the whole-house scenario, thereby reducing a whole-house scenario setting difficulty.

It should be noted that, for other content of electronic device control and scenario generation in the whole-house scenario, refer to related content of electronic device control and scenario generation in the foregoing room scenario. Details are not described herein again.

In some embodiments, after logging in to a first application (for example, a smart home application), any electronic device that is in the smart home device and that is configured with a display and has a corresponding processing capability may complete scenario setting by using the first application.

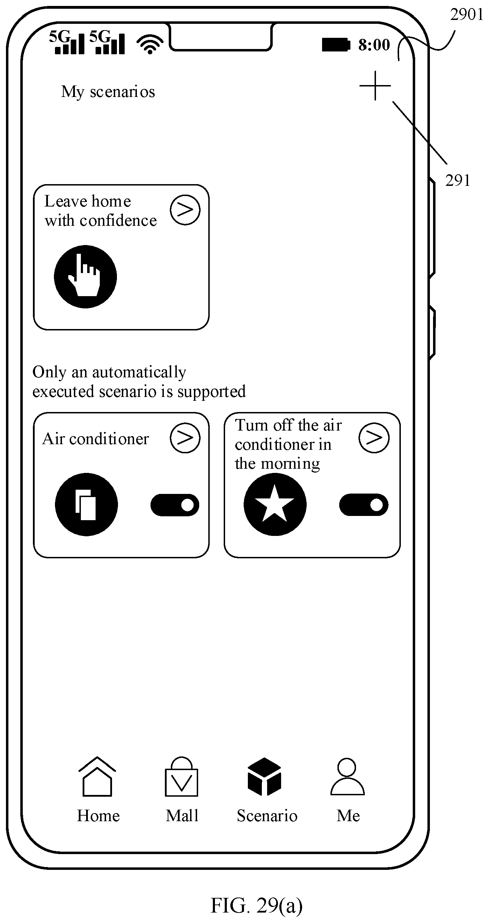

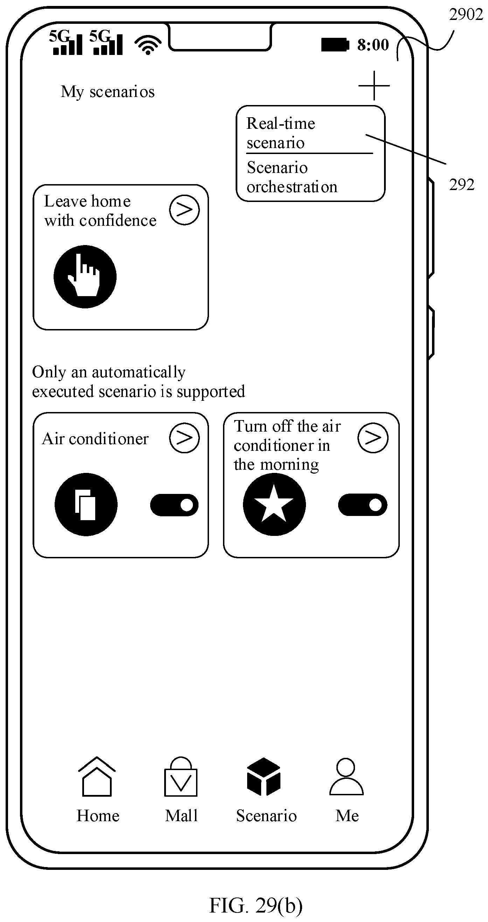

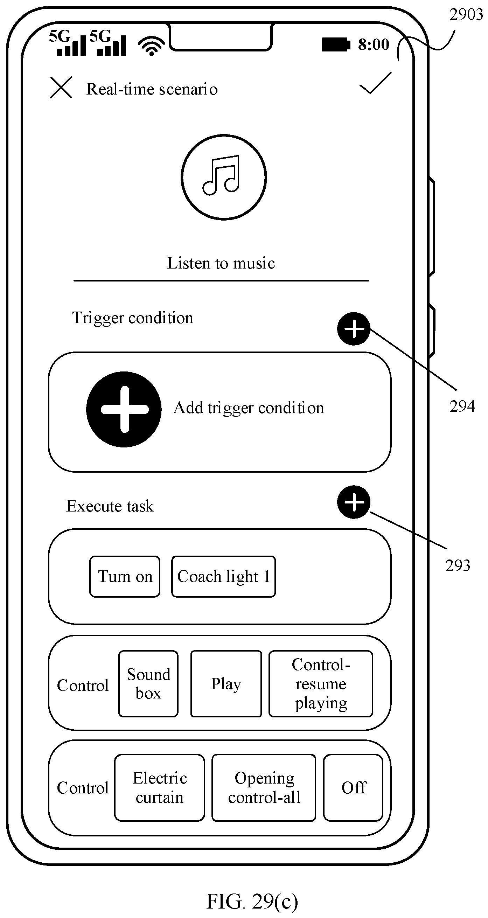

For example, as shown in FIG. 29(a), a mobile phone displays an interface 2901 after starting a smart home application. After detecting an operation of tapping an add control 291 by the user, the mobile phone displays an interface 2902 shown in FIG. 29(b). Then, the mobile phone detects an operation of tapping a real-time scenario control 292 by the user, and determines that the user indicates to create a real-time scenario. The mobile phone may detect a device status and a device parameter of each electronic device under a current account logged in to by the first application or in a local area network. Then, as shown in FIG. 29(c), the mobile phone may display, in a real-time scenario creation interface 2903 based on the detected device status and device parameter of the electronic device, a real-time task execution status of the electronic device. Optionally, the mobile phone detects an operation of tapping a task add control by the user, and may add a task that needs to be executed by the electronic device.

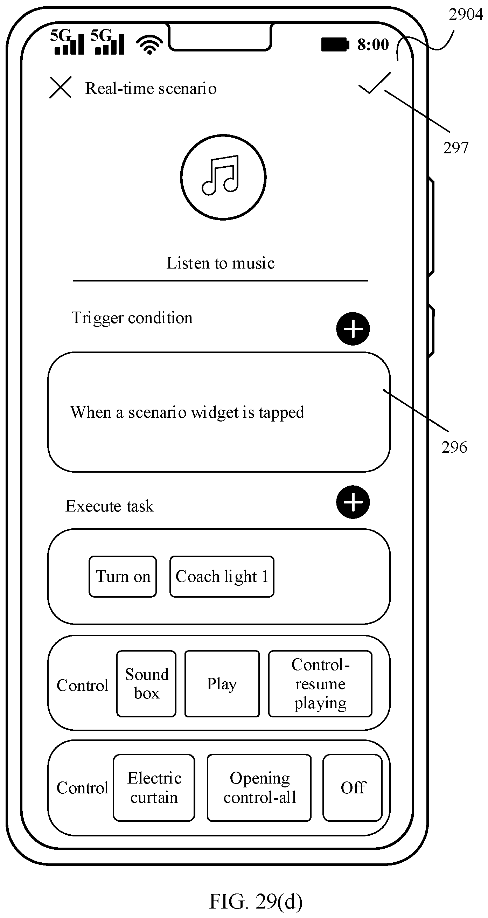

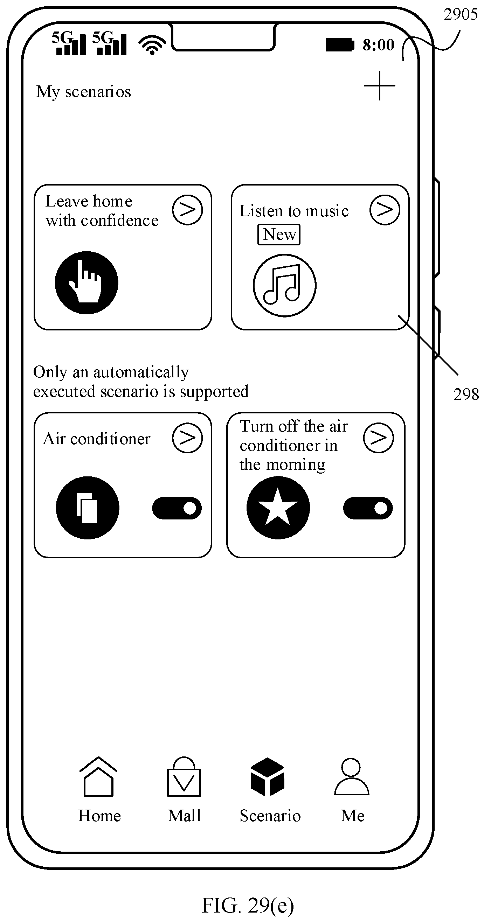

Then, the mobile phone detects an operation of tapping, by the user, a trigger condition add control 294 displayed in the interface 2903, and may add a trigger condition of a real-time scenario (or the mobile phone may automatically add a default trigger condition, where the default trigger condition may be modified by the user). In an interface 2904 shown in FIG. 29(d), as shown by a reference numeral 296, the mobile phone determines, in response to an operation of the user, that the trigger condition of the real-time scenario is "when a scenario widget is tapped". Then, after detecting an operation of tapping a completion control 297 by the user, the mobile phone determines that real-time scenario creation is completed, and may display an interface 2905 shown in FIG. 29(e). For example, the user is prompted, by using a scenario widget 298, that the real-time scenario is successfully created.

In this way, in the real-time scenario creation process, a control device (for example, a mobile phone) may automatically detect and display a device status, and the user does not need to add execution tasks one by one according to preset logic, thereby reducing a scenario creation difficulty and improving user experience.

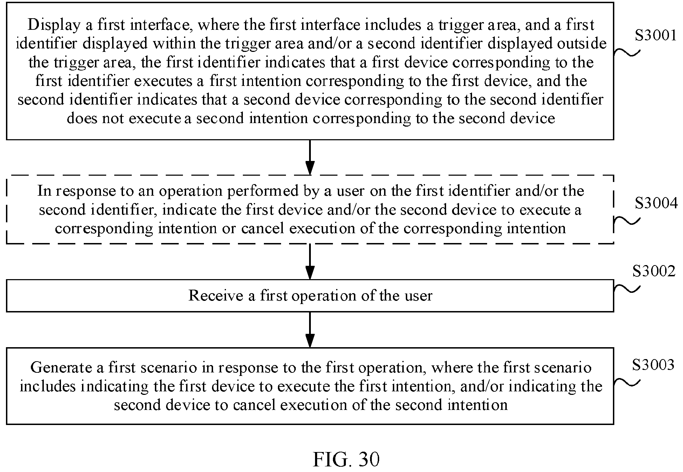

For example, FIG. 30 is a schematic flowchart of a scenario setting method according to an embodiment of this application. As shown in FIG. 30, the method includes the following steps.

S3001: A control device displays a first interface, where the first interface includes a trigger area, and a first identifier displayed within the trigger area and/or a second identifier displayed outside the trigger area, the first identifier indicates that a first device corresponding to the first identifier executes a first intention corresponding to the first device, and the second identifier indicates that a second device corresponding to the second identifier does not execute a second intention corresponding to the second device.

In some embodiments, an identifier in the trigger area indicates a device that has executed a user intention in current space, and an identifier outside the trigger area indicates a device that does not execute a user intention in the current space. Optionally, the current space may be a room or whole house space.

For example, space corresponding to an interface 902 shown in FIG. 9(b) is a bedroom, and the interface 902 is used to control an electronic device in the bedroom. A ceiling light icon 92 of the control device (for example, a smart home device control panel) in a trigger area 91 indicates that a ceiling light corresponding to the ceiling light icon 92 has executed a corresponding user intention (for example, turning on the light), and a music playing device icon 94 outside the trigger area 91 indicates that a music playing device corresponding to the music playing device icon 94 does not execute a corresponding user intention (if the music playing device is not turned on, the music playing device is in a turn-off state).

For another example, space corresponding to an interface 2702 shown in FIG. 27(b) is the whole house, and the interface 2702 is used to control electronic devices in the whole house. A living room light icon of the control device (for example, the smart home device control panel) in the trigger area 271 indicates that a living room light corresponding to the living room light icon has executed a corresponding user intention (for example, turning on the light), and a bedroom light icon outside the trigger area 271 indicates that a bedroom light corresponding to the bedroom light icon does not execute a corresponding user intention (if the light is not turned on, the light is in a turn-off state).

In this way, the user may determine a status of an electronic device based on icons displayed inside and outside the trigger area. In this way, an overview of statuses of electronic devices in the current space is implemented. In addition, it can be convenient for the user to control a corresponding electronic device, thereby reducing an operation difficulty of the user.

In some embodiments, identifiers corresponding to a same subsystem in the second identifier are displayed adjacent to each other.

For example, as shown in the interface 701 shown in FIG. 7, outside the trigger area 71, icons of electronic devices (or icons of electronic devices corresponding to a same subsystem) with a same device type label are displayed close to each other based on the device type label of the electronic devices according to a same display rule, to facilitate an operation of the user.

For example, as shown in the interface 701, the ceiling light, the auxiliary light, the decorative light, the main light, and the atmosphere light that are included in the bedroom are lighting devices, and all correspond to the lighting subsystem. The corresponding icons are blank circular icons that are not filled and are displayed close to each other.

In some embodiments, a quantity of display locations that are used to display an identifier and that are outside the trigger area in the first interface is less than or equal to a first quantity. When a quantity of second devices is greater than the first quantity, the control device displays a first quantity of second identifiers in a first page outside the trigger area in the first interface, and in response to an eleventh operation of the user, displays a first remaining quantity of second identifiers in a second page outside the trigger area in the first interface, where the first remaining quantity is less than or equal to the first quantity, and the quantity of second devices is a sum of the first quantity and the first remaining quantity.

For example, as shown in the interface 801 in FIG. 8(a), the bedroom includes 11 electronic devices, and the first quantity is 10. The control device displays icons of 10 electronic devices (that is, displays a first quantity of second identifiers) outside the trigger area 81 according to a preset rule. Then, in response to an operation of tapping the page down control 82 by the user (that is, the eleventh operation is an operation on a preset control), the control device may switch to display icons of remaining electronic devices (that is, display the first remaining quantity of second identifiers). As shown in the interface 802 in FIG. 8(b), after the control device switches a page, the icon 83 of the remaining music playing device is displayed outside the trigger area.

For another example, the user may alternatively implement a page turning effect by using a slide operation. For example, in response to a left slide operation (that is, the eleventh operation is a slide operation) of the user in a specific range in the interface 801 shown in FIG. 8(a), the control device switches to the interface 802 shown in FIG. 8(b).

In this way, the control device can display icons of a plurality of electronic devices in the current space, to control all electronic devices in the current space.

In some embodiments, a quantity of display locations used to display an identifier in the trigger area in the first interface is less than or equal to a second quantity. When a quantity of first devices is greater than the second quantity, the control device displays the second quantity of first identifiers in a third page in the trigger area in the first interface, and in response to a twelfth operation of the user, displays a second remaining quantity of first identifiers in a fourth page in the trigger area in the first interface, where the second remaining quantity is less than or equal to the second quantity, the quantity of first devices is a sum of the second quantity and the second remaining quantity.

For example, as shown in the interface 1901 shown in FIG. 19(a), an example in which the quantity of first devices is 10 and the quantity of second devices is 7 is used. As shown in the interface 1901, the control device displays seven ceiling light icons (that is, displays the second quantity of first identifiers) in the trigger area 191. After detecting an operation of tapping the page down control 192 (that is, the twelfth operation is an operation on a preset control) by the user, the control device may display the interface 1902 shown in FIG. 19(b), and the control device may display icons of three remaining electronic devices that are turned on in the trigger area 193 (that is, display the second remaining quantity of first identifiers).

For another example, an effect similar to page turning may alternatively be implemented in another operation manner. For example, the user may slide the trigger area 191 (for example, slide up, slide down, slide left, or slide right, that is, the twelfth operation is a slide operation), to trigger the trigger area 191 to display an icon of another electronic device.

In this way, by presetting the second quantity of displayed icons in an inner circle, the control device can clearly display the electronic device icon in the trigger area, so that the user can conveniently search for the electronic device icon. In addition, page switching in the trigger area may be implemented. The user may determine, by switching pages of the trigger area, an electronic device that has been turned on in current space, to learn a status of the electronic device and improve user experience.

S3002: The control device receives a first operation of the user.

In some embodiments, the first operation includes, for example, an operation performed on a preset scenario generation control, a voice control operation, and the like. After determining, by using the control device, that a current electronic device status meets a requirement, the user may indicate, by using the first operation, the control device to generate a corresponding scenario.

For example, as shown in FIG. 11(a), the control device receives a first operation of the user in the bedroom device interface 1101, for example, an operation of tapping the scenario generation control 112.

S3003: The control device generates a first scenario in response to the first operation, where the first scenario includes indicating the first device to execute the first intention, and/or indicating the second device to cancel execution of the second intention.

In some embodiments, when determining that a device status of an electronic device in space corresponding to a current first interface meets a requirement, the user may directly generate the first scenario by performing the simple first operation. In the first scenario, an intention execution status of the electronic device corresponds to content displayed in the first interface, and the user may intuitively determine, by using the content displayed in the first interface, an effect obtained after the first scenario is executed.

In this way, the user can set a smart home device scenario by using a simple operation. In a scenario setting process, the user can intuitively view an electronic device status on the control device and set a scenario based on the electronic device status. In this way, a requirement of scenario setting on a logic capability of the user is reduced, a scenario setting difficulty is effectively reduced, and user experience is improved.

In some scenarios, the user determines, based on display content in the first interface of the control device, that a current scenario does not meet a requirement, and may directly indicate, by using the control device, a corresponding electronic device to execute or cancel execution of a corresponding intention.

Optionally, as shown in FIG. 30, before receiving the first operation of the user (namely, step S3002), the control device may further perform step S3004.

S3004: Indicate, in response to an operation performed by the user on the first identifier and/or the second identifier, the first device and/or the second device to execute or cancel execution of a corresponding intention.

In some embodiments, when detecting an operation of dragging, by the user, the first identifier and the second identifier displayed in the first interface into the trigger area or out of the trigger area, the control device may indicate the corresponding first device and second device to execute or cancel execution of the corresponding intention. That is, the control device may control the electronic device in the space in real time in response to an operation of the user.

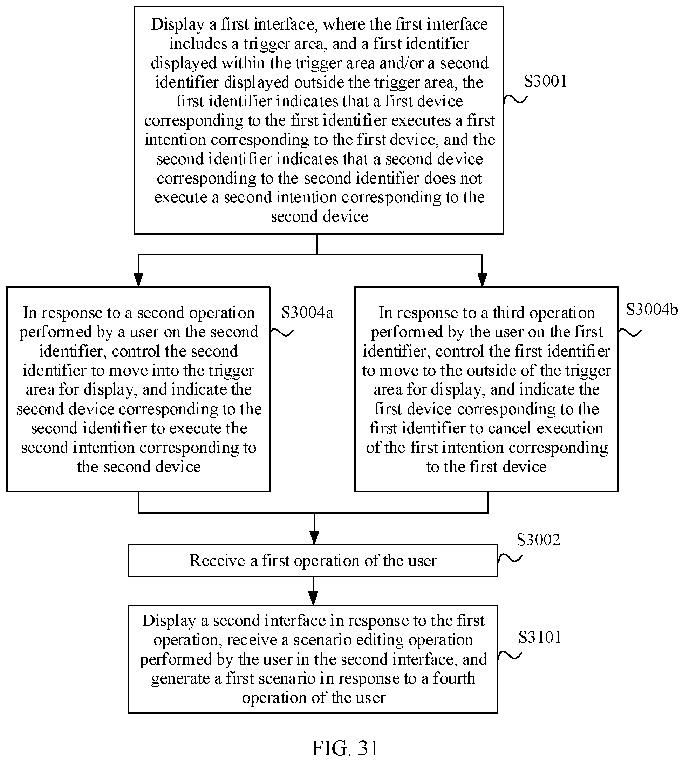

For example, as shown in FIG. 31, step S3004 may include step S3004a and/or step S3004b.

S3004a: In response to a second operation performed by the user on the second identifier, the control device controls the second identifier to move into the trigger area for display, and indicates the second device corresponding to the second identifier to execute the second intention corresponding to the second device.

In some embodiments, there is one or more first identifiers or second identifiers. In the following embodiments, there may be one or more identifiers in the first identifier or the second identifier that is operated by the user.

In some embodiments, the second operation is a dragging operation. After detecting the operation of dragging the second identifier into the trigger area by the user, the control device may indicate the second device corresponding to the dragged second identifier to execute the corresponding second intention. For example, as shown in the bedroom interface 901 shown in FIG. 9(a), the icon (namely, the second identifier) of the electronic device included in the bedroom is displayed around the trigger area 91, for example, the ceiling light icon 92. The control device detects a second operation of controlling, by the user, the ceiling light icon 92 to move into the trigger area 91, and may send a turn-on indication to the ceiling light corresponding to the ceiling light icon 92, to indicate the ceiling light to turn on (that is, execute the second intention). Then, after determining that the ceiling light is turned on, the control device may display the interface 902 shown in FIG. 9(b), and display the ceiling light icon 92 in the trigger area 91.

For another example, as shown in the bedroom interface 2701 shown in FIG. 27(a), the control device detects a second operation of controlling, by the user, the living room light icon 272 displayed outside the trigger area 271 to move into the trigger area 271, and may send a turn-on indication to all living room lights corresponding to the living room light icon 272, to indicate the living room lights to turn on (that is, execute the second intention). Then, after determining that the living room light is turned on, the control device may display the interface 2702 shown in FIG. 27(b), and display the living room light icon in the trigger area 271.

S3004b: In response to a third operation performed by the user on the first identifier, the control device controls the first identifier to move to the outside of the trigger area for display, and indicates the first device corresponding to the first identifier to cancel execution of the first intention corresponding to the first device.

In some embodiments, the third operation is a dragging operation. After detecting the operation of dragging the first identifier to the outside of the trigger area by the user, the control device may indicate the first device corresponding to the first identifier that is dragged to the outside to cancel execution of the corresponding first intention.

For example, as shown in the bedroom interface 1001 shown in FIG. 10(a), the ceiling light icon 102 (namely, the first identifier) is displayed in the trigger area 101. After detecting the third operation of controlling, by the user, the ceiling light icon 102 to move to the outside of the trigger area 101, the control device may send a turn-off indication to the ceiling light corresponding to the ceiling light icon 102, to indicate the ceiling light to turn off (that is, cancel execution of the first intention). Then, the control device determines that the ceiling light is turned off, and may display, as shown in the interface 1002 shown in FIG. 10(b), the ceiling light icon 102 outside the trigger area 101.

It should be noted that an execution sequence of step S3004a and step S3004b is not limited in this embodiment of this application, or the control device may perform any one of step S3004a and step S3004b, so that control of the electronic device meets a user requirement.

In this way, the user can view an electronic device status in current space, and it is convenient for the user to control a corresponding electronic device, thereby reducing an operation difficulty of the user.

In some scenarios, there are a plurality of second devices in space. When the user needs to control some of the second devices to execute the second intention, the user needs to perform the eleventh operation in step S3001 to search for a required second device by page turning. This operation is complex, and user experience is affected. Therefore, the second device may be quickly searched for by using a subsystem index, to control the required second device.

In some embodiments, the first interface further includes a subsystem index. In response to a tenth operation performed by the user on a first subsystem in the subsystem index, the control device displays, in a first area outside the trigger area, an identifier corresponding to the first subsystem in the second identifier, where a start location of the first area is a preset start location, and a quantity of display locations included in the first area is adapted to a quantity of identifiers corresponding to the first subsystem.

For example, as shown in the interface 1501 shown in FIG. 15(a), after detecting an operation of tapping the cold and warm fresh air subsystem control 152 (that is, corresponding to the first subsystem) in the subsystem index by the user, the control device may display the interface 1502 shown in FIG. 15(b). In the interface 1502, the control device displays, clockwise from the preset start location above the trigger area 151, an icon of an electronic device corresponding to the cold and warm fresh air subsystem, for example, the humidity control device icon, the temperature control device icon, and the purification device icon. An area used to display the icon of the electronic device corresponding to the cold and warm fresh air subsystem is the first area, and the quantity of display locations included in the first area is adapted to a quantity of identifiers corresponding to the subsystem selected by the user, thereby meeting a requirement for displaying an identifier.

In this way, it is convenient for the user to search for an electronic device included in a corresponding subsystem, and a control process of the electronic device is simplified.

In some scenarios, in a scenario generation process, the control device may further edit a scenario in response to an operation of the user, and the user may determine a scenario editing result by using the control device, so that a finally generated scenario meets a requirement.

Optionally, as shown in FIG. 31, step S3003 may be implemented as step S3101.

S3101: The control device displays a second interface in response to the first operation, receives a scenario editing operation of the user in the second interface, and generates a first scenario in response to a fourth operation of the user.

In some embodiments, the scenario editing operation includes one or more of the following: setting a scenario effective time, setting that the first device in the scenario cancels execution of the first intention, and setting that the second device in the scenario executes the second intention.

For example, in the bedroom device interface 1101 (namely, the first interface) shown in FIG. 11(a), in response to a first operation of tapping the scenario generation control 112 by the user, the control device may display the real-time scenario editing interface 1102 (namely, the second interface) shown in FIG. 11(b). In the real-time scenario editing interface 1102, the user may select or deselect an electronic device in the real-time scenario editing interface 1102 based on a requirement. The control device can correspondingly modify the scenario based on the selection or deselection operation (that is, a scenario editing operation) of the user. Then, after detecting a fourth operation of tapping the generation control 117 by the user, the control device may generate a corresponding first scenario, where the first scenario is a scenario that meets a user requirement.

In this way, the control device edits a corresponding scenario based on a scenario editing operation of the user, so that a finally generated scenario meets a user requirement, and user experience is improved.

In some scenarios, the control device may separately control electronic devices in different rooms, and directly control electronic devices in a whole house. In this case, the first device and the second device displayed in the first interface may be electronic devices in a same room or different rooms.

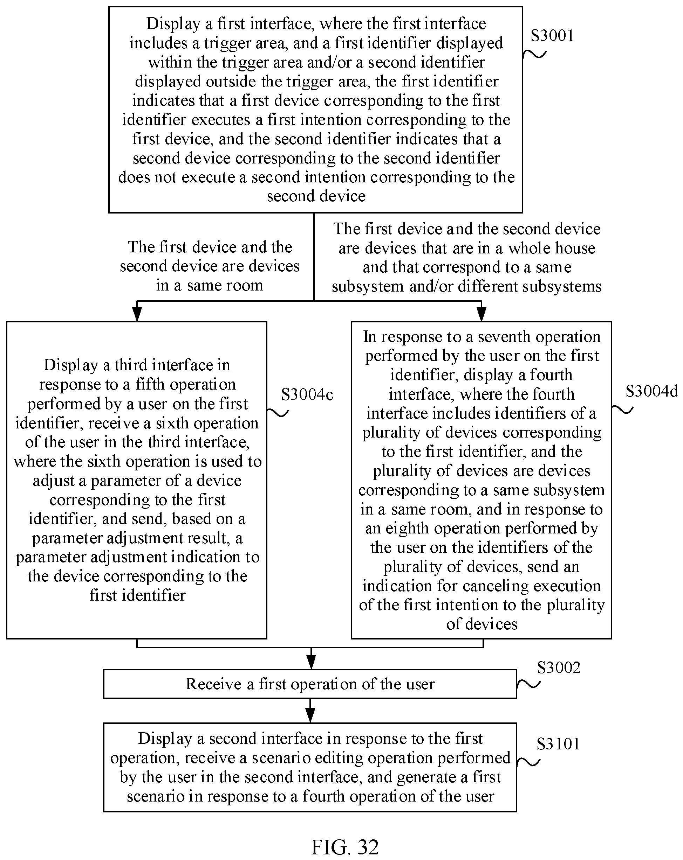

Optionally, as shown in FIG. 32, when the first device and the second device are devices in a same room, step S3004 shown in FIG. 30 may include step S3004c. When the first device and the second device are devices corresponding to a same subsystem and/or different subsystems in the whole house, step S3004 shown in FIG. 30 may include step S3004d.

S3004c: The control device displays a third interface in response to a fifth operation performed by the user on the first identifier. A sixth operation of the user is received in the third interface, where the sixth operation is used to adjust a parameter of a device corresponding to the first identifier. The control device sends, based on an adjustment result of the parameter, a parameter adjustment indication to the device corresponding to the first identifier.

In some embodiments, the fifth operation is a touching and holding operation. The first interface displayed by the control device is a room device control interface, and the first device and the second device are devices in a same room. After detecting an operation of touching and holding, by the user, the first identifier displayed in the trigger area, the control device may determine that the user needs to adjust the parameter of the first device corresponding to the first identifier. In this case, the control device may display a parameter adjustment interface (namely, the third interface), to receive the parameter adjustment operation of the user, and in response to the parameter adjustment operation, indicate the corresponding first device to perform parameter adjustment.

For example, as shown in the interface 1301 shown in FIG. 13(a), the ceiling light icon 132 (namely, the first identifier) is displayed in the trigger area 131. After detecting an operation (namely, the fifth operation) of touching and holding the ceiling light icon 132 by the user, the control device determines that the user needs to adjust a parameter of the ceiling light corresponding to the ceiling light icon, and may display the interface 1302 shown in FIG. 13(b). In the interface 1302, the control device displays the ceiling light brightness adjustment control 133, and in response to the sixth operation performed by the user on the ceiling light brightness adjustment control 133, the control device may send a corresponding parameter setting indication to the ceiling light, for example, indicate the ceiling light to adjust brightness to 50% brightness.

In this way, in an electronic device control process, a parameter of an electronic device is adjusted in real time, to meet a use requirement of the user.

S3004d: In response to a seventh operation performed by the user on the first identifier, the control device displays a fourth interface, where the fourth interface includes identifiers of a plurality of devices corresponding to the first identifier, and the plurality of devices are devices corresponding to a same subsystem in a same room. In response to an eighth operation performed by the user on the identifiers of the plurality of devices, the control device sends an indication for canceling execution of the first intention to the plurality of devices.

In some embodiments, the seventh operation is a touching and holding operation, and the eighth operation is a dragging operation. The first interface displayed by the control device is a whole-house device control interface, and the first device and the second device are devices that are in the whole house and that correspond to a same subsystem and/or different subsystems. The control device detects an operation of touching and holding, by the user, the first identifier displayed in the trigger area, and may determine a case in which the user needs to determine one or more first devices corresponding to the first identifier. In this case, the control device may expand and display the identifier of the first device corresponding to the first identifier. Then, the control device detects a dragging operation performed by the user on the expanded identifier, and may determine that the user indicates the first device corresponding to the dragged identifier to cancel execution of the first intention, and send a corresponding indication to the first device.

For example, as shown in the whole-house device interface 2801 shown in FIG. 28(a), the subsystem corresponding to the living room light icon 282 (namely, the first identifier) displayed in the trigger area 281 by the control device is the lighting subsystem. The second identifier displayed outside the trigger area 281 includes a second identifier (for example, a bedroom light identifier) that also corresponds to the lighting subsystem like the first identifier, and further includes a second identifier (for example, a living room temperature control identifier corresponding to the cold and warm fresh air subsystem) that corresponds to a different subsystem from the first identifier.

After detecting a seventh operation of touching and holding, by the user, the living room light control 282 displayed in the whole-room device trigger area 281, the control device displays the interface 2802 shown in FIG. 28(b). In the interface 2802, as shown by the reference numeral 283, the control device expands and displays an icon of a lighting device included in the living room corresponding to the living room light control 282. By an eighth operation of dragging an icon of a lighting device out of the area shown by the reference numeral 283, the user may turn off the corresponding lighting device, to implement separate control on the lighting device in the bedroom.

In this way, the control device can implement separate control of electronic devices in a room in the whole-house device interface. Therefore, refined control of the electronic device is implemented, and user experience is improved.

In some scenarios, in response to an operation of the user, the control device may switch to display room device control interfaces of different rooms, and switch to display a room device control interface and a whole-house device control interface. Therefore, a requirement of the user for determining a device status of each piece of space and controlling a device in the space is met.

In some embodiments, in response to a ninth operation of the user, the control device switches to display a fifth interface, where space corresponding to the fifth interface is the same as or different from space in which the first device is located or space in which the second device is located. Alternatively, the space corresponding to the fifth interface includes the space in which the first device is located and the space in which the second device is located. The ninth operation is a left slide operation or a right slide operation in the trigger area; or the ninth operation is an operation on a preset control.

For example, the control device detects a slide operation of the user, and may switch to display interfaces corresponding to electronic devices in different rooms. For example, the user performs a slide operation in the trigger area, and bedroom space may be switched to next space, for example, living room space; and the user may continue to slide, and next space may be switched to, for example, kitchen space.

Further, sliding continues, and the whole-house device control interface may be switched to. In this case, the fifth interface is the whole-house device control interface that is switched to, and the corresponding space is the whole house, including the space in which the first device is located and the space in which the second device is located. Then, in response to the slide operation of the user, the control device switches the whole-house device control interface to the room device control interface. In this case, the first device and the second device are devices corresponding to the whole-house control interface, and may be in the same space or different pieces of space, and after the room control interface (namely, the fifth interface) is switched to, the corresponding space may be the same as or different from the space in which the first device is located or the space in which the second device is located.

For another example, the control device displays a room switching menu in response to an operation performed by the user on the preset control. The fifth interface is switched to for display in response to an operation of selecting a first room by the user in the room switching menu, where the fifth interface corresponds to the first room, the first room is different from the room in which the first device and/or the second device is located, and a device corresponding to a device identifier displayed in the fifth interface is a device in the first room.

For example, as shown in the interface 2201 shown in FIG. 22(a), after detecting an operation of tapping the space switching control 221 (namely, the preset control) by the user, the control device displays the interface 2202 shown in FIG. 22(b). In the interface 2202, a menu bar 222 (namely, the room switching menu) including one or more pieces of space included in a current home is displayed. After detecting an operation of tapping the storeroom control 223 (namely, the first room) in the menu bar 222 by the user, the control device determines that the user indicates to switch bedroom space to storeroom space, where the two pieces of space are different. As shown in FIG. 22(c), after the control device switches the space, the interface 2203 is displayed, and the trigger area 224 corresponding to the storeroom and an electronic device identifier corresponding to the storeroom are displayed in the interface 2203. Optionally, if no corresponding electronic device is added to the storeroom, as shown in the interface 2203, no electronic device icon is displayed in the trigger area 224 and outside the trigger area 224, and the user is prompted that there is no device to be operated in the room temporarily.

For another example, the control device switches between a first device control scenario and a second device control scenario in response to the operation performed by the user on the preset control, where the first device control scenario is used to control the first device and the second device in the same room, and the second device control scenario is used to control devices in the whole house.

For example, as shown in FIG. 26(a), the control device displays the bedroom device interface 2601, and in the bedroom device interface 2601, control and scenario generation of the electronic device in the bedroom can be implemented (that is, the bedroom device interface 2601 is in the first device control scenario). Then, the control device detects, in the bedroom device interface 2601, an operation of tapping the whole-house/room switching control 262 (namely, the preset control) by the user, and the control device switches to display the whole-house device interface 2602 shown in FIG. 26(b). In the whole-house device interface 2602, control and scenario generation of the electronic device in the whole house can be implemented (that is, the whole-house device interface 2602 is in the second device control scenario).

In this way, the control device may switch, in response to an operation of the user, device control interfaces corresponding to different pieces of space, to meet a control requirement of the user for devices in the different pieces of space, and help the user learn a status of an electronic device in each piece of space, thereby improving user experience.

It should be noted that, in this embodiment of this application, an execution sequence of step S3004a, step S3004b, step S3004c, and step S3004d is not limited.

For example, in a process of displaying the room device control interface, the control device first sequentially performs step S3004a, step S3004b, and step S3004c. Then, in response to the space switching operation of the user, the control device switches to display the whole-house device control interface, and performs step S3004d.

For another example, in the process of displaying the whole-house device control interface, the control device first sequentially performs step S3004d, step S3004a, and step S3004b. Then, in response to the space switching operation of the user, the control device switches to display the room device control interface, and performs step S3004c.

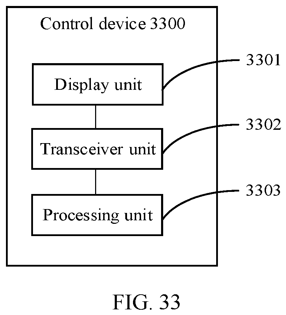

The foregoing describes in detail the scenario setting method provided in embodiments of this application with reference to FIG. 5 to FIG. 32. The following describes in detail the control device provided in embodiments of this application with reference to FIG. 33.

In a possible design, FIG. 33 is a diagram of a structure of a control device according to an embodiment of this application. As shown in FIG. 33, a control device 3300 may include a display unit 3301, a transceiver unit 3302, and a processing unit 3303. The control device 3300 may be configured to implement a function of the control device in the foregoing method embodiments. Optionally, the control device 3300 includes, for example, the control device 300 (like a smart home device control panel or a mobile phone) shown in FIG. 3, and the device that is in the first electronic device 100 and that is configured with a display function and has a corresponding processing capability.

Optionally, the display unit 3301 is configured to: support the control device 3300 in displaying interface content; and/or support the control device 3300 in performing S3001 in FIG. 30.

Optionally, the transceiver unit 3302 is configured to support the control device 3300 in performing S3002 in FIG. 30.

Optionally, the processing unit 3303 is configured to support the control device 3300 in performing S3003 and S3004 in FIG. 30.

The transceiver unit may include a receiving unit and a sending unit, may be implemented by a transceiver or a transceiver-related circuit component, and may be a transceiver or a transceiver module. Operations and/or functions of the units in the control device 3300 are separately used to implement corresponding procedures of the scenario setting method in the foregoing method embodiments. All related content of the steps in the foregoing method embodiments may be cited in function descriptions of corresponding function units. For brevity, details are not described herein again.

Optionally, the control device 3300 shown in FIG. 33 may further include a storage unit (not shown in FIG. 33), and the storage unit stores a program or instructions. When the display unit 3301, the transceiver unit 3302, and the processing unit 3303 execute the program or the instructions, the control device 3300 shown in FIG. 33 can perform the scenario setting method in the foregoing method embodiments.

For technical effects of the control device 3300 shown in FIG. 33, refer to technical effects of the scenario setting method in the foregoing method embodiments. Details are not described herein again.

In addition to a form of the control device 3300, the technical solutions provided in this application may alternatively be a function unit or a chip in the control device, or an apparatus that matches the control device.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this embodiment of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated chip (application-specific integrated chip, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the scenario setting method in the foregoing embodiments.

An embodiment of this application further provides a computer program product. When the computer program product runs on a computer, the computer is enabled to perform the foregoing related steps, to implement the scenario setting method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the scenario setting method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

Methods or algorithm steps described in combination with the content disclosed in embodiments of this application may be implemented by hardware, or may be implemented by a processor by executing software instructions. The software instruction may include a corresponding software module. The software module may be stored in a random access memory (random access memory, RAM), a flash memory, a read only memory (read only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the foregoing description of the implementation, a person skilled in the art may clearly understand that, for convenience and brevity of description, division of the foregoing function modules is merely used as an example for description. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. The described apparatus embodiments are merely examples. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in an electronic form, a mechanical form, or another form.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A scenario setting method, wherein the method is applied to a control device (13, 300, 3300), and the method comprises:
displaying a first interface, wherein the first interface comprises a trigger area (71, 81, 91, 101, 111, 131, 141, 151, 161, 171, 181, 191, 193, 201, 211, 224, 261, 263, 271, 281), and a first identifier displayed within the trigger area (71, 81, 91, 101, 111, 131, 141, 151, 161, 171, 181, 191, 193, 201, 211, 224, 261, 263, 271, 281) and a second identifier displayed outside the trigger area (71, 81, 91, 101, 111, 131, 141, 151, 161, 171, 181, 191, 193, 201, 211, 224, 261, 263, 271, 281), the first identifier indicates that a first device corresponding to the first identifier executes a first intention corresponding to the first device, and the second identifier indicates that a second device corresponding to the second identifier does not execute a second intention corresponding to the second device;
receiving a first operation of a user; and
generating a first scenario in response to the first operation, wherein the first scenario comprises indicating the first device to execute the first intention, and indicating the second device to cancel execution of the second intention.

2. The method according to claim 1, wherein the method further comprises:
in response to a second operation performed by the user on the second identifier, controlling the second identifier to move into the trigger area (71, 81, 91, 101, 111, 131, 141, 151, 161, 171, 181, 191, 193, 201, 211, 224, 261, 263, 271, 281) for display, and indicating the second device corresponding to the second identifier to execute the second intention corresponding to the second device.

3. The method according to claim 1 or 2, wherein the method further comprises:
in response to a third operation performed by the user on the first identifier, controlling the first identifier to move to the outside of the trigger area (71, 81, 91, 101, 111, 131, 141, 151, 161, 171, 181, 191, 193, 201, 211, 224, 261, 263, 271, 281) for display, and indicating the first device corresponding to the first identifier to cancel execution of the first intention corresponding to the first device.

4. The method according to any one of claims 1 to 3, wherein the generating a first scenario in response to the first operation comprises:
displaying a second interface in response to the first operation;
receiving a scenario editing operation of the user in the second interface; and
generating the first scenario in response to a fourth operation of the user.

5. The method according to claim 4, wherein the scenario editing operation comprises one or more of the following: setting a scenario effective time, setting that the first device in the scenario cancels execution of the first intention, and setting that the second device in the scenario executes the second intention.

6. The method according to any one of claims 1 to 5, wherein the first device and the second device are devices (11, 13, 100, 300) in a same room, and the method further comprises:
displaying a third interface in response to a fifth operation performed by the user on the first identifier;
receiving a sixth operation of the user in the third interface, wherein the sixth operation is used to adjust a parameter of a device (11-14, 100, 102, 300, 505, 506) corresponding to the first identifier; and
sending, based on an adjustment result of the parameter, a parameter adjustment indication to the device (11-14, 100, 102, 300, 505, 506) corresponding to the first identifier.

7. The method according to any one of claims 1 to 5, wherein the first device and the second device are devices (11, 13, 100, 300) corresponding to a same subsystem and/or different subsystems in a whole house, and the method further comprises:
displaying a fourth interface in response to a seventh operation performed by the user on the first identifier, wherein the fourth interface comprises identifiers of a plurality of devices (11, 13, 100, 300) corresponding to the first identifier, and the plurality of devices (11, 13, 100, 300) are devices (11, 13, 100, 300) corresponding to a same subsystem in a same room; and
in response to an eighth operation performed by the user on the identifiers of the plurality of devices (11, 13, 100, 300), sending an indication for canceling execution of the first intention to the plurality of devices (11, 13, 100, 300).

8. The method according to claim 6 or 7, wherein the method further comprises:
switching to display a fifth interface in response to a ninth operation of the user, wherein space corresponding to the fifth interface is the same as or different from space in which the first device is located or space in which the second device is located; or the space corresponding to the fifth interface comprises the space in which the first device is located and the space in which the second device is located; and the ninth operation is a slide operation in the trigger area (71, 81, 91, 101, 111, 131, 141, 151, 161, 171, 181, 191, 193, 201, 211, 224, 261, 263, 271, 281), or the ninth operation is an operation on a preset control.

9. The method according to claim 8, wherein the switching to display a fifth interface in response to a ninth operation of the user comprises:
displaying a room switching menu in response to the operation performed by the user on the preset control; and
switching to display the fifth interface in response to an operation of selecting a first room by the user in the room switching menu, wherein the fifth interface corresponds to the first room, the first room is different from the room in which the first device and/or the second device is located, and a device (11-14, 100, 102, 300, 505, 506) corresponding to a device identifier displayed in the fifth interface is a device (11-14, 100, 102, 300, 505, 506) in the first room.

10. The method according to claim 8, wherein the switching to display a fifth interface in response to a ninth operation of the user comprises:
switching between a first device control scenario and a second device control scenario in response to the operation performed by the user on the preset control, wherein the first device control scenario is used to control the first device and the second device in the same room, and the second device control scenario is used to control devices (13, 300, 3300) in the whole house.

11. The method according to any one of claims 1 to 10, wherein in the second identifier, identifiers corresponding to a same subsystem are displayed adjacent to each other.

12. The method according to any one of claims 1 to 11, wherein the first interface further comprises a subsystem index, and the method further comprises:
in response to a tenth operation performed by the user on a first subsystem in the subsystem index, displaying, in a first area outside the trigger area (71, 81, 91, 101, 111, 131, 141, 151, 161, 171, 181, 191, 193, 201, 211, 224, 261, 263, 271, 281), an identifier corresponding to the first subsystem in the second identifier, wherein a start location of the first area is a preset start location, and a quantity of display locations comprised in the first area is adapted to a quantity of identifiers corresponding to the first subsystem.

13. The method according to any one of claims 1 to 12, wherein a quantity of display locations that are used to display an identifier and that are outside the trigger area (71, 81, 91, 101, 111, 131, 141, 151, 161, 171, 181, 191, 193, 201, 211, 224, 261, 263, 271, 281) in the first interface is less than or equal to a first quantity, and when a quantity of second devices (11, 13, 100, 300) is greater than the first quantity, the displaying a first interface comprises:
displaying the first quantity of second identifiers in a first page outside the trigger area (71, 81, 91, 101, 111, 131, 141, 151, 161, 171, 181, 191, 193, 201, 211, 224, 261, 263, 271, 281) in the first interface; and
in response to an eleventh operation of the user, displaying a first remaining quantity of second identifiers in a second page outside the trigger area (71, 81, 91, 101, 111, 131, 141, 151, 161, 171, 181, 191, 193, 201, 211, 224, 261, 263, 271, 281) in the first interface, wherein the first remaining quantity is less than or equal to the first quantity, and the quantity of second devices (11, 13, 100, 300) is a sum of the first quantity and the first remaining quantity.

14. The method according to any one of claims 1 to 13, wherein a quantity of display locations that are used to display an identifier and that are in the trigger area (71, 81, 91, 101, 111, 131, 141, 151, 161, 171, 181, 191, 193, 201, 211, 224, 261, 263, 271, 281) in the first interface is less than or equal to a second quantity, and when a quantity of first devices (11, 13, 100, 300) is greater than the second quantity, the displaying a first interface comprises:
displaying the second quantity of first identifiers in a third page in the trigger area (71, 81, 91, 101, 111, 131, 141, 151, 161, 171, 181, 191, 193, 201, 211, 224, 261, 263, 271, 281) in the first interface; and
in response to a twelfth operation of the user, displaying a second remaining quantity of first identifiers in a fourth page in the trigger area (71, 81, 91, 101, 111, 131, 141, 151, 161, 171, 181, 191, 193, 201, 211, 224, 261, 263, 271, 281) in the first interface, wherein the second remaining quantity is less than or equal to the second quantity, and the quantity of first devices (11, 13, 100, 300) is a sum of the second quantity and the second remaining quantity.

15. An electronic device (100), comprising a processor (110, 501, 507), a memory (503), and a display, wherein the memory (503) and the display are coupled to the processor (110, 501, 507), the memory (503) is configured to store computer program code, the computer program code comprises computer instructions, and when the processor (110, 501, 507) reads the computer instructions from the memory (503), the electronic device (100) is enabled to perform the method according to any one of claims 1 to 14.

## Patentansprüche

1. Szenarioeinstellverfahren, wobei das Verfahren auf eine Steuervorrichtung (13, 300, 3300) angewendet wird und das Verfahren Folgendes umfasst:
Anzeigen einer ersten Schnittstelle, wobei die erste Schnittstelle einen Triggerbereich (71, 81, 91, 101, 111, 131, 141, 151, 161, 171, 181, 191, 193, 201, 211, 224, 261, 263, 271, 281) umfasst, und eine erste Kennung, die innerhalb des Triggerbereichs (71, 81, 91, 101, 111, 131, 141, 151, 161, 171, 181, 191, 193, 201, 211, 224, 261, 263, 271, 281) angezeigt wird, und eine zweite Kennung, die außerhalb des Triggerbereichs (71, 81, 91, 101, 111, 131, 141, 151, 161, 171, 181, 191, 193, 201, 211, 224, 261, 263, 271, 281) angezeigt wird, die erste Kennung anzeigt, dass eine erste Vorrichtung entsprechend der ersten Kennung eine erste Absicht entsprechend der ersten Vorrichtung ausführt, und die zweite Kennung anzeigt, dass eine zweite Vorrichtung entsprechend der zweiten Kennung eine zweite Absicht entsprechend der zweiten Vorrichtung nicht ausführt;
Empfangen einer ersten Operation eines Benutzers; und
Erzeugen eines ersten Szenarios als Reaktion auf die erste Operation, wobei das erste Szenario das Anweisen der ersten Vorrichtung, die erste Absicht auszuführen, und das Anweisen der zweiten Vorrichtung, die Ausführung der zweiten Absicht abzubrechen, umfasst.

2. Verfahren nach Anspruch 1, wobei das Verfahren ferner Folgendes umfasst:
als Reaktion auf eine zweite Operation, die durch den Benutzer an der zweiten Kennung durchgeführt wird, Steuern der zweiten Kennung, um sich zur Anzeige in den Triggerbereich (71, 81, 91, 101, 111, 131, 141, 151, 161, 171, 181, 191, 193, 201, 211, 224, 261, 263, 271, 281) zu bewegen, und Anweisen der zweiten Vorrichtung entsprechend der zweiten Kennung, die zweite Absicht entsprechend der zweiten Vorrichtung auszuführen.

3. Verfahren nach Anspruch 1 oder 2, wobei das Verfahren ferner Folgendes umfasst:
als Reaktion auf eine dritte Operation, die durch den Benutzer an der ersten Kennung durchgeführt wird, Steuern der ersten Kennung, um sich zur Anzeige außerhalb des Triggerbereichs (71, 81, 91, 101, 111, 131, 141, 151, 161, 171, 181, 191, 193, 201, 211, 224, 261, 263, 271, 281) zu bewegen, und Anweisen der ersten Vorrichtung entsprechend der ersten Kennung, die Ausführung der ersten Absicht entsprechend der ersten Vorrichtung abzubrechen.

4. Verfahren nach einem der Ansprüche 1 bis 3, wobei das Erzeugen eines ersten Szenarios als Reaktion auf die erste Operation Folgendes umfasst:
Anzeigen einer zweiten Schnittstelle als Reaktion auf die erste Operation;
Empfangen einer Szenariobearbeitungsoperation des Benutzers in der zweiten Schnittstelle; und
Erzeugen des ersten Szenarios als Reaktion auf eine vierte Operation des Benutzers.

5. Verfahren nach Anspruch 4, wobei die Szenariobearbeitungsoperation einen oder mehrere der folgenden Schritte umfasst: Festlegen einer effektiven Zeit des Szenarios, Festlegen, dass die erste Vorrichtung in dem Szenario die Ausführung der ersten Absicht abbricht, und Festlegen, dass die zweite Vorrichtung in dem Szenario die zweite Absicht ausführt.

6. Verfahren nach einem der Ansprüche 1 bis 5, wobei die erste Vorrichtung und die zweite Vorrichtung Vorrichtungen (11, 13, 100, 300) in demselben Zimmer sind, und das Verfahren ferner Folgendes umfasst:
Anzeigen einer dritten Schnittstelle als Reaktion auf eine fünfte Operation, die durch den Benutzer an der ersten Kennung durchgeführt wird;
Empfangen einer sechsten Operation des Benutzers in der dritten Schnittstelle, wobei die sechste Operation verwendet wird, um einen Parameter einer Vorrichtung (11-14, 100, 102, 300, 505, 506) entsprechend der ersten Kennung einzustellen; und
Senden einer Parametereinstellungsanzeige an die Vorrichtung (11-14, 100, 102, 300, 505, 506) entsprechend der ersten Kennung basierend auf einem Einstellungsergebnis des Parameters.

7. Verfahren nach einem der Ansprüche 1 bis 5, wobei die erste Vorrichtung und die zweite Vorrichtung Vorrichtungen (11, 13, 100, 300) entsprechend demselben Teilsystem und/oder unterschiedlichen Teilsystemen in einem ganzen Haus sind, und das Verfahren ferner Folgendes umfasst:
Anzeigen einer vierten Schnittstelle als Reaktion auf eine siebte Operation, die durch den Benutzer an der ersten Kennung durchgeführt wird, wobei die vierte Schnittstelle Kennungen einer Vielzahl von Vorrichtungen (11, 13, 100, 300) entsprechend der ersten Kennung umfasst, und die Vielzahl von Vorrichtungen (11, 13, 100, 300) Vorrichtungen (11, 13, 100, 300) entsprechend demselben Teilsystem in demselben Zimmer sind; und
als Reaktion auf eine achte Operation, die durch den Benutzer an den Kennungen der Vielzahl von Vorrichtungen (11, 13, 100, 300) durchgeführt wird, Senden einer Anzeige zum Abbrechen der Ausführung der ersten Absicht an die Vielzahl von Vorrichtungen (11, 13, 100, 300).

8. Verfahren nach Anspruch 6 oder 7, wobei das Verfahren ferner Folgendes umfasst:
Umschalten zum Anzeigen einer fünften Schnittstelle als Reaktion auf eine neunte Operation des Benutzers, wobei ein Raum entsprechend der fünften Schnittstelle derselbe wie oder ein anderer als ein Raum ist, in welchem sich die erste Vorrichtung befindet, oder ein Raum ist, in welchem sich die zweite Vorrichtung befindet; oder der Raum entsprechend der fünften Schnittstelle den Raum, in welchem sich die erste Vorrichtung befindet, und den Raum, in welchem sich die zweite Vorrichtung befindet, umfasst; und die neunte Operation eine Schiebeoperation in dem Triggerbereich (71, 81, 91, 101, 111, 131, 141, 151, 161, 171, 181, 191, 193, 201, 211, 224, 261, 263, 271, 281) ist, oder die neunte Operation eine Operation an einer voreingestellten Steuerung ist.

9. Verfahren nach Anspruch 8, wobei das Umschalten zum Anzeigen einer fünften Schnittstelle als Reaktion auf eine neunte Operation des Benutzers Folgendes umfasst:
Anzeigen eines Zimmerumschaltmenüs als Reaktion auf die durch den Benutzer an der voreingestellten Steuerung durchgeführte Operation; und
Umschalten zum Anzeigen der fünften Schnittstelle als Reaktion auf eine Operation zum Auswählen eines ersten Zimmers durch den Benutzer in dem Zimmerumschaltmenü, wobei die fünfte Schnittstelle dem ersten Zimmer entspricht, sich das erste Zimmer von dem Zimmer unterscheidet, in welchem sich die erste Vorrichtung und/oder die zweite Vorrichtung befindet, und eine Vorrichtung (11-14, 100, 102, 300, 505, 506) entsprechend einer Vorrichtungskennung, die in der fünften Schnittstelle angezeigt wird, eine Vorrichtung (11-14, 100, 102, 300, 505, 506) in dem ersten Zimmer ist.

10. Verfahren nach Anspruch 8, wobei das Umschalten zum Anzeigen einer fünften Schnittstelle als Reaktion auf eine neunte Operation des Benutzers Folgendes umfasst:
Umschalten zwischen einem ersten Vorrichtungssteuerszenario und einem zweiten Vorrichtungssteuerszenario als Reaktion auf die Operation, die durch den Benutzer an der voreingestellten Steuerung durchgeführt wird, wobei das erste Vorrichtungssteuerszenario verwendet wird, um die erste Vorrichtung und die zweite Vorrichtung in demselben Zimmer zu steuern, und das zweite Vorrichtungssteuerszenario verwendet wird, um Vorrichtungen (13, 300, 3300) in dem ganzen Haus zu steuern.

11. Verfahren nach einem der Ansprüche 1 bis 10, wobei Kennungen entsprechend demselben Teilsystem in der zweiten Kennung benachbart aneinander angezeigt werden.

12. Verfahren nach einem der Ansprüche 1 bis 11, wobei die Schnittstelle ferner einen Teilsystemindex umfasst, und das Verfahren ferner Folgendes umfasst:
als Reaktion auf eine zehnte Operation, die durch den Benutzer an einem ersten Teilsystem in dem Teilsystemindex durchgeführt wird, Anzeigen einer Kennung entsprechend dem ersten Teilsystem in der zweiten Kennung in einem ersten Bereich außerhalb des Triggerbereichs (71, 81, 91, 101, 111, 131, 141, 151, 161, 171, 181, 191, 193, 201, 211, 224, 261, 263, 271, 281), wobei ein Startort des ersten Bereichs ein voreingestellter Startort ist, und eine Menge von Anzeigeorten, die in dem ersten Bereich umfasst sind, an eine Menge von Kennungen entsprechend dem ersten Teilsystem angepasst ist.

13. Verfahren nach einem der Ansprüche 1 bis 12, wobei eine Menge von Anzeigeorten, die verwendet werden, um eine Kennung anzuzeigen, und die außerhalb des Triggerbereichs (71, 81, 91, 101, 111, 131, 141, 151, 161, 171, 181, 191, 193, 201, 211, 224, 261, 263, 271, 281) in der ersten Schnittstelle liegen, kleiner oder gleich einer ersten Menge ist, und wenn eine Menge von zweiten Vorrichtungen (11, 13, 100, 300) größer als die erste Menge ist, das Anzeigen einer ersten Schnittstelle Folgendes umfasst:
Anzeigen der ersten Menge von zweiten Kennungen auf einer ersten Seite außerhalb des Triggerbereichs (71, 81, 91, 101, 111, 131, 141, 151, 161, 171, 181, 191, 193, 201, 211, 224, 261, 263, 271, 281) in der ersten Schnittstelle; und
als Reaktion auf eine elfte Operation des Benutzers, Anzeigen einer ersten verbleibenden Menge von zweiten Kennungen auf einer zweiten Seite außerhalb des Triggerbereichs (71, 81, 91, 101, 111, 131, 141, 151, 161, 171, 181, 191, 193, 201, 211, 224, 261, 263, 271, 281) in der ersten Schnittstelle, wobei die erste verbleibende Menge kleiner oder gleich der ersten Menge ist und die Menge der zweiten Vorrichtungen (11, 13, 100, 300) eine Summe aus der ersten Menge und der ersten verbleibenden Menge ist.

14. Verfahren nach einem der Ansprüche 1 bis 13, wobei eine Menge von Anzeigeorten, die verwendet werden, um eine Kennung anzuzeigen, und die in dem Triggerbereich (71, 81, 91, 101, 111, 131, 141, 151, 161, 171, 181, 191, 193, 201, 211, 224, 261, 263, 271, 281) in der ersten Schnittstelle liegen, kleiner oder gleich einer zweiten Menge ist, und wenn eine Menge von ersten Vorrichtungen (11, 13, 100, 300) größer als die zweite Menge ist, das Anzeigen einer ersten Schnittstelle Folgendes umfasst:
Anzeigen der zweiten Menge von ersten Kennungen auf einer dritten Seite in dem Triggerbereich (71, 81, 91, 101, 111, 131, 141, 151, 161, 171, 181, 191, 193, 201, 211, 224, 261, 263, 271, 281) in der ersten Schnittstelle; und
als Reaktion auf eine zwölfte Operation des Benutzers, Anzeigen einer zweiten verbleibenden Menge von ersten Kennungen auf einer vierten Seite in dem Triggerbereich (71, 81, 91, 101, 111, 131, 141, 151, 161, 171, 181, 191, 193, 201, 211, 224, 261, 263, 271, 281) in der ersten Schnittstelle, wobei die zweite verbleibende Menge kleiner oder gleich der zweiten Menge ist und die Menge der ersten Vorrichtungen (11, 13, 100, 300) eine Summe aus der zweiten Menge und der zweiten verbleibenden Menge ist.

15. Elektronische Vorrichtung (100), umfassend einen Prozessor (110, 501, 507), einen Speicher (503) und eine Anzeige, wobei der Speicher (503) und die Anzeige mit dem Prozessor (110, 501, 507) gekoppelt sind, der Speicher (503) dazu konfiguriert ist, einen Computerprogrammcode zu speichern, der Computerprogrammcode Computeranweisungen umfasst und die elektronische Vorrichtung (100) in die Lage versetzt wird, das Verfahren nach einem der Ansprüche 1 bis 14 durchzuführen, wenn der Prozessor (110, 501, 507) die Computeranweisungen aus dem Speicher (503) liest.

## Revendications

1. Procédé d'établissement de scénario, dans lequel le procédé est appliqué à un dispositif de commande (13, 300, 3300), et le procédé comprend :
l'affichage d'une première interface, dans lequel la première interface comprend une zone de déclenchement (71, 81, 91, 101, 111, 131, 141, 151, 161, 171, 181, 191, 193, 201, 211, 224, 261, 263, 271, 281), et un premier identifiant affiché dans la zone de déclenchement (71, 81, 91, 101, 111, 131, 141, 151, 161, 171, 181, 191, 193, 201, 211, 224, 261, 263, 271, 281) et un second identifiant affiché en dehors de la zone de déclenchement (71, 81, 91, 101, 111, 131, 141, 151, 161, 171, 181, 191, 193, 201, 211, 224, 261, 263, 271, 281), le premier identifiant indique qu'un premier dispositif correspondant au premier identifiant exécute une première intention correspondant au premier dispositif, et le second identifiant indique qu'un second dispositif correspondant au second identifiant n'exécute pas une seconde intention correspondant au second dispositif ;
la réception d'une première opération d'un utilisateur ; et
la génération d'un premier scénario en réponse à la première opération, dans lequel le premier scénario comprend le fait d'indiquer au premier dispositif d'exécuter la première intention et d'indiquer au second dispositif d'annuler l'exécution de la seconde intention.

2. Procédé selon la revendication 1, dans lequel le procédé comprend en outre :
en réponse à une deuxième opération réalisée par l'utilisateur sur le second identifiant, la commande du second identifiant de manière à ce qu'il se déplace dans la zone de déclenchement (71, 81, 91, 101, 111, 131, 141, 151, 161, 171, 181, 191, 193, 201, 211, 224, 261, 263, 271, 281) pour l'affichage, et l'indication au second dispositif correspondant au second identifiant d'exécuter la seconde intention correspondant au second dispositif.

3. Procédé selon la revendication 1 ou 2, dans lequel le procédé comprend en outre :
en réponse à une troisième opération réalisée par l'utilisateur sur le premier identifiant, la commande du premier identifiant de manière à ce qu'il se déplace en dehors de la zone de déclenchement (71, 81, 91, 101, 111, 131, 141, 151, 161, 171, 181, 191, 193, 201, 211, 224, 261, 263, 271, 281) pour l'affichage, et l'indication au premier dispositif correspondant au premier identifiant d'annuler l'exécution de la première intention correspondant au premier dispositif.

4. Procédé selon l'une quelconque des revendications 1 à 3, dans lequel la génération d'un premier scénario en réponse à la première opération comprend :
l'affichage d'une deuxième interface en réponse à la première opération ;
la réception d'une opération d'édition de scénario de l'utilisateur dans la deuxième interface ; et
la génération du premier scénario en réponse à une quatrième opération de l'utilisateur.

5. Procédé selon la revendication 4, dans lequel l'opération d'édition de scénario comprend l'une ou plusieurs des opérations suivantes : la définition d'une durée d'effet de scénario, le fait de définir que le premier dispositif du scénario annule l'exécution de la première intention et le fait de définir que le second dispositif du scénario exécute la seconde intention.

6. Procédé selon l'une quelconque des revendications 1 à 5, dans lequel le premier dispositif et le second dispositif sont des dispositifs (11, 13, 100, 300) situés dans une même pièce, et le procédé comprend en outre :
l'affichage d'une troisième interface en réponse à une cinquième opération réalisée par l'utilisateur sur le premier identifiant ;
la réception d'une sixième opération de l'utilisateur dans la troisième interface, dans lequel la sixième opération est utilisée pour ajuster un paramètre d'un dispositif (11-14, 100, 102, 300, 505, 506) correspondant au premier identifiant ; et
l'envoi, sur la base d'un résultat d'ajustement du paramètre, d'une indication d'ajustement de paramètre au dispositif (11-14, 100, 102, 300, 505, 506) correspondant au premier identifiant.

7. Procédé selon l'une quelconque des revendications 1 à 5, dans lequel le premier dispositif et le second dispositif sont des dispositifs (11, 13, 100, 300) correspondant à un même sous-système et/ou à des sous-systèmes différents dans une maison entière, et le procédé comprend en outre :
l'affichage d'une quatrième interface en réponse à une septième opération réalisée par l'utilisateur sur le premier identifiant, dans lequel la quatrième interface comprend les identifiants d'une pluralité de dispositifs (11, 13, 100, 300) correspondant au premier identifiant, et la pluralité de dispositifs (11, 13, 100, 300) sont des dispositifs (11, 13, 100, 300) correspondant à un même sous-système dans une même pièce ; et
en réponse à une huitième opération réalisée par l'utilisateur sur les identifiants de la pluralité de dispositifs (11, 13, 100, 300), l'envoi d'une indication pour annuler l'exécution de la première intention à la pluralité de dispositifs (11, 13, 100, 300).

8. Procédé selon la revendication 6 ou 7, dans lequel le procédé comprend en outre :
le passage à l'affichage d'une cinquième interface en réponse à une neuvième opération de l'utilisateur, dans lequel l'espace correspondant à la cinquième interface est identique ou différent de l'espace dans lequel se trouve le premier dispositif ou de l'espace dans lequel se trouve le second dispositif ; ou l'espace correspondant à la cinquième interface comprend l'espace dans lequel se trouve le premier dispositif et l'espace dans lequel se trouve le second dispositif ; et la neuvième opération est une opération de glissement dans la zone de déclenchement (71, 81, 91, 101, 111, 131, 141, 151, 161, 171, 181, 191, 193, 201, 211, 224, 261, 263, 271, 281), ou la neuvième opération est une opération sur une commande prédéfinie.

9. Procédé selon la revendication 8, dans lequel le passage à l'affichage d'une cinquième interface en réponse à une neuvième opération de l'utilisateur comprend :
l'affichage d'un menu de changement de pièce en réponse à l'opération réalisée par l'utilisateur sur la commande prédéfinie ; et
le passage à l'affichage de la cinquième interface en réponse à une opération de sélection d'une première pièce par l'utilisateur dans le menu de changement de pièce, dans lequel la cinquième interface correspond à la première pièce, la première pièce est différente de la pièce dans laquelle se trouve le premier dispositif et/ou le second dispositif, et un dispositif (11-14, 100, 102, 300, 505, 506) correspondant à un identifiant de dispositif affiché dans la cinquième interface est un dispositif (11-14, 100, 102, 300, 505, 506) dans la première pièce.

10. Procédé selon la revendication 8, dans lequel le passage à l'affichage d'une cinquième interface en réponse à une neuvième opération de l'utilisateur comprend :
le passage entre un premier scénario de commande de dispositif et un second scénario de commande de dispositif en réponse à l'opération réalisée par l'utilisateur sur la commande prédéfinie, dans lequel le premier scénario de commande de dispositif est utilisé pour commander le premier dispositif et le second dispositif dans la même pièce, et le second scénario de commande de dispositif est utilisé pour commander les dispositifs (13, 300, 3300) dans la maison entière.

11. Procédé selon l'une quelconque des revendications 1 à 10, dans lequel, dans le second identifiant, les identifiants correspondant à un même sous-système sont affichés côte à côte.

12. Procédé selon l'une quelconque des revendications 1 à 11, dans lequel la première interface comprend en outre un index de sous-systèmes, et le procédé comprend en outre :
en réponse à une dixième opération réalisée par l'utilisateur sur un premier sous-système dans l'index de sous-systèmes, l'affichage, dans une première zone en dehors de la zone de déclenchement (71, 81, 91, 101, 111, 131, 141, 151, 161, 171, 181, 191, 193, 201, 211, 224, 261, 263, 271, 281), d'un identifiant correspondant au premier sous-système dans le second identifiant, dans lequel un emplacement de départ de la première zone est un emplacement de départ prédéfini, et une quantité d'emplacements d'affichage compris dans la première zone est adaptée à une quantité d'identifiants correspondant au premier sous-système.

13. Procédé selon l'une quelconque des revendications 1 à 12, dans lequel une quantité d'emplacements d'affichage utilisés pour afficher un identifiant et situés en dehors de la zone de déclenchement (71, 81, 91, 101, 111, 131, 141, 151, 161, 171, 181, 191, 193, 201, 211, 224, 261, 263, 271, 281) dans la première interface est inférieure ou égale à une première quantité, et lorsqu'une quantité de seconds dispositifs (11, 13, 100, 300) est supérieure à la première quantité, l'affichage d'une première interface comprend :
l'affichage de la première quantité de seconds identifiants sur une première page en dehors de la zone de déclenchement (71, 81, 91, 101, 111, 131, 141, 151, 161, 171, 181, 191, 193, 201, 211, 224, 261, 263, 271, 281) dans la première interface ; et
en réponse à une onzième opération de l'utilisateur, l'affichage d'une première quantité restante de seconds identifiants sur une deuxième page en dehors de la zone de déclenchement (71, 81, 91, 101, 111, 131, 141, 151, 161, 171, 181, 191, 193, 201, 211, 224, 261, 263, 271, 281) dans la première interface, dans lequel la première quantité restante est inférieure ou égale à la première quantité, et la quantité de seconds dispositifs (11, 13, 100, 300) est une somme de la première quantité et de la première quantité restante.

14. Procédé selon l'une quelconque des revendications 1 à 13, dans lequel une quantité d'emplacements d'affichage utilisés pour afficher un identifiant et situés dans la zone de déclenchement (71, 81, 91, 101, 111, 131, 141, 151, 161, 171, 181, 191, 193, 201, 211, 224, 261, 263, 271, 281) dans la première interface est inférieure ou égale à une seconde quantité, et lorsqu'une quantité de premiers dispositifs (11, 13, 100, 300) est supérieure à la seconde quantité, l'affichage d'une première interface comprend :
l'affichage de la seconde quantité de premiers identifiants sur une troisième page dans la zone de déclenchement (71, 81, 91, 101, 111, 131, 141, 151, 161, 171, 181, 191, 193, 201, 211, 224, 261, 263, 271, 281) dans la première interface ; et
en réponse à une douzième opération de l'utilisateur, l'affichage d'une seconde quantité restante de premiers identifiants sur une quatrième page dans la zone de déclenchement (71, 81, 91, 101, 111, 131, 141, 151, 161, 171, 181, 191, 193, 201, 211, 224, 261, 263, 271, 281) dans la première interface, dans lequel la seconde quantité restante est inférieure ou égale à la seconde quantité, et la quantité de premiers dispositifs (11, 13, 100, 300) est une somme de la seconde quantité et de la seconde quantité restante.

15. Dispositif électronique (100) comprenant un processeur (110, 501, 507), une mémoire (503), et un écran, dans lequel la mémoire (503) et l'écran sont couplés au processeur (110, 501, 507), la mémoire (503) est configurée pour stocker un code de programme informatique, le code de programme informatique comprend des instructions informatiques, et lorsque le processeur (110, 501, 507) lit les instructions informatiques à partir de la mémoire (503), le dispositif électronique (100) est en mesure de réaliser le procédé selon l'une quelconque des revendications 1 à 14.
